# EUROPEAN PATENT APPLICATION

(11) **EP 1 734 467 A1**
(43) Date of publication of application: **20.12.2006**
(21) Application number: 05727057.1
(22) Date of filing: 23.03.2005
(51) Int. Cl.: G06Q 10/00

(54) **POINT CALCULATING DEVICE AND POINT ASSIGNING SYSTEM**

(30) Priority: 31.03.2004 JP 2004107777
(71) Applicant: MATSUSHITA ELECTRIC INDUSTRIAL CO., LTD., Osaka 571-8501 (JP)
(72) Inventor: YOKOTA, Kaoru Matsushita El. Ind. Co., Ltd., Chuo-ku, Osaka-shi, Osaka 540-6319 (JP); OHMORI, Motoji Matsushita El. Ind. Co., Ltd., Chuo-ku, Osaka-shi, Osaka 540-6319 (JP); SASO, Atsushi Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/005200
(87) International publication number: WO 2005/098697

(57) **Abstract**

The present invention provides a point calculating apparatus capable of directing users to a particular transport mode among a plurality of transport modes.

The point calculating apparatus collects congestion degree of each of cars from a plurality of in-car apparatuses, and collects congestion degree of each of trains from a plurality of collecting apparatuses. The point calculating apparatus calculates, based on the congestion degree of each train and each car, a train point and a car point such that the point increases as the congestion degree decreases. Also, the point calculating apparatus receives, from a terminal apparatus, usage information including a car code identifying a car used by a user and a usage time. If the usage information is valid, the point calculating apparatus transmits the train point and the car point corresponding to the train and the car used by the user, to the portable terminal apparatus.

## Description

### Technical Field

The present invention relates to a technique to direct users to a less congested facility to efficiently operate facilities.

### Background Art

Regarding a plurality of facilities provided to users, the congestion degrees of the facilities are possibly different from each other according to operating conditions, locations, popularities, times of day, and so on.

For instance, regarding trains operated by a railroad company, the congestion degrees of the trains can be different from each other according to the location of the starting station, the operational hour, the connection, and so on. Also, regarding each train, the congestion degrees of cars of the train can be different from each other according to the location of the staircase in a stop, the location of the passage in a transfer station, and so on.

The Patent Document discloses a technique relating to a seat usage managing apparatus which can keep track of the availability of non-reserved seats in a train arriving at a station. Patent Document 1: Japanese Laid-open Patent Application Publication No.2003-6750

### Disclosure of the Invention

### PROBLEM TO BE SOLVED

However, as described above, if passengers gather together in a particular train or a particular car of a train, it takes a long time to load and unload the passengers. This might delay the succeeding trains and disrupt the operation of the trains. Meanwhile, there also is a case where passengers are desired to be gathered in a particular train or a particular car of a train. There is a demand for directing users to a particular facility among a plurality of facilities, to efficiently operate the facilities.

The object of the present invention is to provide a point calculating apparatus, a point allocating system, a measuring apparatus, a distributing apparatus, a terminal apparatus, a point calculating method, a point calculating program and a recording medium for directing users to a particular transport mode among a plurality of transport modes.

### MEANS FOR SOLVING THE PROBLEM

To achieve the above-described object, the present invention provides a point calculating apparatus that calculates a point for each of a plurality of transport modes for the same destination in accordance with a congestion degree of the transport modes, the point calculating apparatus comprising: a congestion degree obtaining unit operable to obtain the congestion degree; a calculating unit operable to calculate a point for each of the transport modes in accordance with the congestion degree; and a point allocating unit operable to allocate a point for a transport mode among the plurality of transport modes to a user of the transport mode.

### Advantageous Effect of the Invention

With the stated structure, the point calculating apparatus is capable of calculating a point corresponding to the congestion degree and thereby direct the user to a particular transport mode. For instance, the user would be directed to use a car whose point is high, to obtain a high point out of the points calculated by the point calculating apparatus for transport modes. In other words, the point calculating apparatus can direct the user to a particular transport mode.

Here, the congestion degree obtaining unit may obtain the congestion degree for each of the transport modes, and the calculating unit may calculate, using each congestion degree, the point for each of the transport modes such that the point decreases as the congestion degree increases.

With the stated structure, the point calculating apparatus can calculate the point for each of the transport modes such that the point decreases as the congestion degree increases. Accordingly, the user is directed to a transport mode whose point is high, to obtain a high point. This means that the point calculating apparatus can ease the congestion.

Here, the calculating unit may calculate the point for each of the transport modes such that a total of the point for each of the transport modes is a constant value.

With the stated structure, the point calculating apparatus can calculate the point for each transport mode in such a manner that the total of the points to be allocated to the transport modes becomes a constant value. Therefore, the total point as the constant value is divided among the users to each of whom the point is to be allocated. This means that the total of the calculated points does not change, and the point calculating apparatus can fairly allocate the point to users.

Here, the point allocating unit may include: a calculated point storing subunit that includes an area for storing each calculated point in association with transport mode information which indicates a transport mode corresponding to the calculated point; a calculated point writing subunit operable to write the calculated point in the calculated point storing subunit in association with the transport mode information; a usage information receiving subunit operable to receive, from a portable terminal apparatus belonging to the user, usage information indicating the transport mode that the user has used; a determining subunit operable to determine whether the received usage information is valid; a point reading subunit operable, if the determining subunit determines affirmatively, to read out, from the calculated point storing subunit, the point stored in association with the transport mode information that indicates the transport mode indicated by the received usage information; and a point transmitting subunit operable to transmit the point read out by the point reading subunit to the portable terminal apparatus to allocate the point to the user.

With the stated structure, the point calculating apparatus receives the usage information from the portable terminal apparatus, and if judging that the received usage information is valid, transmits, among the points calculated and stored, the point corresponding to the transport mode indicated by the usage information to the portable terminal apparatus. Accordingly, the point calculating apparatus can allocate the point, which corresponds to the facility used by the user, to the user.

Here, the usage information receiving subunit may receive the usage information that includes an identifier that identifies the transport mode that the user has used and a signature data that is generated by performing a digital signature algorithm on the identifier using a private key, the determining subunit may store therein a public key corresponding to the private key, performs a signature verification using the public key, the received signature data and the identifier, and determines that the received usage information is valid if a result of the signature verification is in the affirmative, and the point reading subunit may read out, from the calculated point storing subunit, the point stored in association with the transport mode information that indicates the transport mode indicated by the identifier included in the received usage information.

With the stated structure, the point calculating apparatus can judge whether the received usage information is valid by performing the signature verification.

Here, the calculating unit may include; a total point storing subunit that prestores the total of the point, which is the constant value, a passenger number obtaining subunit operable to obtain, from each of the transport modes, the number of passengers to whom the point is to be allocated, a first calculating subunit operable to calculate a point allocation rate for each of the transport modes such that the point decreases as the congestion degree increases, and a second calculating subunit operable to calculate a conversion point that is converted from a point allocation unit rate based on the point allocation rate, the total of the point and the obtained number of passengers, and calculates, for each of the transport modes, the point to be allocated, by multiplying the conversion point by the point allocation rate.

With the stated structure, the point calculating apparatus can calculate the allocation rate such that the point decreases as the congestion degree increases, and calculate the point to be allocated to the user for each transport mode, based on the calculated allocation rate, the total point and the number of users to whom the points are allocated.

Here, the point calculating apparatus may further comprise a rate transmitting unit operable to transmit the point allocation rate calculated by the first calculating unit to a notifying apparatus that notifies the user of the point allocation rate.

With the stated structure, the point calculating apparatus can transmit each allocation rate to the notifying apparatus. Accordingly, the user can informed the allocation rate by the notifying apparatus, and chose a transport mode with a high allocation rate, which is a transport mode with a low congestion degree.

Here, the point calculating unit may include: a total point storing subunit that stores the total of the point for each of the transport modes; a first calculating subunit operable to calculate a point allocation rate for each of the transport modes such that the point to be allocated increases as the congestion degree decreases; and a second calculating subunit operable to calculate the point to be allocated from the total point to each of the transport modes based on the point allocation rate for each of the transport modes.

With the stated structure, the point calculating apparatus can calculate the allocation rate such that the point decreases as the congestion degree increases, and calculate the point to be allocated to the user for each transport mode, based on the calculated allocation rate, the total point and the number of users to whom the points are allocated.

Here, the point allocating unit may allocate the point to the user by transmitting at least a point corresponding to a transport mode equipped with a distributing apparatus among the plurality of the transport modes, the distributing apparatus being set up in each of the transport modes and distributing, to the portable terminal apparatus that belongs to the user of each of the transport modes, point information that indicates the point calculated for each of the transport modes.

With the stated structure, the point calculating apparatus can transmit the calculated point to each distributing apparatus. For instance, the distributing apparatus can allocate the point to the user who uses the transport mode which is equipped with the distributing apparatus.

Here, the point allocating unit may include: a rate information storing subunit operable to store allocation rate information including the point calculated for each of the transport modes; a request information receiving unit operable to receive, from the portable terminal apparatus, request information requesting for the allocation rate information; and a rate information transmitting subunit operable, upon receiving the request information, to transmit the allocation rate information to the portable terminal apparatus to allocate the point to the user.

With the stated structure, upon receiving the request information from the portable terminal apparatus, the point calculating apparatus can transmit each calculated point as the rate information to the portable terminal apparatus.

Here, the point allocating unit may include: an allocating point storing subunit; a calculated point storing subunit that includes an area for storing each point calculated by the calculating unit; a calculated point writing subunit operable to write the point calculated by the calculating unit in the calculated point storing subunit; a usage information receiving subunit operable to receive, from a portable terminal apparatus belonging to the user, usage information that indicates a transport mode that the user has used among the plurality of the transport modes, and a terminal identifier that identifies the portable terminal apparatus; a determining subunit operable to determine whether the received usage information is valid; a point reading subunit operable, if the determining subunit determines affirmatively, to read out, from the calculated point storing subunit, the point corresponding to the transport mode indicated by the received usage information; and an allocating point writing subunit operable to write the point read out by the point reading subunit in the allocating point storing subunit in association with the received terminal identifier, to allocate the point to the user.

With the stated structure, upon receiving the usage information and the terminal identifier from the portable terminal apparatus and judging that the received usage information is valid, the point calculating apparatus can write the calculated point, corresponding to the transport mode indicated by the usage information, in the allocating point storing unit. Accordingly, the point calculating apparatus can collectively manage the point for each terminal apparatus. This means that the user is not required to manage the point using a recording medium and so on for recording the allocated point. Therefore, the point is in no danger of being used by a third party due to a loss or stolen recording medium.

Here, each of the plurality of the transport modes may be a car included in a train, and the calculating unit may calculate the point for each car.

With the stated structure, the point calculating apparatus can calculate the point for each car included in a train. Accordingly, to obtain a high point, the user will use a car with a high point, which is a car with a low congestion degree.

Here, the plurality of the transport modes may be trains each including a plurality of cars, and the calculating unit may calculate the point for each train.

With the stated structure, the point calculating apparatus can calculate the point for each of a plurality of trains. Accordingly, to obtain a high point, the user will use a train with a high pint, which is a train with a low congestion degree.

Here, each of the plurality of the transport modes may be each car included in each of a plurality of trains, and the calculating unit may calculate the point for each car.

With the stated structure, the point calculating apparatus can calculate the point for each car included in each of a plurality of trains. Accordingly, to obtain a high point, the user will use, among the cars of each of the plurality of trains, a car with a high point, which is a car with a low congestion degree.

Here, the point allocating unit may include: a calculated point storing subunit that includes an area for storing the calculated point in association with transport mode information which indicates a transport mode corresponding to the calculated point; a calculated point writing subunit operable to write the calculated point in the calculated point storing subunit in association with the transport mode information; a usage information receiving subunit operable to receive, from a portable terminal apparatus belonging to the user, usage information that indicates, among the plurality of the transport modes, a transport mode that the user used and a usage time when the user used the transport mode, and a usage permission information that indicates a permission time when the user obtains a permission to use one of the plurality of the transport modes; and a point transmitting subunit operable to perform weighting on the point that is stored in association with the transport mode information that indicates the transport mode indicated by the received usage information, in accordance with a difference between the usage time indicated by the usage information and the permission time indicated by the usage permission information, and transmit the weighted point to the portable terminal apparatus, to allocate the point to the user.

With the stated structure, the point calculating apparatus can perform the weighting based on the difference between the usage time and the time indicated by the usage permission information, and the user can chose a transport mode with a high point due to the weighting. For instance, the usage permission information indicates a time when the user arrives at the location where the user uses the transport mode, and the difference between the usage time and the time indicated by the usage permission information is the weighting time before the user uses the transport mode. The weight increases as the weighting time increases. In this case, the user can obtain a highly weighted point by waiting a transport mode with a low congestion degree for a long time.

The present invention also provides a point allocating system that allocates a point to users of transport modes for the same destination, the point allocating system comprising: one or more measuring apparatuses each set up in each of the transport modes and operable to measure a congestion degree of a relevant one of the transport modes; a point calculating apparatus operable to obtain the congestion degree from each measuring apparatus, and calculate, for each of the transport modes, the point in accordance with the congestion degree; one or more distributing apparatuses each set up in each of the transport modes, and operable to distribute point information indicating the point calculated for a relevant one of the transport modes by short-range wireless; and a portable terminal apparatus operable to receive the point information from the distributing apparatus by short-range wireless.

With the stated structure, using the distributing apparatus, the point allocating system can transmit the point information indicating, among the points calculated for each transport mode by the point calculating apparatus, the point corresponding to the transport mode equipped with the distributing apparatus, to the portable terminal apparatus by short-range wireless within the transport mode. Accordingly, to obtain a high point, the user with the portable terminal apparatus will use a transport mode to which a high point is allocated. This means that the point allocating system can direct the users to a particular transport mode.

Here, the point calculating apparatus may obtain the congestion degree from each measuring apparatus, and calculate, using each congestion degree, the point for each of the transport modes such that the point decreases as the congestion degree increases.

With the stated structure, the point allocating apparatus included in the point allocating system can calculate the point to be allocated to each transport mode such that the point decreases as the congestion degree increases. Accordingly, the user will use the transport mode to which a high point is allocated.

Here, the point calculating apparatus may calculate the point for each of the transport modes such that a total of the point to be allocated to each of the transport modes is a constant value.

With the stated structure, the point calculating apparatus included in the point calculating system can calculate the point for each transport mode in such a manner that the total of the points to be allocated to the transport modes becomes a constant value. Therefore, the total point as the constant value is divided among the users to each of whom the point is to be allocated. This means that the total of the calculated points does not change, and the point calculating apparatus can fairly allocate the point to users.

Here, the point allocating system may further comprise a notifying apparatus operable to notify expected allocating point information that indicates a point that is expected to be allocated to the user of the transport mode.

With the stated structure, the point allocating system can notify the user of the anticipated point information, using the notifying apparatus. Accordingly, the user will use a transport mode to which a high point is allocated, based on the anticipated point information notified by the notifying apparatus.

The present invention also provides a measuring apparatus that measures a congestion degree of transport modes, comprising: a measuring unit operable to measure the congestion degree of the transport modes; and a transmitting unit operable to transmit the congestion degree to a point calculating apparatus that calculates a point for each of the transport modes in accordance with the congestion degree.

With the stated structure, the measuring apparatus can measure the congestion degree of the transport mode, and transmit the congestion degree to the point calculating apparatus.

The present invention also provides a distributing apparatus that is set up in each of transport modes, and distributes point information that indicates the point, in accordance with a congestion degree of the transport modes, the distributing apparatus comprising: a distribution judging unit operable to judge whether to start a distribution of the point information; and a wireless distributing unit operable, if the distribution judging unit judges af f irmatively, to distribute the point information to a portable terminal apparatus belonging to a user of a transport mode among the plurality of the transport modes by short-range wireless.

With the stated structure, the distributing apparatus transmits the point information to the portable terminal apparatus by short-range wireless, and the user of the transport mode can obtain the point information by using the transport mode with the portable terminal apparatus.

Here, the transport mode may be equipped with a door, and the distribution judging unit may judge affirmatively if detecting that the door is opened.

With the stated structure, the distributing apparatus decides to start the distribution of the point information when the door is opened. Accordingly, the distributing apparatus can distribute the point information to the user who gets on the transport mode, after the door is opened.

Here, the point information may be usage information, indicating the transport mode and equivalence with the point corresponding to the transport mode, and the wireless distributing unit may distribute the usage information.

With the stated structure, the distributing apparatus can distribute the usage information as the point information to the portable terminal apparatus.

Here, the distributing apparatus may further comprise: a private key storing unit operable to store a private key; and a signature data generating unit operable to generate signature data by performing a digital signature algorithm on the usage information using the private key, wherein the wireless distributing unit further transmit the signature data to the portable terminal apparatus by short-range wireless.

With the stated structure, the distributing apparatus can transmit the signature data corresponding to the usage information. Accordingly, the distributing apparatus can heighten the validity of the usage information.

Here, the distributing apparatus may further comprise a point writing unit operable to obtain the point corresponding to the transport mode equipped with the distributing apparatus from a point calculating apparatus that calculates a point for eachof the transport modes, and write the obtained point in a predetermined region, wherein the wireless distributing apparatus may distribute the point stored in the predetermined region as the point information.

With the stated structure, the distributing apparatus can transmit the calculated point, which corresponds to each transport mode, as the point information.

Here, the distribution judging apparatus may include: an allocation information receiving unit operable to receive, from the portable terminal apparatus, allocation information including all the points calculated by a point calculating apparatus that calculates the point for each of the transport modes in accordance with the congestion degree of the transport modes, and certification information that certifies a validity of the allocation information; a validity information storing unit that stores verification information used for verifying the validity of the allocation information; and a determining unit operable to determine whether the received allocation information is valid using the certification information and the verification information, and if judging affirmatively,determine to distribute the point information, wherein if the determining unit determines that the received allocation information is valid, the wireless distributing unit obtains the point calculated in relation to a transport mode equipped with the distributing apparatus among the plurality of the transport modes, out of the received allocation information, and distribute the obtained point as the point information to the portable terminal apparatus by short-range wireless.

With the stated structure, the distributing apparatus can receive the allocation information and the certification information, and if judging that the received allocation information is valid using the received certification information and the stored verification information, transmit the point corresponding to the transport mode, calculated based on the received allocation information, to the portable terminal apparatus.

Here, the certification information may include a first calculation time that certifies the validity at a time when the point is calculated by the point calculating apparatus, the verification information may be a second calculation time that verifies the validity at a time when the point is calculated by the point calculating apparatus , and the determining subunit may judge whether the fist calculation time and the second calculation time is the same, and if judging affirmatively, determine that the received allocation information is valid.

With the stated structure, the distributing apparatus can judge the validity of the received allocation information, using the first calculation time and the second calculation time. For instance, the second calculation time is the latest time when each point was calculated last time, and if the first calculation time and the second calculation time is the same, the distributing apparatus can judge that the received allocation information is the latest information.

Here, the certification information may be signature data generated by performing, using a secret key, a digital signature algorithm on the allocation information, the verification information may be a public key corresponding to the private key, and the determining unit may perform a signature verification using the public key, the signature data and the allocation information, and if a result of the signature verification is in the affirmative, determine that the received allocation information is valid.

With the stated structure, the distributing apparatus can judge the validity of the received allocation information by performing the signature verification. This improves the security of the allocation information.

The present invention also provides a portable terminal apparatus that receives point information indicating a point calculated in accordance with a congestion degree of a plurality of transport modes, from any of distributing apparatuses that are set up in the transport modes respectively, the portable terminal apparatus comprising: a point information storing unit that has a tamper-resistant characteristic and includes an area for storing the point information; a point information receiving unit operable to receive the point information from any of the distributing apparatuses by short-range wireless; a write judging unit operable to judge whether to write the received point information to the point information storing unit; and a point information writing unit operable, if the write judging unit judges affirmatively, to write the received point information in the point information storing unit.

With the stated structure, the portable terminal apparatus can write the received point information in the tamper-resistant point information storing unit if judging that the received point information is to be written in the point information storing unit. Accordingly, the potable terminal apparatus can prevent unauthorized accesses and tampering with the point information written in the point information storing unit.

Here, the point information may be usage information indicating a transport mode that the user has used among the plurality of the transport modes, and equivalence with the point corresponding to the transport mode, the point information storing unit may further include a point storing region for storing the point equivalent with the point information, and the portable terminal apparatus may further include: a transmitting unit operable to transmit the usage information stored in the point information storing unit to a point calculating apparatus that calculates a point for each of the transport modes; and a received point writing unit operable to receive, from the point calculating apparatus, the point calculated for the transport mode indicated by the usage information, and write the received point in the point storing region.

With the stated structure, the portable terminal apparatus can receive the point calculated for the transport mode indicated by the usage information from the distributing apparatus, and write the point in the tamper-resistant point storing region. Accordingly, the terminal apparatus can prevent unauthorized accesses and tampering with the point written in the point storing region.

Here, the transmitting unit may transmit, to the point calculating apparatus, the usage information including an identifier that identifies the transport mode and signature data generated by performing a digital signature algorithm on the identifier.

With the stated structure, the portable terminal apparatus transmits the usage information including the identifier and the signature data corresponding to the identifier. Accordingly, the security of the usage information is improved.

Here, the portable terminal apparatus may further comprise: a usage permission information receiving unit operable to receive, from an external apparatus, usage permission information that indicates a time when a user, to whom the portable terminal apparatus belongs, is permitted to use any of the plurality of transport modes; a usage permission information storing unit; and a usage permission information writing unit operable to write the usage permission information in the usage permission information storing unit, wherein the usage information may further indicate a usage time when the user used the transport mode, the transmitting unit may further transmit the usage permission information, and the received point writing unit may receive a weighted point, which is a point generated by weighting the point calculated in relation to the usage information in accordance with the difference between the usage time and the time indicated by the usage permission information.

With the stated structure, the portable terminal apparatus can receive the weighted point which is weighted in accordance with the difference between the usage time and the usage permission time indicated by the usage permission information. Accordingly, the user can chose a transport mode such that the distributed weighted point becomes high.

Here, the point information may be, among each point calculated by a point calculating apparatus that calculates the point for each of the transport modes, a point calculated in relation to the transport mode equipped with the distributing apparatus, and the point information receiving unit may receive, from the distributing apparatus, the point corresponding to the transport mode equipped with the distributing apparatus by short-range wireless

With the stated structure, the portable terminal apparatus can receive the point calculated for the transport mode from the distributing apparatus.

Here, the portable terminal apparatus may further comprise: an allocation information receiving unit operable to receive allocation information including each calculated point and certification information that certifies a validity of the allocation information, from a point calculating apparatus that calculates the point for each transport apparatus; an allocation information storing unit operable to store the received allocation information and certification information; and an allocation information transmitting unit operable to transmit the allocation information and the certification information stored in the allocation information storing unit to the distributing apparatus by short-range wireless, wherein the point information may be a point calculated for a transport mode equipped with the distributing apparatus among the plurality of transport modes, and the point information receiving unit may receive, among each point included in the allocation information, the point corresponding to the transport mode equipped with the distributing apparatus, from the distributing apparatus.

With the stated structure, the portable terminal apparatus can receive, among the pieces of the allocation information, the point calculated for the transport mode.

Here, the point information storing unit may store the point indicated by the point information, and the portable terminal apparatus may further include: an electronic money storing unit that has a tamper-resistant characteristic and includes an area for storing electronic money; a converting unit operable to convert the point accumulated in the point information storing unit to electronic money; and an electronic money writing unit operable to write the converted electronic money in the electronic money storing unit.

With the stated structure, the portable terminal apparatus can convert the predetermined point, which is a predetermined value multiplied by an integer to the electronic money, among the accumulated points, and store the electronic money. Accordingly, the portable terminal apparatus can improve unauthorized accesses and tampering with the electronic money stored in the electronic money storing unit.

Here, the portable terminal apparatus may further comprise: a payment control unit operable to perform, by short-range wireless, a payment for purchase using the electronic money stored in the electronic money storing unit.

With the stated structure, the userwho has the portable terminal apparatus can use the stored electronic money to buy goods.

Here, the point information storing unit, the electronic money storing unit, the converting unit and the payment control unit may be structured as a portable recording medium.

With the stated structure, the user can use the electronic money if only the user has the recording medium.

### Brief Description of the Drawings

FIG. 1 shows an overall structure of a point distributing system 1;
FIG. 2 is a block diagram showing a structure of a collecting apparatus 10;
FIG. 3 is a block diagram showing a structure of an in-car apparatus 20;
FIG. 4 is a block diagram showing a structure of a managing apparatus 30;
FIG. 5 shows an example of a data structure of a time table T100 that a time table storing unit 300 stores;
FIG. 6 shows an example of a data structure of a time table T101 that a time table storing unit 300 stores;
FIG. 7 is a block diagram showing a structure of a transmission information storing unit 301;
FIG. 8 shows an example of a data structure of an odds information table T110 that an odds information storing unit 310 stores;
FIG. 9 shows an example of a data structure of a point table T111 that a point storing unit 311 stores;
FIG. 10 is a block diagram showing a structure of an information displaying apparatus 40;
FIG. 11 is a block diagram showing a structure of a recording medium 50;
FIG. 12 is a block diagram showing a structure of a portable terminal apparatus 60;
FIG. 13 is a flowchart showing operations for an information collection performed by a point distributing system 1;
FIG. 14 is a flowchart showing operations for a point determination performed by a point distributing system 1;

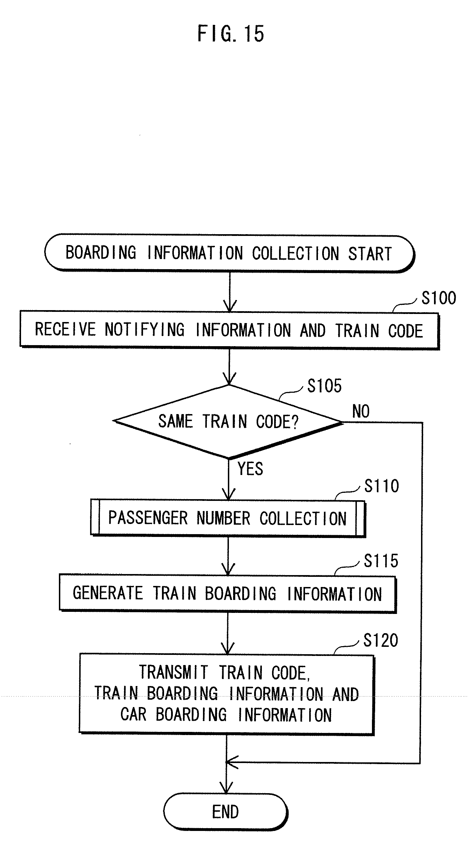

FIG. 15 is a flowchart showing operations for a boarding information collection performed by a point distributing system 1;
FIG. 16 is a flowchart showing operations for a passenger number collection performed by a point distributing system 1;
FIG. 17 is a flowchart showing operations for a first odds calculation performed by a point distributing system 1;
FIG. 18 is a flowchart showing operations for a conversion information collection performed by a point distributing system 1;
FIG. 19 is a flowchart showing operations for a converted passenger number collection;
FIG. 20 is a flowchart showing operations for a usage information distribution performed by a point distributing system 1, followed by FIG. 21;
FIG. 21 is a flowchart showing operations for a usage information distribution performed by a point distributing system1, continued from FIG. 20;
FIG. 22 is a flowchart schematically showing operations for a point distribution performed by a point distributing system 1;
FIG. 23 is a flowchart showing operations for a point distribution performed by a point distributing system 1;
FIG. 24 is a flowchart showing operations for a point wiring performed by a point distributing system 1;
FIG. 25 is a flowchart schematically showing operations for an odds distribution performed by a point distributing system 1;
FIG. 26 is a flowchart showing operations for an odds distribution performed by a point distributing system 1;
FIG. 27 shows an overall structure of a point distributing system 1000;
FIG. 28 is a block diagram showing a structure of a collecting apparatus 1010;
FIG. 29 is a block diagram showing a structure of an in-car apparatus 1020;
FIG .30 is a block diagram showing a structure of a managing apparatus 1030;
FIG. 31 shows an example of a data structure of a point table T1000 that a point table storing unit 300 stores;
FIG. 32 is a block diagram showing a structure of an information displaying apparatus 1040;
FIG. 33 is a block diagram showing a structure of a recording medium 1050;
FIG. 34 is a block diagram showing a structure of a portable terminal apparatus 1060;
FIG. 35 is a flowchart showing operations for an information collection performed by a point distributing system 1000;
FIG. 36 is a flowchart showing operations for a point information reception performed by a point distributing system 1000;
FIG. 37 is a flowchart showing operations for a point extraction performed by a point distributing system 1000;
FIG. 38 is a flowchart showing operations for a point distribution performed by a point distribution system 1000;
FIG. 39 shows an overall structure of a point distributing system 2000;
FIG.40 is a block diagram showing a structure of a collecting apparatus 2010;
FIG.41 is a block diagram showing a structure of an in-car apparatus 2020;
FIG.42 is a block diagram showing a structure of a managing apparatus 2030;
FIG.43 is a block diagram showing a structure of a recording medium 2050;
FIG.44 is a block diagram showing a structure of a portable terminal apparatus 2060;
FIG.45 is a flowchart showing operations for a transmission of all the pieces of point information performed by a point distributing system 2000;
FIG.46 is a flowchart showing operations relating to a point distribution performed by a point distribution system;
FIG.47 is a flowchart showing operations for a point distribution performed by a point distributing system 2000;
FIG.48 is a flowchart showing operations for a point writing performed by a point distributing system 2000;
FIG. 49 shows an overall structure of a point distributing system 3000;
FIG. 50 shows an overall structure of a point distributing system 4000;
FIG. 51 shows an overall structure of a system in a case where electronic money is used;
FIG. 52 is a block diagram showing a structure of a recording medium 50A;
FIG.53 shows an example of a data structure of a management table T500 that an electronic money storing unit 510A stores;
FIG. 54 shows example contents of a management table T501 that is updated from a management table T500 when total point is converted to electronic money;
FIG. 55 shows an example of contents of management table T502 that has not been used yet, and an example of contents of management table T503 that has been already used;
FIG. 56 is a flowchart showing operations for a conversion;
FIG. 57 is a flowchart showing operations for an electronic money usage;
FIG. 58 shows an overall structure of a system in which accumulated points are used for payment for a usage fee;
FIG. 59 is a block diagram showing a structure of a recording medium 50B;
FIG. 60 is a block diagram showing a structure of a payment apparatus 70B;
FIG. 61 shows an example of a data structure of a discount table T600 that a discount information storing unit 701B stores;
FIG. 62 shows an example of a data structure of a history information table T700 that a history information storing unit 702B stores;
FIG. 63 shows an overall structure of a point distributing system 1a; and
FIG. 64 is a block diagram showing a structure of an information displaying apparatus 40a.

### EXPLANATION OF REFERENCES

- 1:: point distributing system
- 10, 11:: collecting apparatuses
- 20 - 27:: in-car apparatuses
- 30:: managing apparatus
- 40, 41:: information displaying apparatuses
- 50:: recording medium
- 60:: portable terminal apparatus
- 100:: train code storing unit
- 101:: control unit
- 102:: wireless unit
- 103:: input and output unit
- 104:: antenna unit
- 200:: car code storing unit
- 201:: private key storing unit
- 202:: passenger number storing unit
- 203:: measuring unit
- 204:: distributing unit
- 205:: open and close detecting unit
- 206:: clock unit
- 207:: wireless unit
- 208:: input and output unit
- 209:: antenna unit
- 300:: time table storing unit
- 301:: transmission information storing unit
- 302:: public key storing unit
- 303:: odds calculating unit
- 304:: clock unit
- 305:: point transmitting unit
- 306:: wireless unit
- 307:: transmitting and receiving unit
- 308:: antenna unit
- 310:: odds information storing unit
- 311:: point storing unit
- 400:: time table storing unit
- 401:: clock unit
- 402:: control unit
- 403:: displaying unit
- 404:: receiving unit
- 500:: information storing unit
- 501:: point storing unit
- 502:: usage information storing unit
- 503:: usage time storing unit
- 600:: identifier storing unit
- 601:: control unit
- 602:: input unit
- 603:: displaying unit
- 604:: first wireless unit
- 605:: input and output unit
- 606:: first antenna unit
- 607:: second wireless unit
- 608:: second antenna unit

### Best Mode for Carrying Out the Invention

### 1. The First Embodiment

The following describes a point distributing system 1 as an embodiment according to the present invention.

### 1.1 Overview of Point Distributing System 1

A point distributing system 1 is a system that distributes service points (Hereinafter simply called "the points"), which are calculated according to congestion degrees of trains or cars of a train, to users. This system is designed to be provided by a railway company. A user collects the points to receive special benefits provided by the railway company. The special benefits are, for instance, coupon tickets, premium contents and goods. The user can exchange accumulated points for such services.

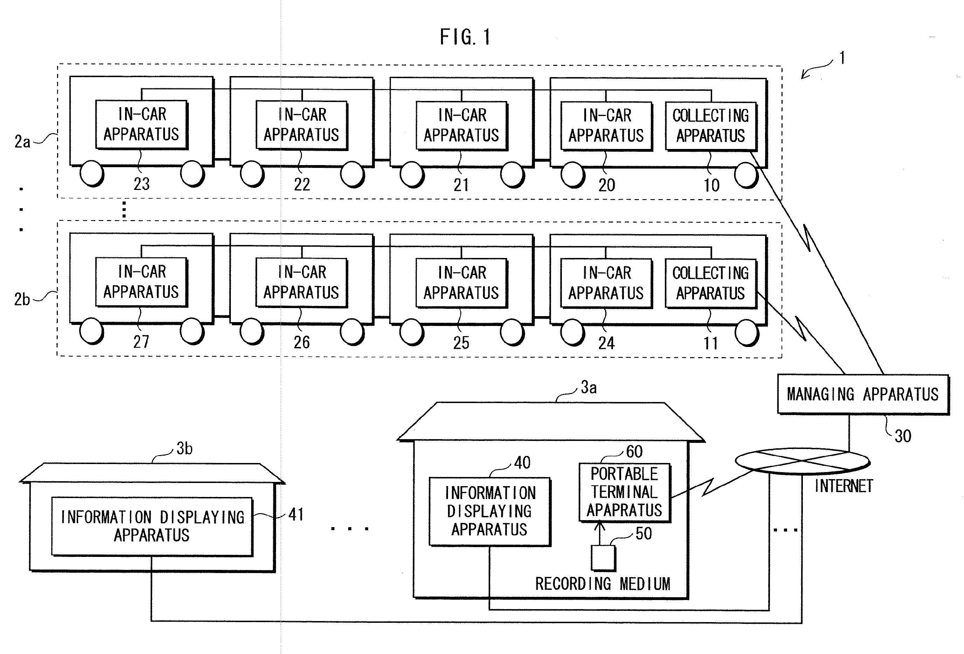

As FIG.1 shows, the point distributing system 1 includes collecting apparatuses 10 ... 11 and in-car apparatuses 20, 21, 22, 23 ... 24, 25, 26 and 27, which are set up in trains 2a ... 2b respectively, a managing apparatus 30, information displaying apparatuses 40 ... 41 respectively set up in stations 3a ... 3b, a recording medium 50 and a portable apparatus 60.

The collecting apparatus 10 is connected to the in-car apparatuses 20, 21, 22 and 23, and the collecting apparatus 11 is connected to the in-car apparatuses 24, 25, 26 and 27.

The in-car apparatus 20 measures a congestion degree of the car equipped with the in-car apparatus 20, and obtains a per-car converted passenger number, which indicates the congestion degree of the car. The in-car apparatus 20 also counts a total per-car passenger number, which indicates the total number of passengers who have got on the car since the congestion degree was measured last time. The in-car apparatus 20 transmits usage information and signature data to a portable terminal apparatus 60, which belongs to a user in the car, by short-range wireless. The usage information includes a car code, which identifies the car and a usage time which is a time when the car is used by the user. The signature data is generated by performing a digital signature algorithm on the usage information. Here, assume that the transmission of the usage information and the signature data is performed by the in-car apparatus 20 located in the vicinity of a door of the car (e.g. on a ceiling of the car, which is 1 m away from the door), and the communication distance of the short-range wireless is 3 m. The in-car apparatuses 21 ... 27 perform the same operation as the in-car apparatus 20.

Using the per-car converted passenger numbers and the total per-car passenger numbers obtained by each in-car apparatus, the collecting apparatus 10 calculates a per-train converted passenger number, which indicates the congestion degree of the whole train, and a total per-train passenger number, which indicates the total number of passengers who have got on the train since the congestion degree was measured last time. The collecting apparatus 11 performs the same operation.

Using the per-car converted passenger numbers obtained by each in-car apparatus and the per-train converted numbers calculated by each collecting apparatus, the managing apparatus 30 calculates, for each car of each train, odds used for distributing the points, and calculates the odds of each train as well. Also, the managing apparatus 30 transmits the odds to the portable terminal apparatus 60 upon receiving an odds distribution request from the portable terminal apparatus 60. Also, the managing apparatus 30 receives each total per-car passenger number and each total per-train passenger number, and calculates the points to be allocated to the user based on the received information and odds that are stored in the managing apparatus 30, and then stores the points. The managing apparatus 30 distributes the stored points to the portable terminal apparatus 60 upon receiving a point distribution request from the terminal apparatus 60.

The information displaying apparatuses 40 ... 41 display the information about the odds calculated by the management apparatus 30.

A recording medium 50 is attached to the portable terminal apparatus 60 when the user gets on the train and when the portable terminal apparatus 60 requests the point distribution. Upon receiving the usage information from the in-car apparatus set up in the car where the user gets on, the portable terminal apparatus 60 writes the received usage information in the recording medium 50. Also, upon receiving the points from the managing apparatus 30 , the portable terminal apparatus 60 adds the received points to the accumulated points, and writes the points in the recording medium 50.

### 1.2 Structure of Collecting Apparatus 10

Since the collecting apparatuses 10 ...11 have the same structure , the following describes only the structure of the collecting apparatus 10.

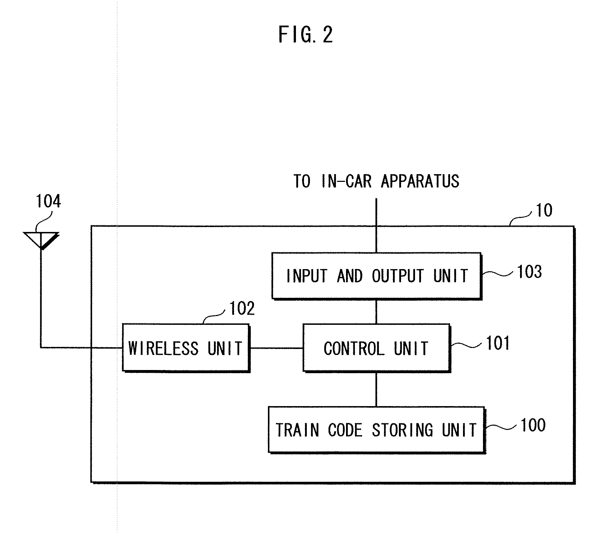

As FIG.2 shows, the collecting apparatus 10 includes a train code storing unit 100, a control unit 101, a wireless unit 102, an input and output unit 103 and an antenna unit 104.

The collecting apparatus 10 is, more specifically, a computer system that includes a microprocessor, a ROM, a RAM, a hard disk unit, a display unit, a modem, and so on. A computer program is stored in the ROM or the hard disk unit. The microprocessor operates in accordance with the computer program, and accordingly, the collecting apparatus 10 can fulfill the function thereof.

### (1) Train Code Storing Unit 100

The train code storing unit 100 stores a train code for identifying the train equipped with the collecting apparatus 10.

### (2) Control Unit 101

The control unit 101 collects the per-car converted passenger number from each of the in-car apparatuses 21 ... 23, and calculates the per-train converted passenger number.

Also, in the odds calculation periodically performed by the managing apparatus 30 (every five minutes, in this embodiment), the control unit 101 collects, from each of the in-car apparatuses 21 ... 23, the total per-car passenger number for five minutes since the odds were calculated, and calculates the total per-train passenger number.

### <Collection of Per-car Converted Passenger Number and Calculation of Per-train Converted Passenger Number>

Upon receiving, from the managing apparatus 30 via the wireless unit 102, the train code and a collecting instruction to collect the per-train converted passenger number and the per-car converted passenger number, the control unit 101 judges whether the received train code and the train code stored in the train code storing unit 100 are the same.

If judging negatively, the control unit 101 does not perform any operation.

If judging affirmatively, the control unit 101 firstly transmits a measuring instruction to measure the per-car converted passenger number to the in-car apparatus 20 via the input and output unit 103. The control unit 101 receives per-car conversion information including the car code that identifies the car and the per-car converted passenger number from the input and output unit 103 via the in-car apparatus 20, and temporally stores the received per-car conversion information. The control unit 101 performs these operations as to every in-car apparatus. The car code is explained later in detail.

Upon receiving the per-car conversion information from every in-car apparatus , the control unit 101 sums up all the per-car converted passenger numbers included in the received pieces of the per-car conversion information to obtain the per-train converted passenger number, and generates per-train conversion information including the train code and the obtained per-train converted passenger number. The control unit 101 transmits the generated per-train conversion information, each piece of the per-car conversion information and the train codes stored therein, to the managing apparatus 30 via the wireless unit 102 by wireless.

### <Collection of Per-car Converted Passenger Number and Calculation of Per-train Converted Passenger Number>

Upon receiving the train code and a notifying instruction that instructs to notify the total per-train passenger number and the total per-car passenger number, the control unit 101 judges whether the received train code is the same as the train code stored in the train code storing unit 100.

If judging negatively, the control unit 101 does not perform any operation.

If judging affirmatively, the control unit 101 transmits a passenger number notifying instruction to notify the in-car apparatus 20 of the total per-car passenger number via the input and output unit 103. The control unit 101 receives car boarding information including the car code and the total per-car passenger number, from the in - car apparatus 20 via the input and output unit 10 3, and temporally stores the received car boarding information. The control unit 101 performs the above-described operations for each in-car apparatus.

Upon receiving the car boarding information from every in-car apparatus, the control unit 101 calculates the total train passenger number by summing up the total per-car passenger number included in each piece of car boarding information, and generates train boarding information including the train code and the calculated total per-train passenger number. The control unit 101 transmits the generated train boarding information, the stored each piece of the stored car boarding information and the stored train code to the managing apparatus 30 via the wireless unit 102 by wireless.

### (3) Wireless Unit 102

The wireless unit 102 receives an electrical signal from the antenna unit 104, demodulates the received electrical signal, and extracts a pulse signal wave from the demodulated signal. The wireless unit 102 decodes the extracted pulse signal wave and extracts instructions and information.

The instructions to be extracted include the collecting instruction and the notifying instruction. The information to be extracted includes the train code.

Also, upon receiving the information from the control unit 101, the wireless unit 102 generates a pulse signal wave based on the received information, and changes the amplitude of the carrier wave based on the generated pulse signal wave as a modulation sign, and then outputs the carrier wave whose amplitude has been changed, to the antenna unit 104.

### (4) Input and Output Unit 103

The input and output unit 103 outputs the instructions received from the control unit 101 to each in-car apparatus.

Also, the input and output unit 103 also outputs the information received from each in-car apparatus to the control unit 101.

### (5) Antenna Unit 104

Upon receiving the carrier wave having the changed amplitude from the wireless unit 102, the antenna unit 104 transmits the received carrier wave as a radio wave to the air.

The antenna unit 104 also receives a radio wave, converts the radio wave to an electrical signal, and outputs the electrical signal to the wireless unit 102.

### 1.3 Structure of In-car apparatus 20

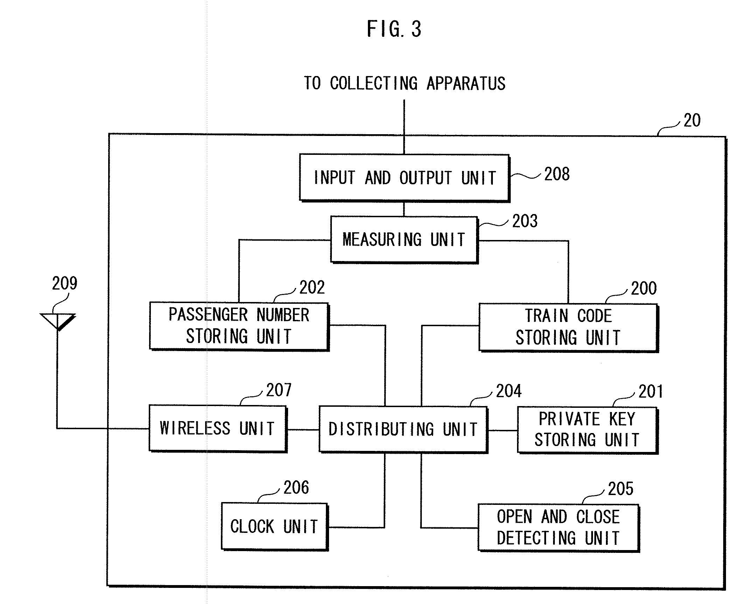

As FIG.3 shows, the in-car apparatus 20 includes a car code storing unit 200, a secret key storing unit 201, a passenger number storing unit 202, a measuring unit 203, a distributing unit 204, an open and close detecting unit 205, a clock unit 206, a wireless unit 207, an input and output unit 208 and an antenna unit 209.

The in-car apparatus 20 is, more specifically, a computer system including a microprocessor, a ROM, a RAM, a hard disk unit, a display unit, a modem and so on. A computer program is stored in the ROM or the hard disk unit. The microprocessor operates in accordance with the computer program, and accordingly, the in-car apparatus 20 can fulfill the function thereof.

Note that the in-car apparatuses 21... 27 have the same structure as the in-car apparatus 20, and therefore their explanations are omitted here.

### (1) Car Code Storing Unit 200

The car code storing unit 200 stores the car code that identifies the car equipped with the in-car apparatus 20. The car code is a code including a train code and a car number. The train code included in the car code and the train code stored in the collecting apparatus 10 connected to the in-car apparatus 20 are the same.

### (2) Private Key Storing Unit 201

The private key storing unit 201 stores a private key that is used for performing a digital signature algorithm on the usage information in the case where the usage information is transmitted to the portable terminal apparatus 60 by wireless.

### (3) Passenger Number Storing Unit 202

The passenger number storing unit 202 has a passenger number storing region storing the total per-car passenger number indicating the total number of the passengers who has got on the car in one cycle between the odds calculation performed by the managing apparatus 30 and the next odds calculation (the cycle of five minutes in this embodiment). The initial value of the passenger number storing region is "0". The one cycle between the odds calculation and the next odds calculation is hereinafter called the "storing cycle".

### (4) The Measuring Unit 203

The measuring unit 203 prestores the weight of the car.

Upon receiving a measuring instruction from the collecting apparatus 10 via the input and output unit 208, the measuring unit 203 measures the weight of the car and obtain a measured weight. The measuring unit 203 calculates the total weight of the passengers in the car by subtracting the prestored car weight from the measured weight. Then, the measuring unit 203 converts the calculated weight to the passenger number to obtain the per-car converted passenger number. The measuring unit 203 reads the car code stored in the car coded storing unit 200, generates the per-car conversion information including the read car code and the obtained per-car converted passenger number, and transmits the generated per-car conversion information to the collecting unit 10 via the input and output unit 208. Here, the conversion is performed in the following manner for instance: The weight of each passenger is assumed to be 60 kg, and the total weight of the passengers is divided by 60. The quotient is the converted passenger number. The number of decimals is rounded up to an integer.

Upon receiving the passenger number notifying instruction from the collecting apparatus 10 via the input and output unit 208, the measuring unit 203 reads the total per-car passenger number from the passenger number storing unit 202, reads the car code from the car code storing unit 200, and generates the car boarding information including the read passenger number and the car code. Then, the measuring unit 203 outputs the generated car boarding information to the collecting apparatus 10 via the input and output unit 208. The measuring unit 203 reset the total per-car passenger number stored in the passenger number storing unit 202 to "0".

### (5) Distributing Unit 204

The distributing unit 204 stores a value of counting period (e.g. three minutes) for which the distributing unit 204 counts, at the station where the train 2a stops, the number of passengers who has got on the car equipped with the in-car apparatus 20.

Upon receiving an open status instruction indicating that the door of the car is opened from the open and close detecting unit 205, the distributing unit 204 reads the car code from the car code storing unit 200, the time from the clock unit 206, and the private key from the private key storing unit 201, and generates usage information including the read car code and time. Further, the distributing unit 204 outputs a pair of the generated usage information and the signature data, a usage information distributing instruction that instructs to distribute the usage information, and a distribution start instruction, which instructs to start the distribution of the usage information, to the wireless unit 207.

Upon receiving a closed status instruction indicating that the door of the car is closed from the open and close detecting unit 205, the distributing unit 204 outputs a distribution end instruction to instruct the end of the distribution of the usage information, to the wireless unit 207.

After outputting the distribution end instruction to the wireless unit 207, the status of the distributing unit 204 goes into a waiting status during the counting period, to receive, from the portable terminal apparatus 60 via the wireless unit 207, an information reception instruction, which indicates the fact that the usage information has been received, and a terminal identifier, which identifies the portable terminal apparatus 60.

Upon receiving the information reception instruction and the terminal identifier from the portable terminal apparatus 60 via the wireless unit 207, the distributing unit 204 adds "1" to the total per-car passenger number, which is stored in the passenger number storing unit 202, and updates the contents stored in the passenger number storing unit 202 to reflect the addition. Also, the distributing unit 204 outputs a response instruction, which indicates that the distributing unit 204 has received the information reception instruction, and the received terminal identifier to the wireless unit 207.

### (6) Open and Close Detecting Unit 205

The open and close detecting unit 205 detects the open and close of the door of the car. If detecting the door is opened, the open and close detecting unit 205 outputs the open status instruction to the distributing unit 204, and if detecting the door is closed, the open and close detecting unit 205 outputs the close status instruction to the distributing unit 204.

### (7) Clock Unit 206

The clock unit 206 obtains a current time.

### (8) Wireless Unit 207

The wireless unit 207 receives the electrical signal from the antenna unit 209, demodulates the received electrical signal, and extracts pulse signal wave from the demodulated signal. The wireless unit 207 decodes the extracted pulse signal wave to extract instructions and information.

The instructions to be extracted include the information reception instruction, and the information to be extracted includes the terminal identifier.

Also, upon receiving the pair of usage information and the signature data, and the usage information distributing instruction and the distribution start instruction from the distributing unit 204, the wireless unit 207 generates a pulse signal wave based on the pair of the received usage information and signature data and the usage information distributing instruction, changes the amplitude of the carrier wave based on the generated pulse signal wave as the modulation sign, and outputs the carrier wave whose amplitude has been changed, to the antenna unit 209 until receiving the distribution end instruction from the distributing unit 204.

Upon receiving the response instruction and the terminal identifier from the distributing unit 204, the wireless unit 207 generates a pulse signal wave based on the received response instruction and the terminal identifier, changes the amplitude of the carrier wave based on the generated pulse signal wave as a modulation sign, and outputs the carrier wave whose amplitude has been changed, to the antenna unit 209 until receiving the distribution end instruction from the distributing unit 204.

### (9) Input and Output Unit 208

The input and output unit 208 outputs the information received from the measuring unit 203, to the collecting apparatus 10.

Also, the input and output unit 208 outputs information received from the collecting apparatus 10 to the measuring unit 203.

### (10) Antenna Unit 209

Upon receiving the carrier wave, whose amplitude has been changed, from the wireless unit 207, the antenna unit 209 transmits the received carrier wave whose amplitude has been changed in the air.

The antenna unit 209 also receives a radio wave, converts the radio wave to an electrical signal, and outputs the electrical signal to the wireless unit 207.

### 1.4 Structure of Managing Apparatus 30

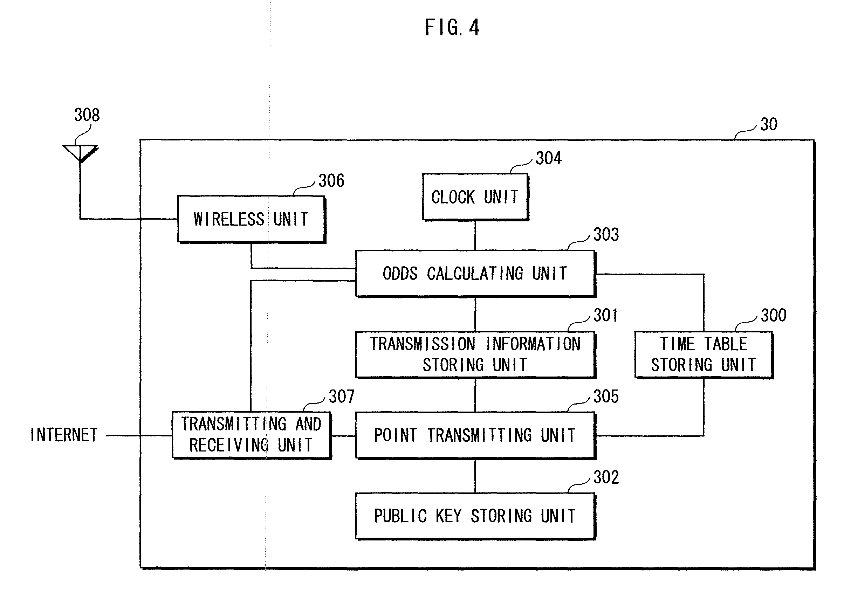

As FIG. 4 shows, the managing apparatus 30 includes a time table storing unit 300, a transmission information storing unit 301, a public key storing unit 302, an odds calculating unit 303, a clock unit 304, a point transmitting unit 305, a wireless unit 306, a transmitting and receiving unit 307 and an antenna unit 308.

The managing apparatus 30 is, more specifically, a computer system that includes a microprocessor, a ROM, a RAM, a hard disk unit, a display unit, a modem, and so on. The ROM or the hard disk unit stores a computer program. The microprocessor operates in accordance with the computer program, and accordingly, the managing apparatus 30 can fulfill the function thereof.

### (1) Time Table Storing Unit 300

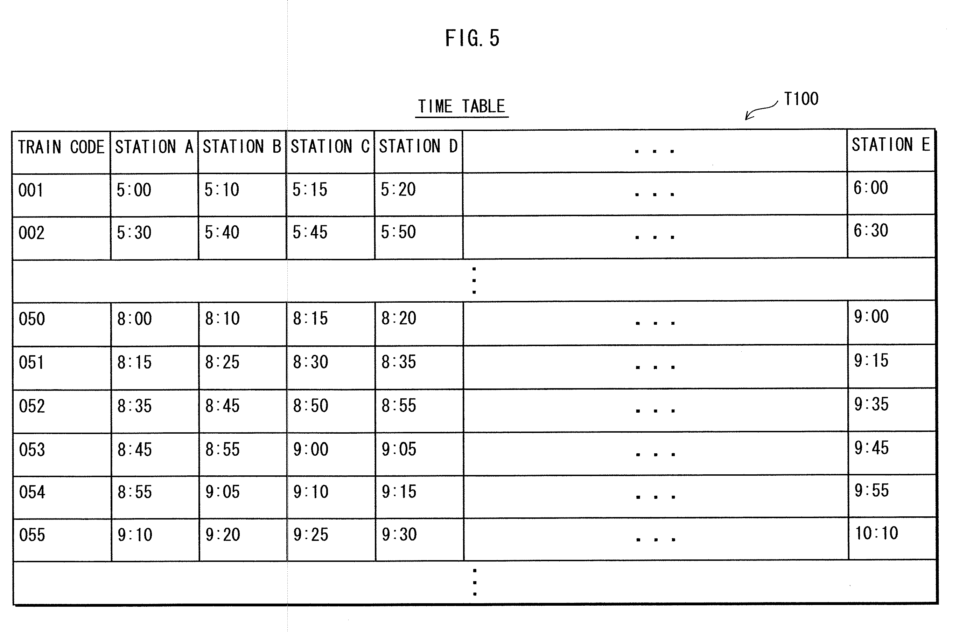

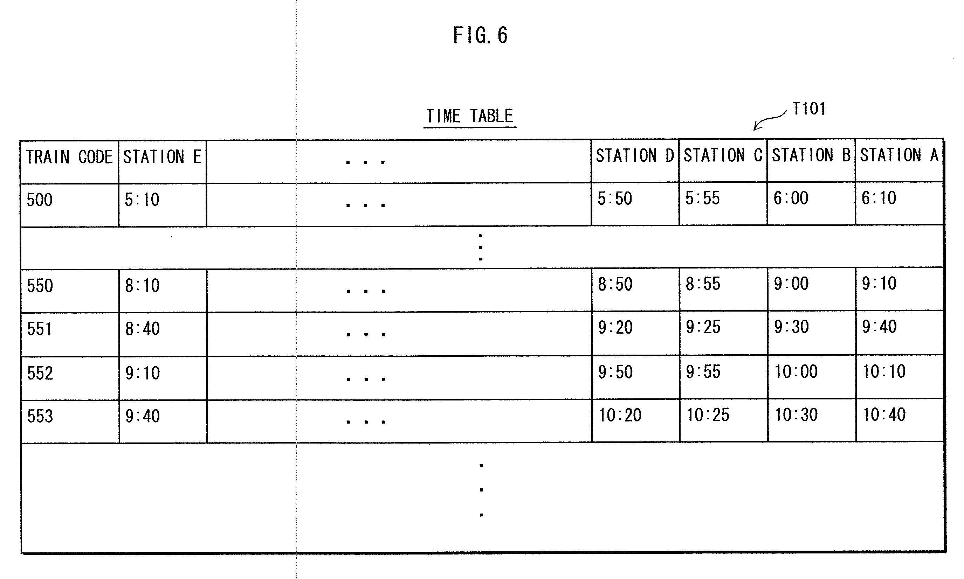

As FIG.5 and FIG. 6 show as an example, the time table storing unit 300 stores time tables T100 and T101.

The time table shown in FIG.5 includes a station A as the starting station and a station *E* as the terminal station. The time table shown in FIG. 6 includes the station *E* as the starting station and the station A as the terminal station.

The time table T100 has an area for storing one or more groups, each including the train code and stations *A, B, C, D ... E.*

The train codes respectively identify the trains, and the starting time of the train identified by the train code at each of the stations *A, B, C, D ... E* are shown in the table.

The time table T101 has the same structure as the time table T100. Accordingly, the explanation of the time table T101 is omitted here. Here, for the sake of convenience, assume that the time table T100 is for up-trains, and the time table T101 is for down-trains.

### (2) Transmission Information Storing Unit 301

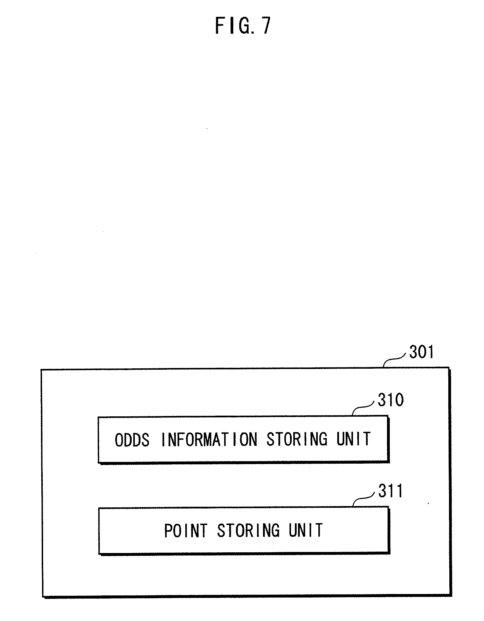

As FIG. 7 shows, the transmission information storing unit 301 includes an odds information storing unit 310 and a point storing unit 311.

### <Odds Information Storing Unit 310>

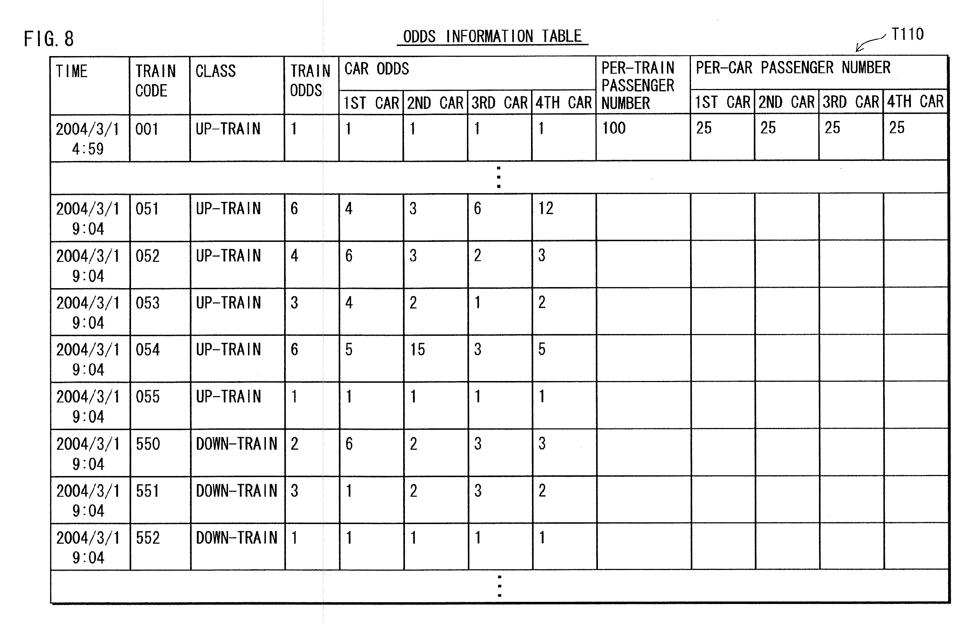

As FIG. 8 shows as an example, the odds information storing unit 310 includes an odds information table T110.

The odds table T110 has an area for storing one or more groups each including a time, a train code, a class, train odds, car odds, a total per-train passenger number, and a total per-car passenger number.

The time indicates when the train odds and the car odds are calculated.

The train code is a code for identifying the train. The class indicates whether the train corresponding to the train code is an up-train or a down-train.

The train odds indicate the odds in the case where the user uses the train that is the target of the odds calculation.

The car odds further includes odds of the first car, the second car, the third car and the fourth car, indicating the odds for the case where the user uses the corresponding car.

The total per-train passenger number indicates the number of the passengers who have got on the train, which corresponds to the train code, in the storing cycle.

The total per-train passenger number further includes the passenger number of the first car, the second car, the third car and the fourth car, each indicating the number of the passengers who have got on the car in the storing cycle.

### <Point Storing Unit 311>

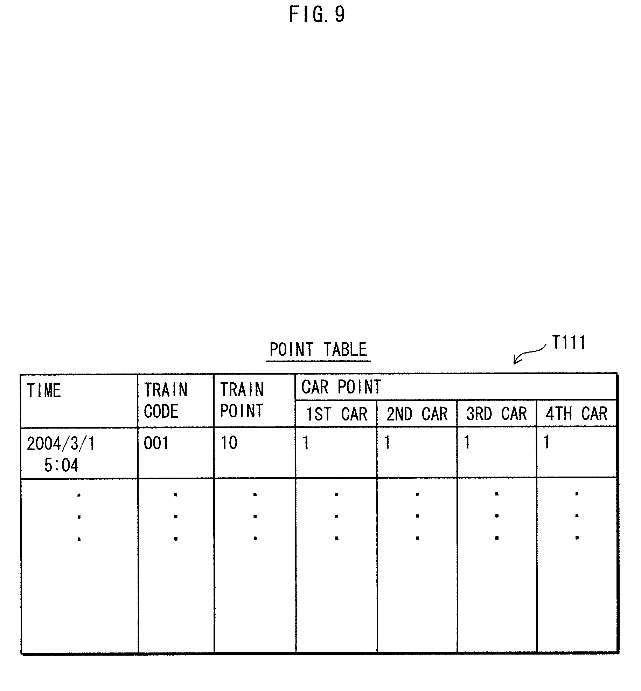

As FIG. 9 shows as an example, the point storing unit 311 has a point table T111.

The point storing table T111 has an area for storing one or more information groups each including a time, a train code, a train point, and a car point.

The time indicates when the train point and the car point are calculated.

The train code is a code for identifying the train, and the train point is the point to be allocated to the user who uses the train corresponding to the train code.

The car point further includes a point for the first car, a point for the second car, a point for the third car and a point for the fourth car, each indicating the point to be allocated to the user who uses the car.

### (3) Public Key Storing Unit 302

The public key storing unit 3 02 stores public keys in association with the car code. Each public key corresponds to the private key stored in each in-car apparatus.

### (4) Clock Unit 304

The clock Unit 304 obtains a current time.

### (5) Odds Calculating Unit 303

The odds calculating unit 303 calculates the train odds of each train, the car odds of each car of each train, and a train point and a car point to be allocated to the user, and distributes the odds information stored in the odds information storing unit 310 to the portable terminal apparatus 60.

The odds calculating unit 303 prestores a train standard point (e.g. 1000 points) based on which the train point is calculated, and a car standard point (e.g. 100 points) based on which the car point is calculated.

### <Odds Calculation>

The odds calculating unit 303 monitors the time obtained by the clock unit 304 and judges whether the time is when the odds should be calculated. If judging affirmatively, the odds calculating unit 303 obtains the time from the clock unit 304.

The odds calculating unit 303 judges whether the odds calculation is the first calculation in the operating day. If the odds calculation is started at a time one minute before the starting train departs, the odds calculating unit 303 can perform this judgment based on the time obtained from the clock unit 304 (4:59 in this example).

If judging that the odds calculation is the first calculation, the odds calculating unit 303 performs the following operation, and if judging that the odds calculation is not the first calculation, the odds calculating unit 303 collects the total per-train passenger number and the total per-car passenger number counted in the storing cycle, and calculates the train point and the car point to determine the points to be distributed, and then perform the following operations. The determination of the points is described later.

Using the time obtained from the clock unit 304, the odds calculating unit 303 first extracts the train codes of the trains currently in operation and the trains to be operated within 10 minutes from the current time, from the time table T100. For instance, if the obtained time is "9:04, March 1, 2004", the train codes to be obtained from the time table T100 are "051", "052", "053", "054" and "055". In the following description, the trains corresponding to the extracted train codes are assumed to be the trains 2a ... 2b.

The odds calculating unit 303 transmits the collecting instruction and each of the extracted train codes to the collecting apparatus 10 corresponding to the train code via the wireless unit 306. The odds calculating unit 303 receives the train code, the per-train conversion information and the per-car conversion information of each car of the train via the wireless unit 306, and temporally stores the received train code, per-train conversion information and each piece of the per-car conversion information. The odds calculating unit 303 performs these operations as to all the train codes extracted from the time table T100. In other words, the odds calculating unit 303 performs the operations as to the collecting apparatuses 10 ... 11.

The odds calculating unit 303 judges whether the information collection has finished. If judging negatively, the odds calculating unit 303 repeats the operations for collecting the per-train conversion information and each piece of the per-car conversion information as described above as to the train code of which the information has not collected yet.

If judging affirmatively, the odds calculating unit 303 calculates the odds in the following manner. First, the odds calculating unit 303 judges whether all the per-train converted passenger numbers temporally stored are "0". If judging negatively, in other words, if at least one of the per-train converted passenger numbers is "1" or more, the odds calculating unit 303 calculates and obtains ratio of each of the per-train converted passenger numbers that are "1" or more. Then, the odds calculating unit 303 obtains the reciprocal numbers of the obtained ratios, and multiplies the reciprocal numbers by a least common multiple of the denominators such that all the ratios become integers. The values obtained as the results of the multiplication are the train odds. The train odds of the train whose per-train converted passenger number is "0" are obtained by adding "1" to the maximum train odds.

If judging that all the per-train converted passenger numbers are "0", the odds calculating unit 303 sets "1" to the train odds of each train.

Next, the odds calculating unit 303 calculates the car odds of each car of each train. The odds calculating unit 303 obtains, from the temporally stored information, each per-car converted passenger number of the train corresponding to one of the extracted train codes. The odds calculating unit 303 judges whether all the obtained per-car converted passenger numbers are "0". If judging negatively, in other words, if at least one of the per-car converted passenger numbers is "1" or more, the odds calculating unit 303 calculates and obtains ratio of each of theper-car converted passenger numbers that are "1" or more. Then, the odds calculating unit 303 obtains the reciprocal numbers of the obtained ratios, and multiplies the reciprocal numbers by a least common multiple of the denominators such that all the ratios become integers. The values obtained as the result of the multiplication are the car odds. The car odds of the car whose per-car converted passenger number is "0" is obtained by adding "1" to the maximum car odds. The odds calculating unit 303 repeats these operations as to all the extracted train codes.

The odds calculating unit 303 writes the obtained time, train code, class (the "up-train" in this example), train odds corresponding to the train code, and the car odds of each car into the odds information table T110. At this moment, the fields for the total per-train passenger number corresponding to the train code and the total per-car passenger number are still blank.

The odds calculating unit 303 transmits a displaying instruction that instructs to display the odds information and all the information groups each including the time, the train code, the class, the train odds and the car odds, which have been written in the odds information table T110, to the information displaying apparatuses 40 ... 41 via the transmitting and receiving unit 307. Note that in the following description, the group of the time, the train code, the train odds and the car odds, which have been written in the odds information table T110, are called the "display information".

Next, using the obtained time, the odds calculating unit 303 extracts the train codes of the trains currently in operation and the trains to be operated within 10 minutes from the current time, from the time table T110, and performs the operations described above to calculate the train odds and the car odds of each car, writes the calculated odds into the odds information table T110 , and transmits the written odds information to the information displaying apparatuses 40 ... 41. Here, the class to be written into the odds information table T110 is the "down-train".

### <Specific Example of Odds Calculation>

The following describes a specific example of the odds calculation for each car of the train 2a.

The in-car apparatuses 20, 21, 22 and 23 are set up in the first car, the second car, the third car and the fourth car respectively. The per-car passenger numbers included in the pieces of the per-car conversion information respectively generated by the in-car apparatuses 20, 21, 22 and 23 are respectively "30", "40", "20" and "10".

The odds calculating unit 303 calculates the ratio of each per-car converted passenger number, and obtains the ratio "3:4:2:1". Then, the odds calculating unit 303 obtains the reciprocal numbers of the obtained ratios, and converts the ratios to integers, which are "4:3:6:12". These are the car odds of the cars. In other words, the odds "4" is the car odds of the first car, the odds "3" is the car odds of the second car, the odds "6" is the car odds of the third car and the odds "12" is the car odds of the fourth car.

If the per-car passenger numbers included in the pieces of the per-car conversion information respectively generated by the in-car apparatuses 20, 21, 22 and 23 are "30", "40", "20" and "0", the car odds are "4", "3", "6" and "7".

### <Point Determination>

If judging that the odds calculation that is going to be performed is not the first time calculation, the odds calculating unit 303 extracts the train code that is used in the odds calculation performed last time. For example, the odds calculating unit 303 extracts all the train codes corresponding to the time five minutes before the time obtained from the clock unit 304.

In the following description, the trains corresponding to the train codes extracted from the odds information table T110 are the trains 2a ... 2b.

The odds calculating unit 303 transmits the notifying instruction and the extracted train code to the collecting apparatus 10 in the train corresponding to the train code, via the wireless unit 306. The odds calculating unit 303 receives the train code, the train boarding information and the car boarding information of each car of the train, from the collecting apparatus 10 via the wireless unit 306, and writes the received train code, train boarding information and pieces of the car boarding information into the corresponding region in the odds information table T110. The odds calculating unit 303 performs the above-described operations as to all the train codes extracted from the odds information table T110. In this example, the odds calculating unit 303 performs the operations as to the colleting apparatuses 10 ... 11.

The odds calculating unit 303 judges whether the information collection has finished. If judging negatively, the odds calculating unit 303 repeats the above-described operations as to train codes of which the information has not been collected.

If judging affirmatively, regarding the train code whose class is "up-train" among all the train codes whose train boarding information and pieces of the car boarding information have been written in the odds information table T110, the odds calculating unit 303 calculates the point to be allocated to the user.

Firstly, the odds calculating unit 303 multiplies each total per-train passenger number by the train odds corresponding to the train code, and sums up the multiplication results. The odds calculating unit 303 divides the prestored train standard point (1000 points) by the sum, to obtain the quotient. The odds calculating unit 303 rounds off the quotient to a nearest integer. This derives the point per odds "1".

Further, the odds calculating unit 303 multiplies the obtained quotient by the train odds of each train to obtain the train point corresponding to the train odds of each train.

Next, the odds calculating unit 303 calculates the car point for each car. The odds calculating unit 303 obtains, from the odds information table T110, the car odds and the total per-car passenger number corresponding to the train code among all the train codes whose train boarding information and pieces of car boarding information have been written in the odds information table T110 this time. The odds calculating unit 303 calculates the train point corresponding to the obtained car odds in the following manner, using the car standard point. Firstly, the odds calculating unit 303 multiplies each total per-car passenger number by the car odds, and sums up the multiplication results. The odds calculating unit 303 divides the prestored train standard point by the sum, to obtain the quotient. The odds calculating unit 303 rounds off the quotient to a nearest integer. Further, the odds calculating unit 303 multiplies the quotient by the car odds of each car. These multiplication results are the train points respectively corresponding to the train odds. The odds calculating unit 303 performs these operations as to the train codes whose train boarding information and the pieces of the car boarding information have been written in the odds information table T110 , and writes the time obtained from the clock unit, the train code and the train point, and the car point into the point table T111. The odds calculating unit performs these operations as to all the extracted train codes.

Next, the odds calculating unit 303 calculates the point to be allocated to the user as to the train codes whose class is "down-train" among the train codes whose train boarding information and pieces of the car boarding information have been written in the odds information table T110, in the same manner as described above.

### <Specific Example of Point Determination>

A specific example of the points allocated to each car of the train 2a is described next, using the specific example of the odds calculation described above.

In this example, the total per-car passenger numbers respectively included in the pieces of the car boarding information respectively generated by the in-car apparatuses 20, 21, 22 and 23 are "2", "0", "1" and "3" in this order. The car odds are "4" , "3" "6" and "12" in this order.

The odds calculating unit 30 multiplies each per-car passenger numbers by the corresponding car odds, sums up the multiplication results, and obtains a sum result "50". Next, the odds calculating unit 303 divides the car standard point (100 points) by the sum result "50", and obtains a quotient "2". The odds calculating unit 303 multiplies the quotient "2" by the car odds of each car, and obtains the car points, namely "8", "6", "12" and "24".

### <Transmission of Odds Information to Portable Terminal Apparatus 60>

The odds calculating unit 303 receives a searching instruction and search information from the portable terminal apparatus 60 via the transmitting and receiving unit 307. At the station included in the search information, the odds calculating unit 303 obtains all the train codes of the trains that depart within a predetermined period (e.g. 30 minutes) from the current time, from the time table corresponding to the class, namely the up-train or the down-train, included in the received search information (For example, if the class is the up-train, the odds calculating unit 303 obtains the train codes from the time table T100).

The odds calculating unit 303 obtains only the train codes that are the same as the train codes obtained from the time table, among the train codes included in the odds information recentlywritten in the odds information table T110 stored in the odds information storing unit 310. Accordingly, the odds calculating unit 303 can obtain the odds information that satisfies the search condition, from the odds information storing unit 310.

The odds calculating unit 303 transmits the obtained odds information and an odds transmitting instruction that instructs to transmit the odds information to the portable terminal apparatus via the transmitting and receiving unit 307.

### (6) Point Transmitting Unit 305

The point transmitting unit 305 receives a requesting instruction to request the point transmission, the usage information, and the signature data corresponding to the usage information, from the portable terminal apparatus 60 via the transmitting and receiving unit 307.

The point transmitting unit 305 obtains the public key corresponding to the car code included in the usage information from the public key storing unit 302, and performs signature verification using the obtained public key, usage information and signature data.

If judging that the received usage information is valid by performing the signature verification, the point transmitting unit 305 judges whether an information group including a time later than and nearest to the time included in the received usage information, the train code, the train point and the car points exists in the point table T111.

If judging that the information group exists, the point transmitting unit 305 obtains the train point corresponding to the train code included in the car code included in the usage information, and further obtains, among the car points, the car point corresponding to the car number included in the received car code. Then, the point transmitting unit 305 transmits the obtained point and the point transmitting instruction to instruct to perform the point transmission to the portable terminal device 60 via the transmitting and receiving unit 307.

If judging that the information group does not exist, the point transmitting unit 305 judges that the points are not determined, and generates point absence information that indicates that the points do not exist. Then, the point transmitting unit 305 transmits the generated point absence information and an absence information transmitting instruction that instructs to transmit the point absence information to the portable terminal apparatus 60 via the transmitting and receiving unit 307.

If judging that the received usage information is invalid by performing the signature verification, the point transmitting unit 305 generates error information that indicates that the received usage information is invalid, and transmits the generated error information and an error information transmitting instruction that instructs to transmit the error information to the potable terminal apparatus 60 via the transmitting and receiving unit 307.

### (7) Wireless Unit 306

The wireless unit 306 receives the electrical signal from the antenna unit 308, demodulates the received electrical signal, and extracts the pulse signal wave from the demodulated signal. The wireless unit 306 decodes the extracted pulse signal wave to extract information.

The information to be extracted includes the train code, the per-train conversion information, the per-car conversion information, the train boarding information and the car boarding information.

Also, upon receiving the collecting instruction and the train code from the odds calculating unit 303 , the wireless unit 306 generates a pulse signal wave based on the received collecting instruction and the train code, and changes the amplitude of the carrier wave based on the generated pulse signal as the modulation signal. Then, the wireless unit 306 outputs the carrier wave, whose amplitude has been changed, to the antenna unit 308.

Also, upon receiving the notifying instruction and the train code from the odds calculating unit 303, the wireless unit 306 generates a pulse signal wave based on the received notifying instruction and the train code, and changes the amplitude of the carrier wave based on the generated pulse signal wave as a modulation sign. Then, the wireless unit 306 outputs the carrier wave, whose amplitude has been changed, to the antenna unit 308.

### (8) Transmitting and Receiving Unit 307

Upon receiving the searching instruction and the search information from the potable terminal apparatus 60 via the Internet, the transmitting and receiving unit 307 outputs the received searching instruction and the search information to the odds calculating unit 303.

Upon receiving the requesting instruction, the usage information and the signature data corresponding to the usage information, the transmitting and receiving unit 307 outputs the received requesting instruction, usage information and signature data to the point transmitting unit 305.

Also, upon receiving the displaying instruction and all the pieces of the display information written in the odds information table T110 from the odds calculating unit 303, the transmitting and receiving unit 307 transmits the received instruction and information to the information displaying apparatuses 40 ... 41 via the Internet.

Upon receiving the odds information satisfying the search condition and the odds transmitting instruction from the odds calculating unit 303, the transmitting and receiving unit transmits the received instruction and information to the portable terminal device 60 via the Internet.

Upon receiving the train point, the car point and the point transmitting instruction from the point transmitting unit 305, the transmitting and receiving unit 307 transmits the received points and the point transmitting instruction to the portable terminal apparatus 60 via the Internet.

Upon receiving the point absence information and the absence information transmitting instruction from the point transmitting unit 305, the transmitting and receiving unit 307 transmits the received point absence information and the absence information transmitting instruction via the Internet.

Upon receiving the error information and the error information transmitting instruction from the point transmitting unit 305, the transmitting and receiving unit 307 transmits the received error information and the error information transmitting instruction via the Internet.

### (9) Antenna Unit 308

Upon receiving the carrier wave, whose amplitude has been changed, from the wireless unit 306, the antenna unit 308 transmits the received carrier wave as a radio wave in the air.

The antenna unit 308 also receives the radio wave, converts the received radio wave to an electrical signal, and outputs the electrical signal to the wireless unit 306.

### 1.5 Structure of Information Displaying Apparatus 40

The structures of the information displaying apparatuses 40 ... 41 are the same, and therefore only the structure of the information displaying apparatus 40 is described next.

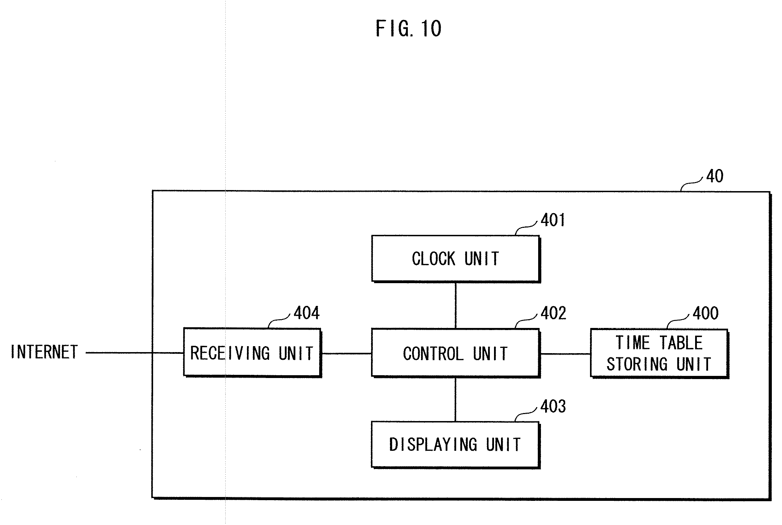

As FIG.10 shows, the information displaying apparatus 40 includes a time table storing unit 400, a clock unit 401, a control unit 402, a displaying unit 403 and a receiving unit 404.

The information displaying apparatus 40 is, more specifically, a computer system including a microprocessor, a ROM, a RAM, a hard disk unit, a display unit, a modem, and so on. The ROM or the hard disk unit stores a computer program. The microprocessor operates in accordance with the computer program, and accordingly, the information displaying apparatus 40 can fulfill the function thereof.

### (1)Time Table Storing Unit 400

The time table storing unit 400 is the same as the time table storing unit 300 included in the managing apparatus 30. Therefore, its explanation is omitted here.

### (2) Clock Unit 401

The clock unit 401 obtains a current time.

### (3) Control Unit 402

The control unit 402 receives the displaying instruction and one or more pieces of the display information which have been written in the odds information table T110 by the odds calculating unit 303 included in the managing apparatus 30.

Using the time table stored in the time table storing unit 400, the control unit 402 extracts, among the received one or more pieces of the display information, all the pieces of the display information that corresponds to the train codes of the trains that are going to depart the station 3b equipped with the information displaying apparatus 40. The control unit 402 outputs all the pieces of the extracted display information to the displaying unit 403.

### (4) Displaying Unit 403

The displaying unit 403 includes a display or the like, and displays the displaying information received from the control unit 402.

### (5) Receiving Unit 404

Upon receiving the displaying information and the one or more pieces of the displaying information from the managing apparatus 30 via the Internet, the receiving unit 404 outputs the received instruction and information to the control unit 402.

### 1.6 Structure of Recording Medium 50

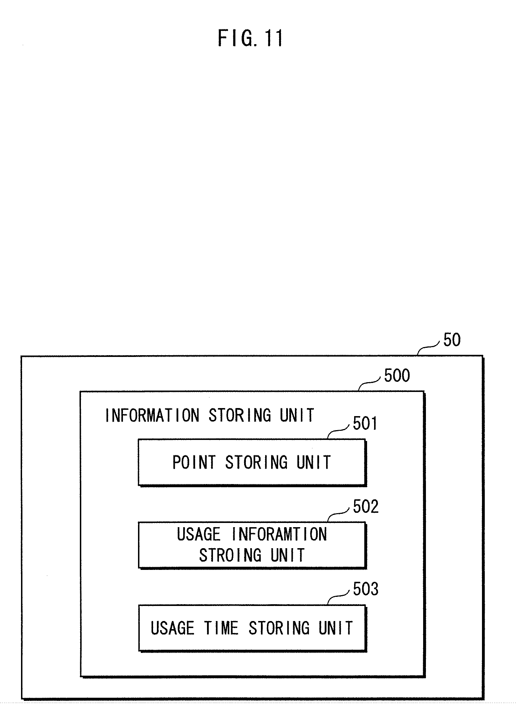

The recording medium 50 has a tamper-resistant characteristic. As FIG.11 shows, the recording medium 50 includes an information storing unit 500, which includes a point storing unit 501, a usage information storing unit 502 and a usage time storing unit 503.

The recording medium 50 is, more specifically, a computer system that includes a microprocessor, a ROM, a RAM and so on. The ROM stores a computer program. The microprocessor operates in accordance with the computer program, and accordingly, the recording medium 50 can fulfill the function thereof.

### (1) Point Storing Unit 501

The point storing unit 501 includes an area for storing the total point, which is an accumulation of the points distributed by the managing apparatus 30.

The initial value of the total point stored in the point storing unit 501 is "0".

### (2) Usage Information Storing Unit 502

The usage information storing unit 502 includes an area for storing an information group, including the usage information received from the in-car apparatus 20, signature data for the usage information and a deletion flag indicating whether to delete the usage information.

Here, the deletion flag is, for instance, a value "0" or a value "1". The value "0" indicates that the usage information is not to be deleted, and the value "1" indicates that the usage information is to be deleted. The initial value of the deletion flag is "0".

### (3) Usage Time Storing Unit 503

The usage time storing unit 503 includes an area for storing the latest time when the user uses the train.

### 1.7 Structure of Portable Terminal Apparatus 60

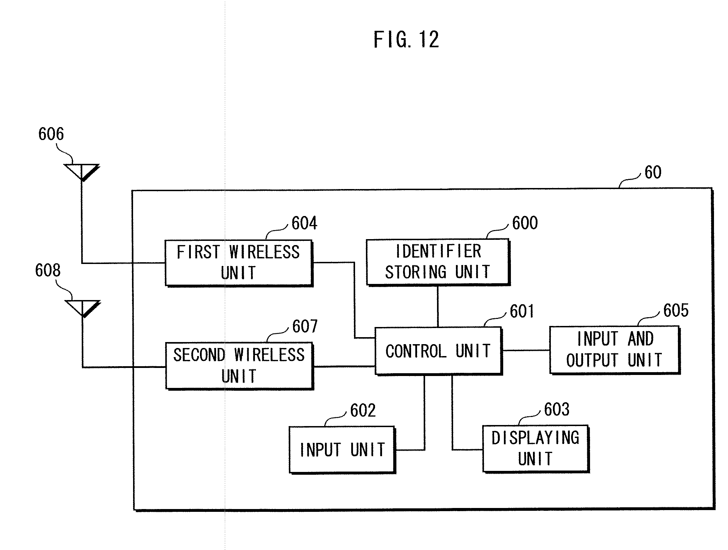

As FIG.12 shows, the portable terminal apparatus 60 includes an identifier storing unit 600, a control unit 601, an input unit 602, a displaying unit 603, a first wireless unit 604, an input and output unit 605, a first antenna unit 606, a second wireless unit 607 and a second antenna unit 608.

The potable terminal apparatus is, more specifically, a computer system including a microprocessor, a ROM, a RAM, a hard disk unit, a display unit, a modem and so on. The ROM or the hard disk unit stores a computer program. The microprocessor operates in accordance with the computer program, and accordingly, the portable terminal apparatus 60 can fulfill the function thereof.

### (1) Identifier Storing Unit 600

The identifier storing unit 600 stores a terminal identifier for identifying the portable terminal apparatus 60.

### (2) Control Unit 601

The control unit 601 prestores a standard period (e.g. 30 minutes), which is used as a standard for determining whether to write the usage information and the signature date received from the in-car apparatus 20 into the recording medium 50. The control unit 601 also prestores a transmitting period (e.g. 3 minutes) indicating a period in which the terminal identifier and the information receiving instruction are transmitted to the in-car apparatus 30.

Upon receiving the searching instruction for searching the odds information and the search information from the input unit 602, the control unit 6 01 transmits a searching instruction and the received search information to the managing apparatus 30 via the first wireless unit 604.

Upon receiving the odds transmitting instruction and the odds information obtained by the managing apparatus 30 from the managing apparatus 30 via the first wireless unit 604, the control unit 601 transmits the received odds information to the displaying unit 603.

Upon receiving a pair of the usage information and the signature data and the usage information distributing instruction, the control unit 601 compares the time included in the received usage information and the time stored in the usage time storing unit 503 included in the recording medium 50, and judges whether the time included in the received usage information is within the standard period. If judging affirmatively, the control unit 601 discards the received usage information and signature data. If judging negatively, the control unit 601 writes the received usage information and signature data, and a deletion flag "0" into the usage information storing unit 502 included in the recording medium 50 via the input and output unit 605, and updates the time stored in the usage time storing unit 503 to the time included in the usage information. Next, the control unit 601 reads the terminal identifier stored in the identifier storing unit 600, and performs transmission of the read terminal identifier and the information receiving instruction to the in-car apparatus 20 via the second wireless unit 607 for a prestored transmitting period. Further, upon receiving the response instruction and the terminal identifier from the in-car apparatus 20 via the second wireless unit 607, the control unit 601 judges whether the received terminal identifier is the same as the read terminal identifier. If judging that they are not the same, the control unit 601 judges whether the time is within the transmitting period. If judging that the time is within the transmitting period, the control unit 601 transmits the read terminal identifier and the information receiving instruction to the in-car apparatus 20 again. If judging that the time is not within the transmitting period, the control unit 601 finishes the transmission of the read terminal identifier and the information receiving instruction. Also, if judging that the terminal identifier received from the in-car apparatus 20 and the read terminal identifier are the same, the control unit 601 finishes the transmission of the read terminal identifier and information receiving instruction.

Upon receiving a requesting instruction for requesting the point distribution from the input unit 602, the control unit 601 obtains a pair of a piece of the usage information and a piece of signature data, which are stored in the usage information storing unit 502, from the recording medium 50 via the input and output unit 605. The control unit 601 transmits the obtained pair and a point distribution instruction to the managing apparatus 30 via the first wireless unit 604. Upon receiving the pair of the instruction and the information from the managing apparatus 30 via the first wireless unit 604, the control unit 601 judges whether the received instruction is the point transmitting instruction. If judging that the received instruction is the point transmitting instruction, the control unit 601 adds the received point to the total point stored in the point storing unit 501 included in the recording medium 50 to update the total point, and updates the deletion flag corresponding to the transmitted usage information and signature data from "0" to "1".

If judging negatively, the control unit 601 judges whether the received instruction is the error information transmitting instruction. If judging that the instruction is the error information transmitting instruction, the control unit 601 outputs the received error information to the displaying unit 603, and updates the deletion flag corresponding to the transmitted usage information and signature data from "0" to "1". If judging that the received instruction is not the error information transmitting instruction but the absence information transmitting instruction, the control unit 601 outputs the received point absence information to the displaying unit 603.

The control unit 601 judges whether the usage information and the signature data that have not transmitted yet exist in the usage information storing unit 502. If judging that they exist, the control unit 601 obtains one pair of a piece of non-transmitted usage information and a piece of non-transmitted signature data, and performs the above-described operations. If judging that the non-transmitted usage information and signature data do not exist in the usage information storing unit 502, the control unit 601 deletes all the pairs whose deletion flag is "1", among the pairs including the usage information and the signature data stored in the usage information storing unit 502 and the deletion flag. In other words, the usage information and the signature data with the deletion flag "0" are not to be deleted.

### (3) Input Unit 602

Upon receiving the searching instruction for searching the odds information and the search information from the user, the input unit 602 outputs the received searching instruction and the search information to the control unit 601

Upon receiving the requesting instruction for requesting the point distribution from the user, the input unit 602 outputs the requesting instruction to the control unit 601.

### (4) Displaying Unit 603

Upon receiving the odds information from the control unit 601, the displaying unit 603 displays the received odds information.

Upon receiving the error information from the control unit 601, the displaying unit 603 displays an error message representing that the usage information and the signature data transmitted to the managing apparatus 30 are invalid.

Upon receiving the point absence information from the control unit 601, the displaying unit 603 displays an undetermined point message representing that the point corresponding to the usage information transmitted to the managing apparatus 30 has not been determined yet.

### (5) The First Wireless Unit 604

The first wireless unit 604 receives the electrical signal from the first antenna unit 606, demodulates the received electrical signal, and extracts a pulse signal wave from the demodulated signal. The first wireless unit 604 decodes the extracted pulse signal wave to extract an instruction and information, and outputs the extracted instruction and information to the control unit 601.

The instruction to be extracted includes the odds transmitting instruction, the point transmitting instruction, the error information transmitting instruction and the absence information transmitting instruction.

If the extracted instruction is the odds transmitting instruction, the first wireless unit 604 further extracts the odds information obtained by the managing apparatus 30. If the extracted instruction is the point transmitting instruction, the first wireless unit 604 further extracts the train point and the car point. If the extracted instruction is the error information transmitting instruction, the first wireless unit 604 further extracts the error information. If the extracted instruction is the absence information transmitting instruction, the first wireless unit 604 further extracts the point absence information.

Upon receiving the searching instruction and the search information from the control unit 601, the first wireless unit 604 generates the pulse signal wave based on the received searching instruction and the search information, and changes the amplitude of the carrier wave based on the generated pulse signal wave as a modulation sign. Then, the first wireless unit 604 outputs the carrier wave, whose amplitude has been changed, to the first antenna unit 606.

Upon receiving an information group of the requesting instruction, the usage information and the signature data from the control unit 601, the first wireless unit 604 generates the pulse signal wave based on the received group of the requesting instruction, the usage information and the signature data, and changes the amplitude of the carrier wave based on the generated pulse signal wave as a modulation sign. Then, the first wireless unit 604 outputs the carrier wave, whose amplitude has been changed, to the first antenna unit 606.

### (6) The second Wireless Unit 607

The second wireless unit607 receives the electrical signal from the second antenna unit 608, demodulates the received electrical signal and extracts a pulse signal wave from the demodulated electrical signal. The second wireless unit 607 decodes the extracted pulse signal wave, extracts instructions and information, and outputs the extracted instructions and information to the control unit 601.

The instructions to be extracted include the usage information distributing instruction, and the response instruction.

If the extracted instruction is the usage information distributing instruction, the second wireless unit 607 further extracts a pair of the usage information and the signature data. If the extracted instruction is the response instruction, the second wireless unit 607 further extracts the terminal identifier.

Upon receiving the information receiving instruction and the terminal identifier from the control unit 601, the second wireless unit 607 generates a pulse signal wave based on the received information receiving instruction and terminal identifier, and changes the amplitude of the carrier wave based on the generated pulse signal wave as a modulation sign. Then the second wireless unit 607 outputs the carrier wave, whose amplitude has been changed, to the second antenna unit 608.

### (7) Input and Output Unit 605

The input and output unit 605 performs input and output of information between the control unit 601 and the recording medium 50.

### (8) The First Antenna Unit 606 and The Second Antenna Unit 608

Upon receiving the carrier wave, whose amplitude has been changed, from the first wireless unit 604, the first antenna unit 606 transmits the received carrier wave in the air.

The first antenna unit 606 also receives the radio wave, converts the received radio wave to an electrical signal, and outputs the electrical signal to the first wireless unit 604.

Upon receiving the carrier wave, whose amplitude has been changed, from the second wireless unit 607, the second antenna unit 608 transmits the received carrier wave in the air.

The second antenna unit 608 also receives the radio wave, converts the received radio wave to an electrical signal, and outputs the electrical signal to the second wireless unit 607.

### 1.8 Operations for Information Collection

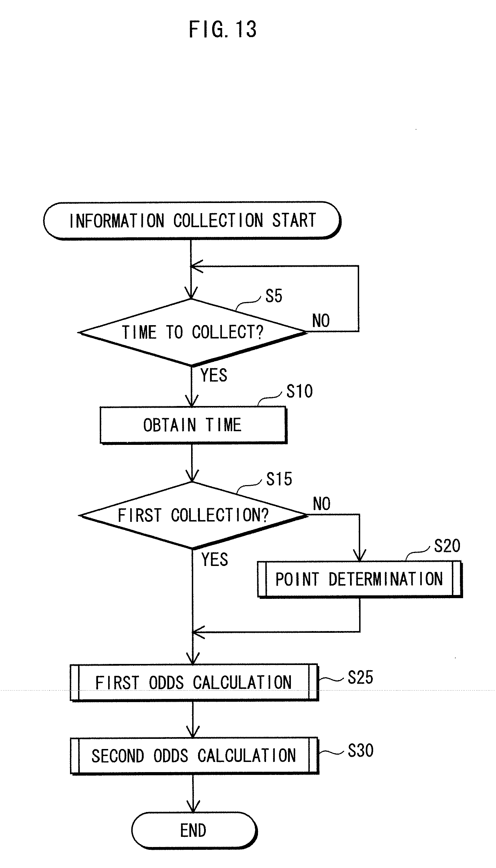

The following describes information collection, which is performed for calculating the odds, with reference to a flowchart shown in FIG.13.

The odds calculating unit 30 3 included in the managing apparatus 30 monitors the time obtained by the clock unit 304, and judges whether the time is when the odds should be calculated (Step S5). If judging affirmatively ("YES" in Step S5), the odds calculating unit 303 obtains the time from the clock unit 304 (Step S10). If judging negatively ("NO" in Step S5), the odds calculating unit 303 monitors the time obtained by the clock unit 304.

The odds calculating unit 303 judges whether the odds calculation that is going to be performed is the first odds calculation (Step S15)

If judging affirmatively ("YES" in Step S15), the odds calculating unit 303 collects the per-train conversion information and the per-car conversion information from each collecting apparatus set up in each collection-target train, and performs the first odds calculation (Step S25), and further performs the second odds calculation (Step S30). If judging negatively, the odds calculating unit 303 collects the total per-train passenger number and the total per-car passenger number, which have been counted during the storing cycle, from each collecting apparatus set up in each collection-target train, and performs the point determination using the collecting information (Step S20). After that, the odds calculating unit performs the first odds calculation (Step S25), and then performs the second odds calculation (Step S30).

### 1.9 Point Determination

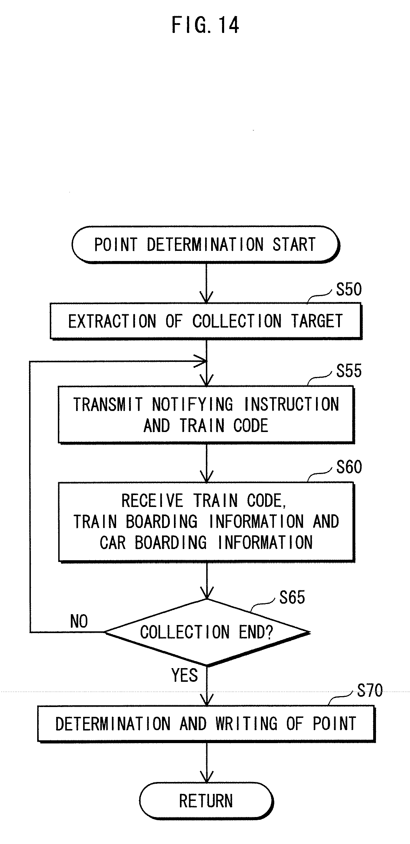

The following describes the point determination shown in FIG. 13, with reference to a flowchart shown in FIG.14.

The odds calculating unit 303 extracts all the train codes of the trains whose odds calculation was performed last time from the odds information table T110 (Step S50). In the following explanation of the flow, it is assumed that the trains corresponding to the train codes extracted from the odds information table T110 are the trains 2a ... 2b.

The odds calculating unit 303 transmits the notifying instruction and the extracted train code to the collecting apparatus 10 set up in the train corresponding to the train code via the wireless unit 306 (Step S55). Here, the collecting apparatus 10 that receives the notifying instruction and the train code performs boarding information collection, which is described later.

The odds calculating unit 303 receives the train code, the train boarding information and the car boarding information for each car of the train from the collecting apparatus 10 via the wireless unit 306, and writes the received train code, train boarding information and each car boarding information into the corresponding region of the odds information table T110 (Step S60). The odds calculating unit 303 judges whether the train code, the train boarding information and the car boarding information have been received from all the trains corresponding to the train codes, namely the collecting apparatuses 10 ... 11 (Step S65). If judging that the train code, the train boarding information and the car boarding information have not been received ("NO" in Step S65), the odds calculating unit 303 performs the operations performed in Step S55 and later again for the collecting apparatus of the train whose train code, train boarding information and the car boarding information have not been received.

If judging that the train code, the train boarding information and the car boarding information have been received ("YES" in Step S65), the odds calculating unit 303 calculates the train points and the car points of cars of each train whose train code is "up-train", among all the trains of which the train boarding information and each car boarding information have been written in the odds information table T110 this time, and determines the train point and the car point to be allocated to the user. Then, the odds calculating unit 303 writes the time obtained in Step S10 in FIG.13, the train code, and the train point and car points determined for each train code, into the point table T111. Next, the odds calculating unit 303 calculates the train points and the car points of the cars of each train whose train code is "down-train", among all the trains of which the train boarding information and each car boarding information have been written in the odds information table T110 this time, and determines the train point and the car point to be allocated to the user. Then, the odds calculating unit 303 writes the time obtained in Step S10 in FIG.13, the train code, and the train point and car points determined for each train code, into the point table T111 (Step S70).

### 1.10 Operations for Boarding Information Collection

The following explains, with reference to the flowchart shown in FIG.14, the operations for the boarding information collection performed by each of the collecting apparatuses 10 ... 11 upon receiving the notifying instruction and the train code from the managing apparatus 30. In this explanation, the collecting apparatus 10 is taken as an example.

Upon receiving the notifying instruction and the train code from the managing apparatus 30 via the wireless unit 102 (Step S100), the control unit 101 included in the collecting apparatus 10 judges whether the received train code is the same as the train code stored in the train code storing unit 100 (Step S105).

If judging negatively ("NO" in Step S105), the control unit 101 finishes the operation.

If judging affirmatively ("YES" in Step S105), the control unit 101 sequentially performs the passenger number collection for each of the in-car apparatuses 20 ... 23, and collects the car boarding information from each in-car apparatus (Step S110).

Upon collecting the car boarding information from all the in-car apparatuses, the control unit 101 sums up the total per-car passenger number included in each piece of the collected car boarding information to obtain the total per-train passenger number, and generates the train boarding information including the train code and the calculated total per-train passenger number (Step S115). The control unit 101 transmits the generated train boarding information, each piece of the collected boarding information and the train code to the managing apparatus 30 via the wireless unit 102 (Step S120). 1.11 Operations for Passenger Number Collection

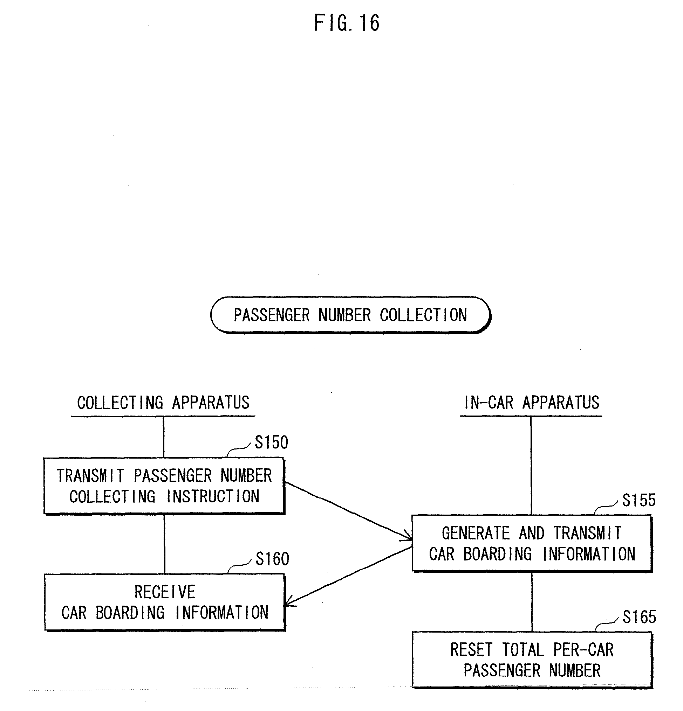

The following describes the passenger number collection shown in FIG.14, with reference to the flowchart shown in FIG.16.

The control unit 101 included in the collecting apparatus 10 transmits a passenger number notifying instruction to the in-car apparatus 20 via the input and output unit 103 (Step S150).

Upon receiving the passenger number notifying instruction from the collecting apparatus 10 via the input and output unit 208, the measuring unit 203 included in the in-car apparatus 20 reads the total passenger number stored in the passenger number storing unit 202, and further reads the train code from the train code storing unit 200. Then, the measuring unit 203 generates the car boarding information including the read total per-car passenger number and train code, transmits the generated car boarding information to the collecting apparatus 10 via the input and output unit 208 (Step S155), and initializes the total per-car passenger number stored in the passenger number storing unit 202 (Step S165).

The control unit 101 included in the collecting apparatus 10 receives the car boarding information from the in-car apparatus 20 via the input and output unit 103, and temporally stores the received car boarding information (Step S160).

The control unit 101 sequentially performs the above-described operations for each of the in-car apparatuses 21 ... 23, and the in-car apparatuses 21... 23 perform the same operations as the in-car apparatus 20 performs.

### 1.12 The First Odds Calculation

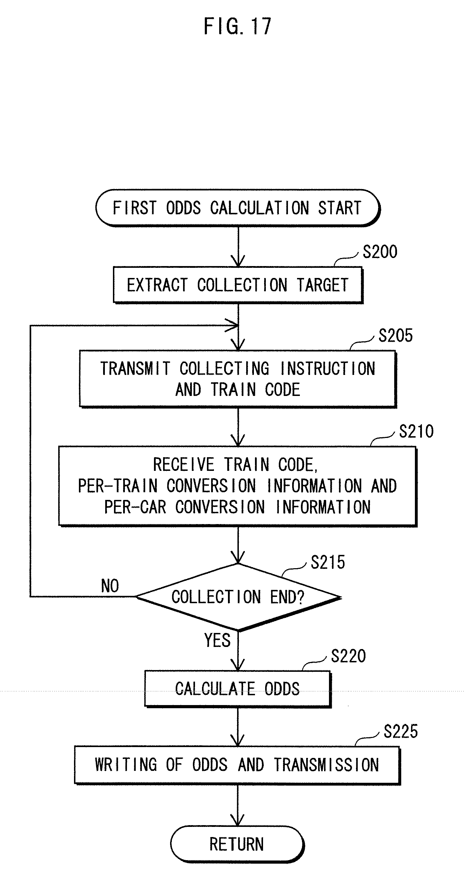

The following describes the first odds calculation shown in FIG.13, with reference to a flowchart shown in FIG.17.

The odds calculating apparatus 393 extracts, from the time table T100, the train codes of the trains currently in operation and the trains which are going to be operated within 10 minutes from the current time, using the time obtained in Step S10 in FIG.13 (Step S200). In the following explanation, it is assumed that the trains corresponding to the extracted train codes are the trains 2a ... 2b.

The odds calculating unit 303 transmits the collecting instruction and the extracted train code to the collecting apparatus 10 set up in the train corresponding to the train code, via the wireless unit 306 (Step S205). At this moment, the collecting apparatus 10 performs conversion information collection, which is described later.

The odds calculating unit 303 receives the train code, the per-train conversion information and the per-car conversion information of each car of the train from the collecting apparatus 10 via the wireless unit 306, and temporally stores the received train code, per-train conversion information, and each piece of the per-car conversion information (Step S210).

The odds calculating unit 303 judges whether the train code, the per-train conversion information and the each piece of the per-car conversation information have been received from the trains respectively corresponding to all the train codes extracted in Step S200, namely the collecting apparatuses 10 ... 11 (Step S215). If judging negatively ("NO" in Step S215), the odds calculating unit 303 performs the operations in Step S205 and later again for each of the collecting apparatuses that have not received the train code, the per-train conversion information and each piece of the per-car conversion information.

If judging affirmatively ("YES" in Step S215), the odds calculating unit 303 calculates the train odds and the car odds of each car, for each collection-target train code (Step S220).

The odds calculating unit 303 writes the obtained time, the train code, the train odds and the car odds of each car corresponding to the train code, into the odds information table T110. Further, the odds calculating unit 303 transmits the displaying instruction and all the information groups of the time, the train code, the train odds and the car odds to the information displaying apparatuses 40 ... 41 via the transmitting and receiving unit 307 (Step S225).

Note that the second odds calculation is to perform the above-described operations using the time table T101. Therefore, the description thereof is omitted here.

### 1.13 Operations for Conversion Information Collection

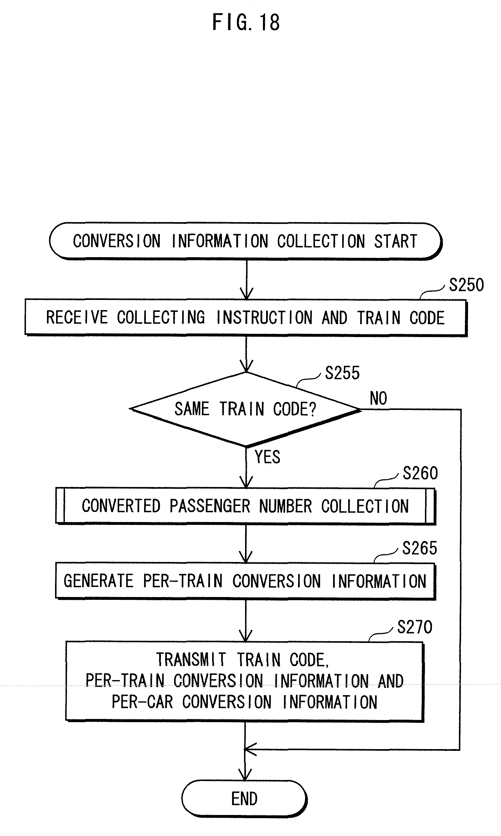

The following describes the conversion information collection performed by each of the collecting apparatuses 10...11 upon receiving the collecting instruction and the train code from the managing apparatus 30, with reference to a flowchart shown in FIG.18. In the following explanation, the collecting apparatus 10 is taken as an example.

Upon receiving the collecting instruction and the train code from the managing apparatus 30 via the wireless unit 102 (Step S250), the control unit 101 of the collecting apparatus 10 judges whether the received train code is the same as the train code stored in the train code storing unit 100 (Step S255).

If judging negatively ("NO" in Step S255), the control unit stops the operation.

If judging affirmatively ("YES" in Step S255), the control unit 101 sequentially performs the converted passenger number collection for each of the in-car apparatuses 20 ... 23 to collect the per-car conversion information from each of the in-car apparatuses (Step S260).

Upon receiving the per-car conversion information from all the in-car apparatuses, the control unit 101 sums up the per-car converted passenger number included in each par-car conversion information to obtain the per-train converted passenger number, and generates the per-train conversion information including the train code and the calculated per-train converted passenger number (Step S265). The control unit 101 transmits the generated per-train conversion information, each of the collected per-car conversion information and the train code to the managing apparatus 30 via the wireless unit 102 by wireless (Step S270).

### 1.14 Operations for Converted Passenger Number Collection

The following describes the passenger number collection shown in FIG.18, with reference to a flowchart shown in FIG.10.

The control unit 101 included in the collecting apparatus 10 transmits the measuring instruction to the in-car apparatus 20 via the input and output unit 103 (Step S300).

Upon receiving the measuring instruction from the collecting apparatus 10 via the input and output unit 208, the measuring unit 203 included in the in-car apparatus 20 obtains a measured weight by measuring the weight of the car, and calculates the total weight of the passengers in the car by subtracting the prestored weight of the car from the obtained measured weight. The measuring unit 203 reads the car code stored in the car code storing unit 200, generates the per-car conversion information including the read car code and the obtained per-car converted passenger number, and transmits the generated per-car conversion information to the collecting apparatus 10 via the input and output unit 208 (Step S305).

The control unit included in the collecting apparatus 10 receives the per-car conversion information from the in-car apparatus 20 via the input and output unit 103, and temporally stores the received per-car conversion information (Step S310).

The control unit 101 sequentially performs the above-described operations for each of the in-car apparatuses 21 ... 23, and each of the in-car apparatuses 21 ... 23 performs the same operations as the in-car apparatus 20 performs.

### 1.15 Operations for Usage Information Distribution

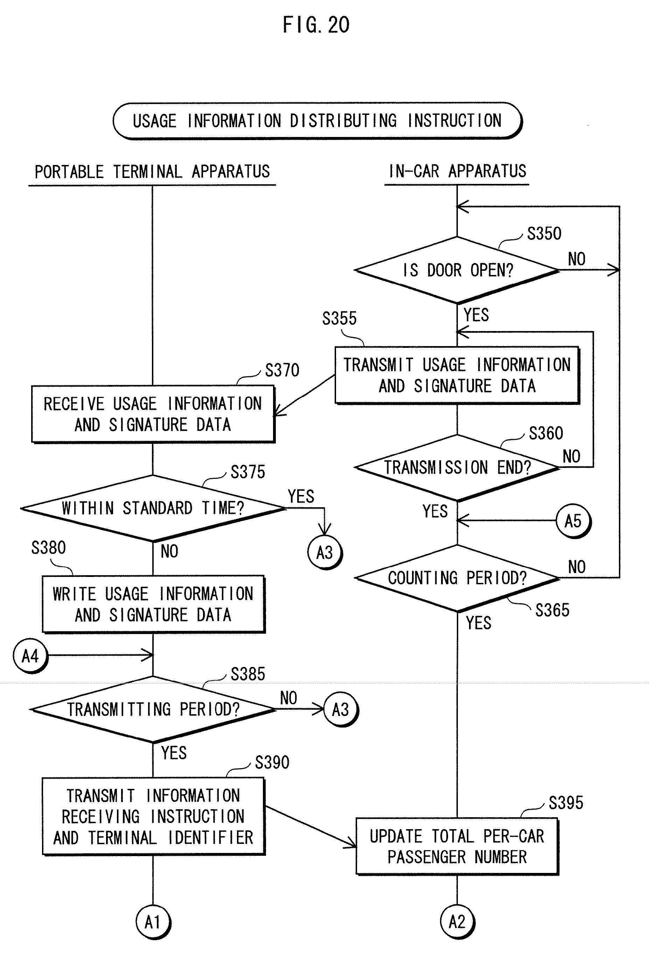

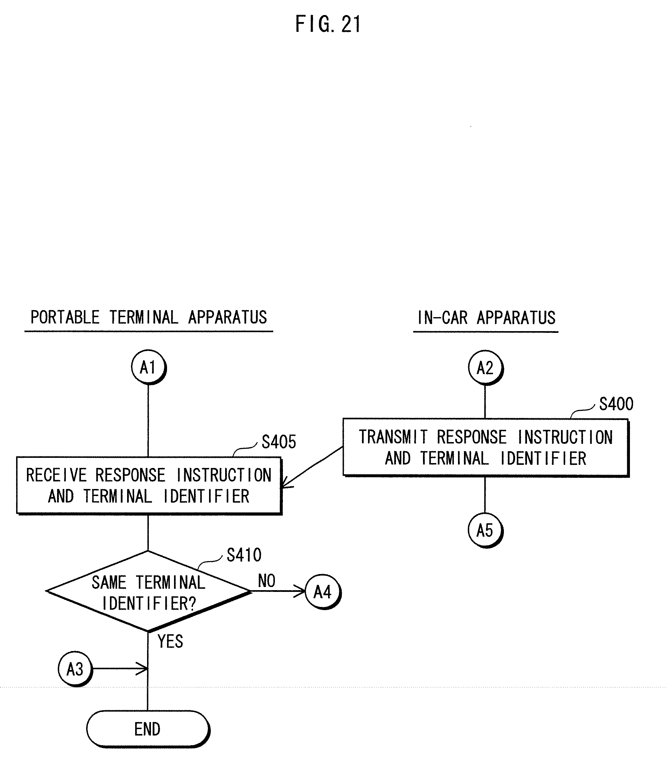

The following describes the distribution of the usage information from the in-car apparatus 20 to the portable terminal apparatus 60, with reference to the flowcharts shown in FIG.20 and FIG.21.

The distribution of the usage information from each of the in-car apparatuses 21 ... 27 to the portable terminal apparatus 60 is the same as the following.

Upon detecting that the door is opened ("YES" in Step S350), the open and close detecting unit 205 included in the in-car apparatus 20 outputs the open status instruction to the distributing unit 204. Upon receiving the open status instruction from the open and close detecting unit 205, the distributing unit 204 reads the car code from the car code storing unit 200, the time from the clock unit 206, and the private key from the private key storing unit 201, and generates the usage information including the read car code and time. Further, using the read private key, the distributing unit 204 performs the digital signature algorithm on the generated usage information to generate the signature data. The distributing unit 204 outputs the pair of the generated usage information and signature data, the usage information distributing instruction that indicates the distribution of the usage information and the distribution start instruction that indicates the distribution start of the usage information to the wireless unit 207. Upon receiving the pair of the usage information and signature data, the usage information distributing instruction and the distribution start instruction from the distributing unit 204, the wireless unit 207 transmits the received pair of the usage information and the signature data, and usage information distributing instruction to the portable terminal apparatus 60 via the antenna unit 209 by wireless (Step S355).

Upon receiving that the door is closed, the open and close detecting unit 205 outputs the close status instruction to the distributing unit 204. Upon receiving the close status instruction from the open and close detecting unit 205, the distributing unit 204 outputs the distribution end instruction to the wireless unit 207. Upon receiving the distribution end instruction, the wireless unit 207 judges that the transmission should be finished, and finishes the transmission ("YES" in Step S360). Then, the distributing unit 204 goes into a standby status for receiving the information receiving instruction and the terminal identifier during the counting period ("YES" in Step S365). When the counting period is over ("NO" in Step S365), the processing by the distributing unit 204 returns to Step S350.

In a period between the reception of the distribution start instruction and the reception of the distribution end instruction, the wireless unit 207 judges that the transmission should not be finished ("NO" in Step S360). The wireless unit 207 transmits the pair of the usage information and the signature data and usage information distributing instruction in Step S355.

Upon receiving the pair of the usage information and the signature data and the usage information distributing instruction from the in-car apparatus 20 (Step S370), the control unit 601 included in the portable terminal apparatus 60 compares the time included in the received usage information and the time stored in the usage time storing unit 503 included in the recording medium 50, and judges whether the time included in the received usage information is within the standard period (Step S375). If judging affirmatively ("YES" in Step S375), the control unit 601 discards the received usage information and signature data, and finishes the processing. If judging negatively ("NO" in Step S375), the control unit 601 writes the received usage information, signature data and the deletion flag "0" into the usage information storing unit 502 included in the recording medium 50 via the input and output unit 605, and updates the time stored in the usage data and time storing unit 503 to the time included in the usage information (Step S380).

If judging that the time is within the prestored transmitting period ("YES" in Step S385), the control unit 601 reads the terminal identifier stored in the identifier storing unit 600, and transmits the read terminal identifier and information receiving instruction to the in-car apparatus 20 via the second wireless unit 607 (Step S390). If judging that the transmission period is over ("NO" in Step S385), the control unit 601 finishes the processing.

If judging that the time is within the prestored counting period ("YES" in Step S365), upon receiving the information receiving instruction and the terminal identifier from the potable terminal apparatus 60 via the wireless unit 207, the distributing unit 204 included in the in-car apparatus 20 adds "1" to the total per-car passenger number stored in the passenger number storing unit 202, and updates the contents of the passenger number storing unit 202 to the result of the addition (Step 5395). The distributing unit 204 also transmits the response instruction and the received terminal identifier to the portable terminal apparatus 60 via the wireless unit 207 (Step S400).

Upon receiving the response instruction and the terminal identifier from the in-car apparatus 20 via the wireless unit 207 (Step S405), the control unit 601 included in the portable terminal apparatus 60 judges whether the received terminal identifier is the same as the read terminal identifier (Step S410). If judging negatively ("NO" in Step S410), the processing returns to Step S385 and the same operations are repeated. If judging affirmatively, the control unit 601 finishes the processing.

### 1.16 Overview of Point Distribution

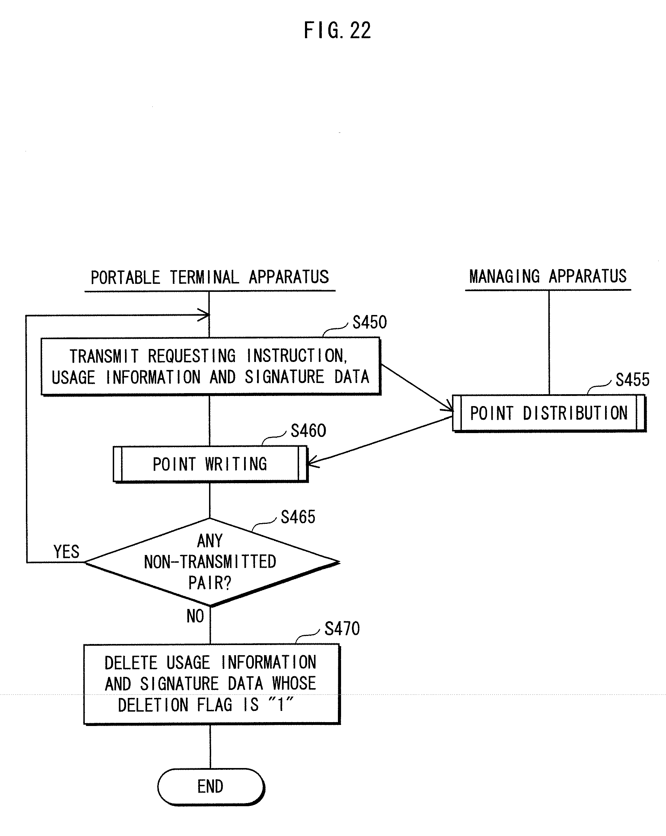

The following schematically explains the point distribution performed by the portable terminal apparatus 60 and the managing apparatus 30, with reference to a flowchart shown in FIG.22.

Upon receiving a point distribution request from the input unit 602, the control unit 601 included in the portable terminal apparatus 60 obtains one pair of the usage information stored in the usage information storing unit 502 and the signature data from the recording medium 50 via the input unit 605, and transmits the obtained pair and a requesting instruction to the managing apparatus 30 via the first wireless unit 604 (Step S450).

Upon receiving the requesting instruction and the pair of usage information and the signature data from the portable terminal apparatus 60 via the transmitting and receiving unit 307, the point transmitting unit 305 included in the managing apparatus 30 performs the point distribution, and transmits the instruction and information, which are obtained as the processing result, to the portable terminal apparatus 60 (Step S455).

Upon receiving the instruction and information as the processing result from the managing apparatus 30 via the first wireless unit 604, the portable terminal apparatus 60 performs point writing using the received instruction and information (Step S460). After finishing the point writing, the portable terminal apparatus 60 judges whether there is any pair of the usage information and the signature data that has not been transmitted yet. If judging affirmatively ("YES" in Step S465), the portable terminal apparatus 60 returns to Step S450 and repeats the operations.

If judging negatively ("NO" in Step S465), the portable terminal apparatus 60 deletes all the usage information and the signature data whose deletion flag is "1" from the usage information storing unit 502 (Step S470).

### 1.17 Operations for Point Distribution

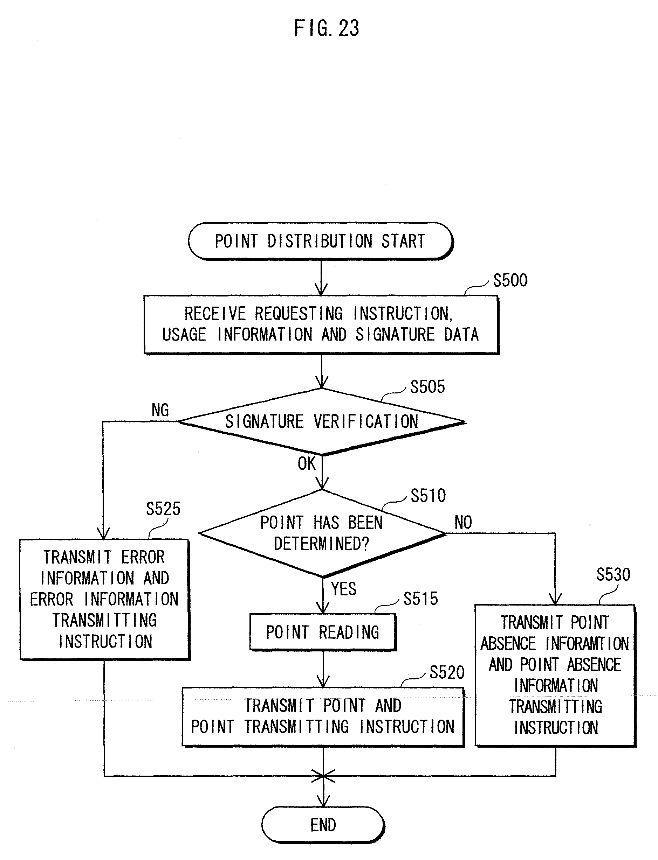

The following describes the point distribution shown in FIG. 22, with reference to a flowchart shown in FIG.23.

The point transmitting unit 305 included in the managing apparatus 30 receives the requesting instruction, the usage information, and the signature data corresponding to the usage information from the portable terminal apparatus 60 via the transmitting and receiving unit 307 (Step S500).

The point transmitting unit 305 obtains the public key corresponding to the car code included in the usage information from the public key storing unit 302, and performs the signature verification using the obtained public key and the usage information (Step S505).

If judging that the received usage information is valid by performing the signature verification ("OK" in Step S505), the point transmitting unit 305 judges whether the point corresponding to the received usage information has been determined (Step S510). In other words, the point transmitting unit 305 judges whether an information group including the time that is later than and nearest to the time included in the received usage information, the train code, the train point and each car point exists in the point table T111.

If judging that the point has been determined ("YES" in Step S510), the point transmitting unit 305 reads the train point and the car point using the car code included in the received usage information (Step S515), and transmits the read train point, car point, and the point transmitting instruction to the portable terminal apparatus 60 via the transmitting and receiving unit 307 (Step S520).

If judging that the received usage information is invalid by performing the signature verification ("NG" in Step S505), the point transmitting unit 305 generates the error information, and transmits the generated error information and the error information transmitting instruction to the portable terminal apparatus via the transmitting and receiving unit 307 (Step S525).

If judging that the point has not been determined ("NO" in Step S510), the point transmitting unit 305 generates point absence information, and transmits the generated point absence information and the absence information transmitting instruction to the portable terminal apparatus 60 via the transmitting and receiving unit 307 (Step S530).

### 1.18 Point Writing

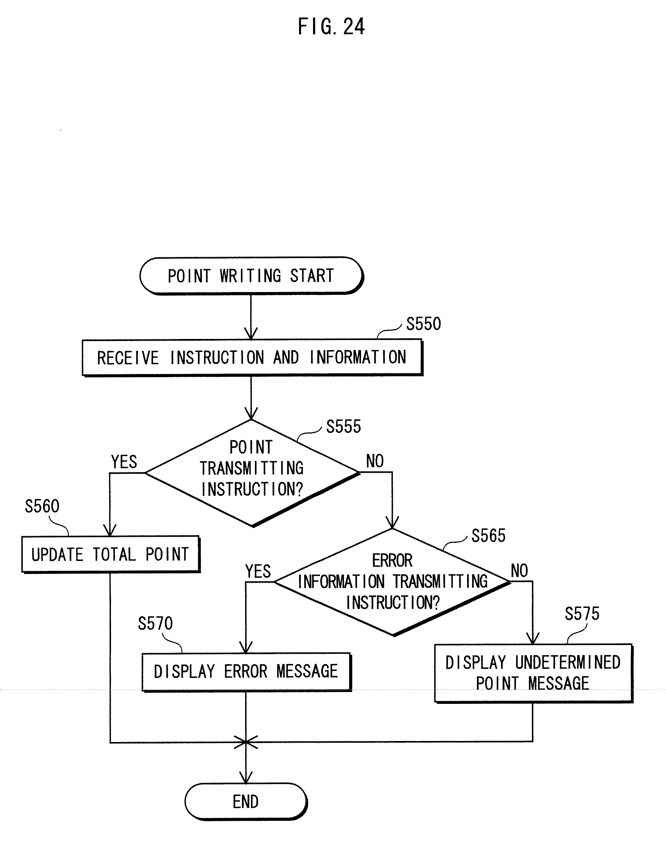

The following describes the point writing shown in FIG.22, with reference to a flowchart shown in FIG.24.

Upon receiving the pair of the instruction and the information from the managing apparatus 30 via the first wireless unit 604 (Step S550), the control unit 601 of the portable terminal apparatus 60 judges whether the received instruction is the point transmitting instruction (Step S555). If judging that the received instruction is the point transmitting instruction ("YES" in Step S555), the control unit 601 adds each of the received point to the total point stored in the point storing unit 501 included in the recording medium 50 to update the total point. Further, the control unit 601 updates the deletion flag, which corresponds to the usage information and the signature data that have been transmitted in Step S450 shown in FIG.22, from "0" to "1" (Step S560).

If judging that the received instruction is not the point transmitting instruction ("NO" in Step S555), the control unit 601 judges whether the received information is the error information transmitting instruction (Step S565).

If judging that the received instruction is the error information transmitting instruction ("YES" in Step S565), the control unit 601 outputs the received error information to the displaying unit 603. Upon receiving the error information from the control unit 501, the displaying unit 601 displays an error message (Step S570).

If judging that the received instruction is not the error information transmitting instruction, in other words, if judging that the received instruction is the absence information transmitting instruction ("NO" in Step S565), the control unit 601 transmits the received point absence information to the displaying unit 603. Upon receiving the point absence information from the control unit 601, the displaying unit 603 displays the undetermined point message (Step S575) .

### 1.19 Overview of Odds Distribution

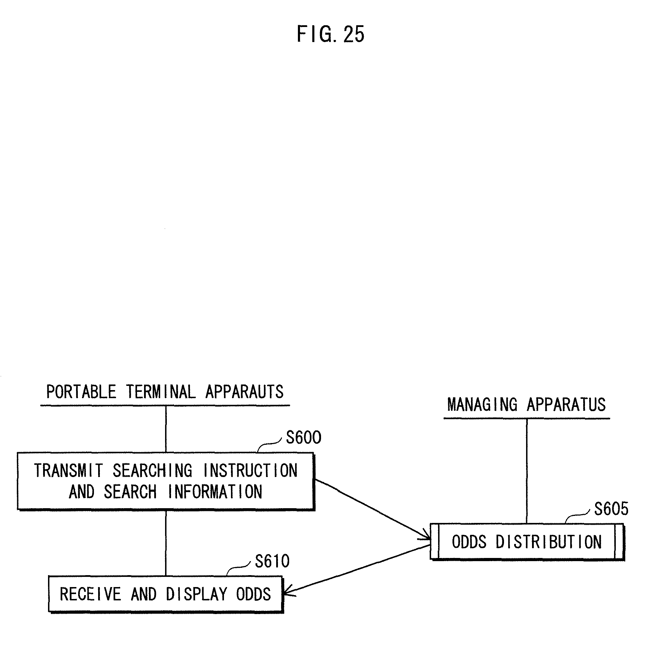

The following schematically explains the odds distribution performed by the portable terminal apparatus 60 and the managing apparatus 30, with reference to a flowchart shown in FIG.25.

Upon receiving the searching request and the search information relating to the odds information from the input unit 602, the control unit 601 included in the portable terminal apparatus 60 transmits the searching instruction and the received search information to the managing apparatus 30 via the first wireless unit 604 (Step S600).

Upon receiving the searching instruction and the search information from the portable terminal apparatus 60 via the transmitting and receiving unit 307, the odds calculating unit 303 included in the managing apparatus 30 performs the odds distribution, obtains the odds information satisfying the conditions indicated by the search information, and transmits the obtained odds information and the odds transmitting instruction to the portable terminal apparatus 60 via the transmitting and receiving unit 307 (Step S605).

Upon receiving the odds transmitting instruction and the odds information obtained by the managing apparatus 30 from the managing apparatus 30 via the first wireless unit 604, the control unit 601 included in the portable terminal apparatus 60 outputs the received odds information to the displaying unit 603. Upon receiving the odds information from the control unit 601, the displaying unit 603 displays the received odds information (Step S610).

### 1.20 Operations for Odds Distribution

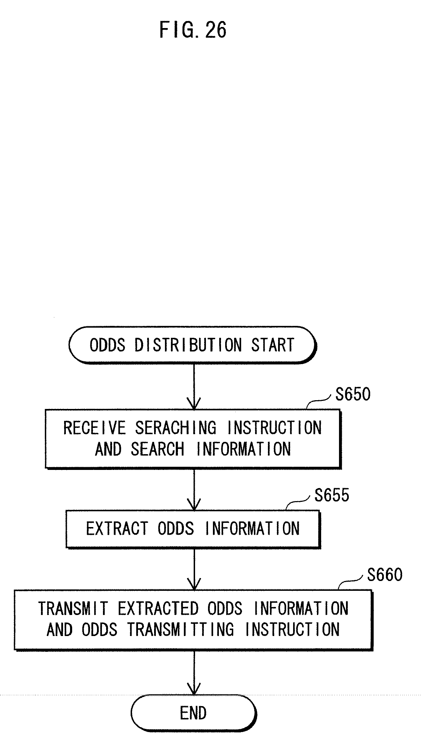

The following describes the operations for the odds distribution shown in FIG.25, with reference to a flowchart shown in FIG.26.

Upon receiving the searching instruction and the search information from the portable terminal apparatus 60 via the transmitting and receiving unit 307 (Step S650), the odds calculating unit 303 obtains all the train codes of the trains that are going to depart the station included in the search information within a predetermined time from the usage time, from the time table corresponding to the information for classifying the up-trains and the down-trains included in the received search information. The odds calculating unit 303 obtains, among the train codes having recently written in the odds information table T110 stored in the odds information storing unit 310, only train codes that are the same as any of the obtained train code, and extracts the odds information that satisfies the search conditions (Step S655).

The odds calculating unit 303 transmits the extracted odds information and the odds transmitting instruction that instructs the transmission of the odds information, to the portable terminal apparatus via the transmitting and receiving unit 307.

### 1.21 Modification of Point Transmission

In the above-described embodiment, the transmission of the train point and the car point is performed by the managing apparatus 30. In this modification, a point distributing system 1000 that automatically distributes the point, and a point distributing system 2000 in which the per-car apparatus transmits the point in response to a request from the portable terminal apparatus are described next.

### (1) Point Distributing System 1000

### <Structure of Point Distributing System 1000>

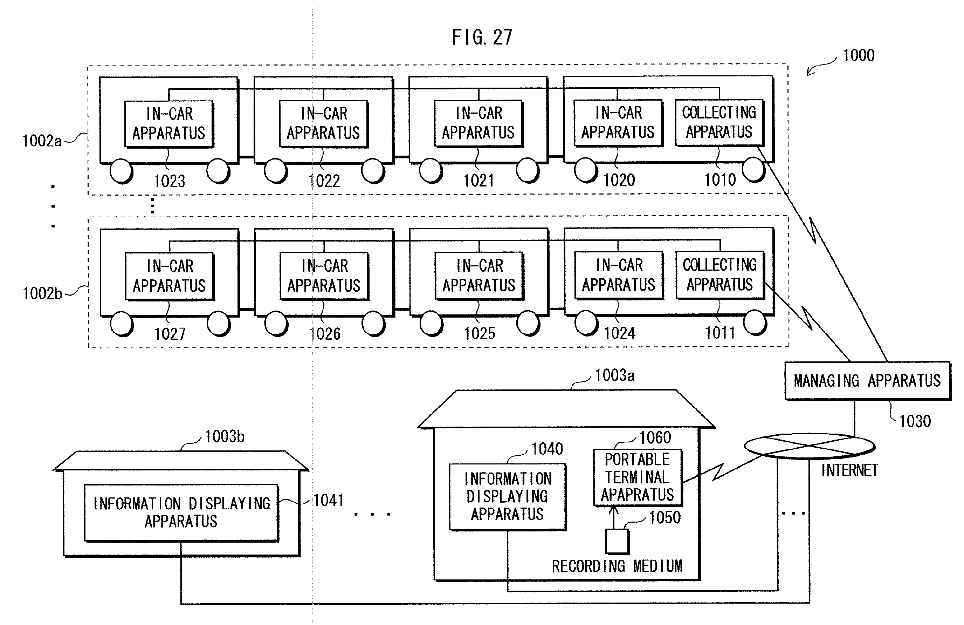

As FIG. 27 shows, the point distributing system 1000 includes collecting apparatuses 1010 ... 1011 and in-car apparatuses 1020, 1021, 1022, 1023 ... 1024, 1025, 1026 and 1027, which are set up in trains 1002a ... 1002b respectively, a managing apparatus 1030, information displaying apparatuses 1040 ... 1041 which are set up in stations 1003a ... 1003b respectively, recording medium 1050 and portable terminal apparatus 1060.

The collecting apparatus 1010 is connected to each of the in-car apparatuses 1020, 1021, 1022 and 1023, and the collecting apparatus 1011 is connected to each of the in-car apparatuses 1024, 1025, 1026 and 1027.

The in-car apparatus 1020 measures a congestion degree of the car equipped with the in-car apparatus 1020. The collecting apparatuses 1010 ... 1011 measure the congestion degrees of the respective whole train.

The managing apparatus 1030 calculates the odds of each train and each car based on the congestion degree of each train and each car, and determines the train point and the car point based on each of the calculated odds.

The in-car apparatus 1020 transmits, within the car, the train point and the car point, which corresponds to the car equipped with the in-car apparatus 1020, to the portable terminal apparatus 1060 by short-range wireless. Here, assume that the transmission of the point is performed by the in-car apparatus 1020 located in the vicinity of a door of the car for instance (e.g. on the ceiling of the car, which is 1 m away from the door), and the communication distance of the short-range wireless is 3 m.

A recording medium 1050 is attached to the portable terminal apparatus 1060 when the user gets on the train. Upon receiving the train point and the car point, by wireless, from the in-car apparatus 1020 set up in the car where the user gets on, the portable terminal apparatus 1060 writes the received points to the recording medium 1050.

The information displaying apparatuses 1040 ... 1041 displays information received from the managing apparatus 1030.

Each of the in-car apparatuses 1021 ... 1027 performs the same operations as the in-car apparatus 1020.

### <Structure of Collecting Apparatus 1010>

The collecting apparatuses 1010 ... 1011 have the same structure. Therefore, only the structure of the collecting apparatus 1010 is described next.

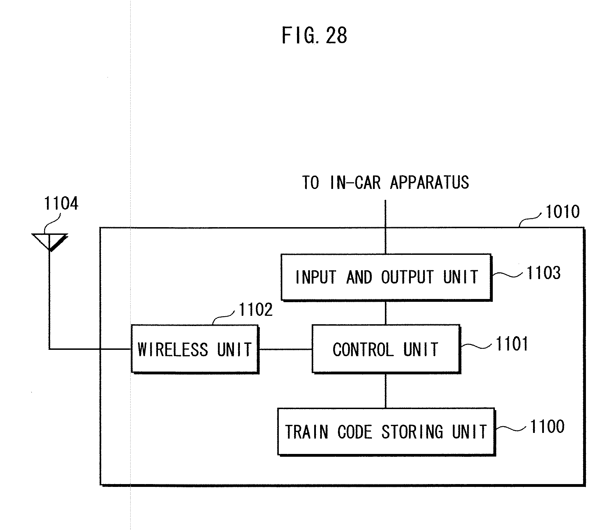

As FIG. 28 shows, the collecting apparatus 1010 includes a train code storing unit 1100, a control unit 1101, a wireless unit 1102, an input and output unit 1103 and an antenna unit 1104.

The collecting apparatus 1010 is a computer system structured by a microprocessor, a ROM, a RAM, a hard disk unit, a display unit, a modem, and so on. A computer program is stored in the ROM or the hard disk unit. The microprocessor operates in accordance with the computer program, and accordingly, the collecting apparatus 1010 can fulfill the function thereof.

### (Train Code Storing Unit 1100)

The train code storing unit 1100 stores a train code used for identifying the train equipped with the collecting apparatus 1010.

### (Control Unit 1101)

Upon receiving the train code and the collecting instruction that instructs the collection of the per-train converted passenger number and the per-car converted passenger number from the managing apparatus 1030 via the wireless unit 1102, the control unit 1101 judges whether the received train code is the same as the train code stored in the train code storing unit 1100.

If judging negatively, the control unit 1101 does not perform any operation.

If judging affirmatively, the control unit 1101 first transmits the measuring instruction, which instructs to measure the per-car converted passenger number, to the in-car apparatus 1020 via the input and output unit 1103. The control unit 1101 receives the per-car conversion information, which includes the car code that identifies the cars, and the per-car converted passenger number, from the in-car apparatus 1020 via the input and output unit 1103, and temporally stores the received per-car conversion information. The control unit 1101 performs the above-described operations for each in-car apparatus. The train code is the same as the above-described embodiment.

Upon receiving the per-car conversion information from each of the in-car apparatus connected to the collecting apparatus 1010, the control unit 1101 sums up the per-car converted passenger number included in each piece of the received per-car conversion information to calculate the per-train converted passenger number, and generates the per-train conversion information that includes the train code and the calculated per-train converted passenger number. The control unit 1101 transmits the generated per-train conversion information, each piece of the stored per-car conversion information and the train code to the managing apparatus 1040 via the wireless unit 1102 by wireless.

The control unit 1101 receives all the pieces of point information determined by the managing apparatus 1030, and transmitting instruction that instructs the transmission of point information, from the managing apparatus 1030 via the wireless unit 1102. Here, each piece of the point information includes the train code, the train point and the car point for each car.

The control unit 1101 extracts pieces of point information including the train code that is the same as the train code stored in the train code storing unit 1100 from all the pieces of the point information, and outputs the extracted point information to the in-car apparatuses 1020, 1021, 1022 and 1023.

### (Wireless Unit 1102)

The wireless unit 1102 receives an electrical signal from the antenna unit 1104, demodulates the received electrical signal, and extracts a pulse signal wave from the demodulated signal. The wireless unit 1102 decodes the extracted pulse signal wave to extracts instructions and information.

The instructions to be extracted include the collecting instruction and the transmitting instruction. If the collecting instruction is extracted, the information to be extracted includes the train code, and if the transmitting instruction is extracted, the information to be extracted includes all the pieces of the point information determined by the managing apparatus 1030.

Upon receiving the information from the control unit 1101, the wireless unit 1102 generates a pulse signal wave based on the received information, changes the amplitude of the carrier wave based on the generated pulse signal wave as the modulation sign, and outputs the carrier wave, whose amplitude has been changed, to the antenna unit 1104.

### (Input and Output Unit 1103)

The input and output unit 1103 is the same as the input and output unit 103. Therefore, the explanation thereof is omitted here.

### (Antenna Unit 1104)

The antenna unit 1104 is the same as the antenna unit 104. Therefore, the explanation thereof is omitted here.

### <Structure of In-car Apparatus 1020>

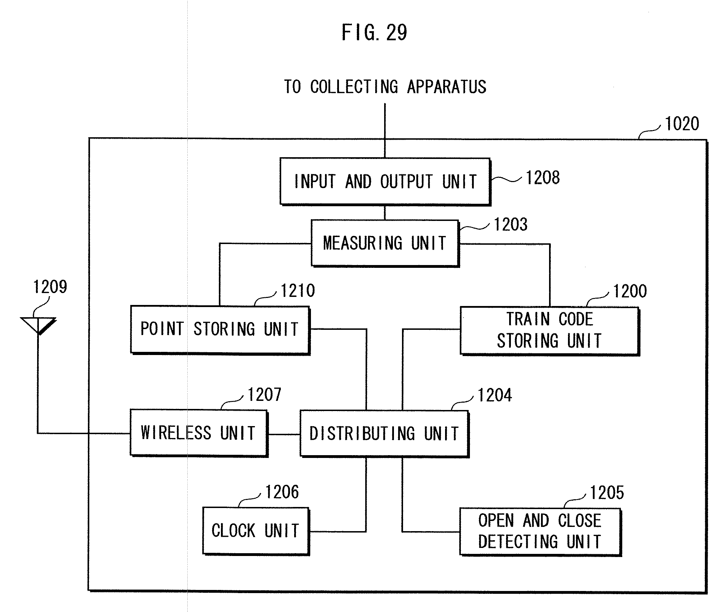

As FIG.29 shows, the in-car apparatus 1020 includes a car code storing unit 1200, a measuring unit 1203, a distributing unit 1204, an open and close detecting unit 1205, a clock unit 1206, a wireless unit 1207, an input and output unit 1208, an antenna unit 1209 and a point storing unit 1210.

The in-car apparatus 1020 is, more specifically, a computer system structured by a microprocessor, a ROM, a RAM, a hard disk unit, a display unit, a modem, and so on. A computer program is stored in the ROM or the hard disk unit. The microprocessor operates in accordance with the computer program, and accordingly, the in-car apparatus 1020 can fulfill the function thereof.

The in-car apparatuses 1021 ... 1027 have the same structure as the in-car apparatus 1020. Therefore, the explanation thereof is omitted here.

### (Car Code Storing Unit 1200)

The car code storing unit 1200 stores the car code of the car equipped with the in-car apparatus 1020.

### (Point Storing Unit 1210)

The point storing unit 1210 has an area for storing the train point and the car point that corresponds to the car equipped with the in-car apparatus 1020.

### (Clock Unit 1206)

The clock unit 1206 obtains a current time.

### (Measuring Unit 1203)

The measuring unit 1203 stores the weight of the car.

Upon receiving the measuring instruction from the collecting apparatus 1010 via the input and output unit 1208, the measuring unit 1203 generates the per-car conversion information by the same operation as the measuring 203 in the above-described measuring unit 203, and transmits the generated per-car conversion information to the collecting apparatus 1010 via the input and the output unit 1208.

Upon receiving the point information from the collecting apparatus 1010 via the input and output unit 1208, the measuring unit 1203 obtains the train point, and the car point which corresponds to the car equipped with the in-car apparatus 1020, using the received point information, and writes the obtained train point and car point into the point storing unit 1210. Here, the contents already written are to be overwritten.

### (Distributing Unit 1204)

Upon receiving the open status instruction from the open and close detecting unit 1205, the distributing unit 1204 obtains the current time from the clock unit 1206, and also reads the train point and car point stored in the point storing unit 1210, and outputs the obtained time, the read train point and car point, a point transmitting instruction and point distribution start instruction that instructs to start the point distribution to the wireless unit 1207.

Upon receiving the close status instruction from the open and close detecting unit 1205, the distributing unit 1204 outputs a distribution end instruction that instructs to finish the point distribution to the wireless unit 1207.

### (Open and Close Detecting Unit 1205)

The open and close detecting unit 1205 is the same as the open and close detecting unit 205 in the above-described embodiment. Therefore, the explanation thereof is omitted here.

### (Wireless Unit 1207)

Upon receiving the time, a pair of the train point and the car point, the point transmitting instruction, and point distribution start instruction from the distributing unit 1204, the wireless unit 1207 generates a pulse signal wave based on the received data and time, pair of the train point and car point and point transmitting instruction, changes the amplitude of the carrier wave based on the generated pulse signal wave as the modulation sign, and outputs the carrier wave, whose amplitude has been changed, to the antenna unit 1209 until receiving the point distribution end instruction from the distributing unit 1204.

### (Input and Output Unit 1208)

The input and output unit 1208 is the same as the input and output unit 208 in the above-described embodiment. Therefore, the description thereof is omitted here.

### (Antenna Unit 1209)

Upon receiving the carrier wave, whose amplitude has been changed, from the wireless unit 1207, the antenna unit transmits the received carrier wave in the air.

### <Structure of Managing Apparatus 1030>

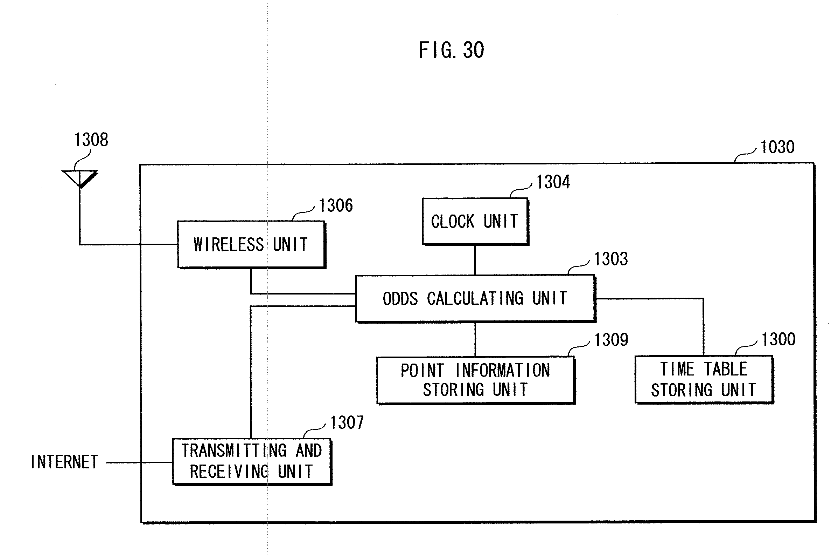

As FIG. 30 shows, the managing apparatus 1030 includes a time table storing unit 1300, a odds calculating unit 1303, a clock unit 1304, a wireless unit 1306, a transmitting and receiving unit 1307, an antenna unit 1308, and a point information storing unit 1309.

The managing apparatus 1030 is, more specifically, a compute system structured by a microprocessor, a ROM, a RAM, a hard disk unit, a display unit, a modem, and so on. A computer program is stored in the ROM or the hard disk unit. The microprocessor operates in accordance with the computer program, and accordingly, the managing apparatus 1030 can fulfill the function thereof.

### (Time Table Storing Unit 1300)

The time table storing unit 1300 is the same as the time table storing unit 300 in the above-described embodiment. Therefore, the explanation thereof is omitted here.

### (Point Information Storing Unit 1309)

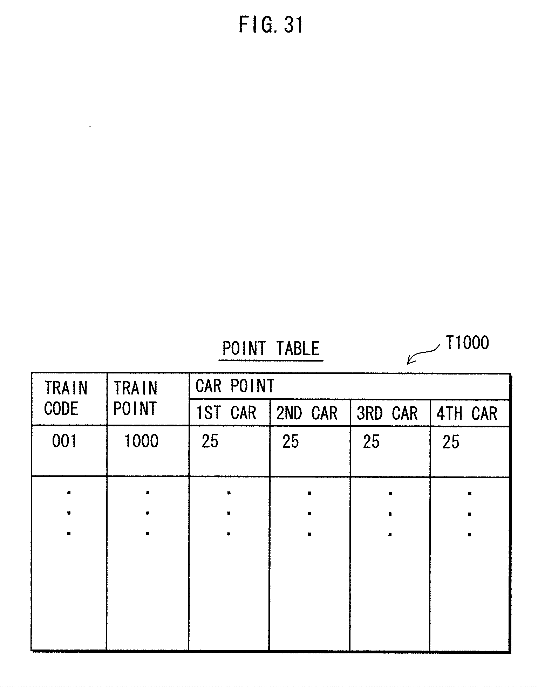

As FIG.31 shows as an example, the point information storing unit 1309 stores a point table T1000.

The point table T1000 has an area for storing one or more information groups each including the train code, the train point and the car point.

The train code is a code for identifying trains, and the train point is the point to be allocated to the user who uses the train corresponding to the train code.

The car point further includes a point for the first car, a point for the second car, a point for the third car and a point for the fourth car, each indicating the point to be allocated to the user who uses the car.

### (Clock Unit 1304)

The clock unit 1304 obtains a current time.

### (Odds calculating unit 1303)

The odds calculating unit 1303 calculates the train odds of each train, the car odds of each car of each train, and a train point and a car point to be allocated to the user

The odds calculating unit 303 prestores a train standard point (e.g. 1000 points) based on which the train point it calculated, and a car standard point (e.g. 100 points) based on which the car point is calculated.

The odds calculating unit 1303 monitors the time obtained by the clock unit 1304, and judges whether the current time is when the odds should be calculated. If judging affirmatively, the odds calculating unit 1303 obtains the time from the clock unit 1304.

Using the time obtained from the clock unit 1304, the odds calculating unit 1303 extracts train codes of the train currently in operation and the trains to be operated within 10 minutes from the current time, from the time table for up-trains stored in the time table storing unit 1300.

The odds calculating unit 1303 collects the per-train conversion information and each piece of the per-car conversion information of each train corresponding to the extracted train codes, in the same manner as in the above-described embodiment, and calculates the train odds and the car odds of each car.

The odds calculating unit 1303 sums up each obtained train odds, and divides the train standard point by the sum to obtain the quotient. The odds calculating unit 1303 multiplies the quotient by the car odds to obtain the train points.

Using the car odds corresponding to the train code, the odds calculating unit 1303 calculates the car point in the same manner as the calculation of the train point.

Next, the odds calculating unit 1303 extracts the train codes of the trains currently in operation and the trains to be operated within 10 minutes from the current time, from the time table for down-trains stored in the time table storing unit 1300, and calculates the train point and each car point for all the trains corresponding to all the train codes obtained from the time table for down-trains.

The odds calculating unit 1303 writes the train code and point information including the obtained train point and the car point into the point table T1000. Here, the contents already written in the point table T1000 are to be overwritten.

The odds calculating unit 1303 transmits all the pieces of the point information, which have been written in the point table T1000, to the collecting apparatuses 1010 ... 1011 via the wireless unit 1306 by wireless. Further, the odds calculating unit 1303 transmits all the pieces of the point information, which have been written in the point table T1000, and the displaying instruction to the information displaying apparatuses 1040 ... 1041 via the transmitting and receiving unit 1307.

Also, upon receiving the searching instruction and the search information from the portable terminal apparatus 1060 via the transmitting and receiving unit 1307, the odds calculating unit 1303 obtains, at the station included in the search information, all the train codes of the trains that departs within a predetermined period from the current time, from the time table corresponding to the class, which is the up-train or the down-train, included in the received search information (for example, if the class is the up-train, the odds calculating unit 1303 obtains the train codes from the time table T1000). The odds calculating unit 1303 obtains, among the train codes included in the point information stored in the point table T1000, only the train codes which are the same as any of the obtained train codes. The odds calculating unit 1303 transmits all the pieces of the obtained point information and the point transmitting instruction to the portable terminal apparatus 1060 via the transmitting and receiving unit 1307.

### (Wireless Unit 1306)

The wireless unit 1308 receives an electrical signal from the antenna unit 1308, demodulates the received electrical signal, and extracts a pulse signal wave from the demodulated signal. The wireless unit 1306 demodulates the extracted pulse signal wave to extract information.

The information to be extracted includes the train code, the per-train conversion information and the per-car conversion information.

Upon receiving the collecting instruction and the train code from the odds calculating unit 1303, the wireless unit 1306 generates a pulse signal wave based on the received collecting instruction and train code, changes the amplitude of the carrier wave based on the generated pulse signal wave as a modulation sign, and outputs the carrier wave, whose amplitude has been changed, to the antenna unit 1308.

### (Transmitting and Receiving Unit 1307)

Upon receiving the searching instruction and the search information from the portable terminal apparatus 1060, the transmitting and receiving unit 1307 outputs the received searching instruction and search information to the odds calculating unit 1303.

Also, upon receiving the displaying instruction and all the pieces of the point information, which have been written in the point table T1000, from the odds calculating unit 1303, the transmitting and receiving unit 1307 transmits the received instruction and information to the information displaying apparatuses 1040, ..., 1041 via the Internet.

Upon receiving the odds information that satisfies the search conditions and the odds transmitting instruction from the odds calculating unit 1303, the transmitting and receiving unit 1307 transmits the received instruction and information to the portable terminal apparatus 1060 via the Internet.

### (Antenna Unit 1308)

The antenna unit 1308 is the same as the antenna unit 308 in the above-described embodiment. Therefore, the explanation thereof is omitted here.

### <Information Displaying Apparatus 1040>

The information displaying apparatuses 1040 ... 1041 have the same structure. Therefore, only the structure of the information displaying apparatus 1040 is described next.

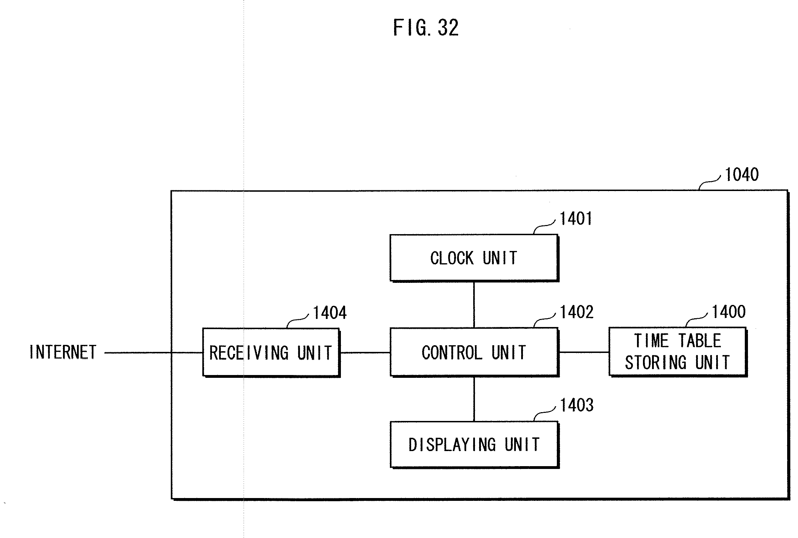

As FIG.32 shows, the information displaying apparatus 1040 includes a time table storing unit 1400, a clock unit 1401, a control unit 1402, a displaying unit 1403 and a receiving unit 1404.

The information displaying unit 1040 is, more specifically, a computer system structured by a microprocessor, a ROM, a RAM, a hard disk unit, a display unit, a modem and so on. A computer program is stored in the ROM or the hard disk unit. The microprocessor operates in accordance with the computer program, and accordingly, the information displaying apparatus 1040 can fulfill the function thereof.

### (Time Table Storing Unit 1400)

The time table storing unit 1400 is the same as the time table storing unit 1300 included in the managing apparatus 1030. Therefore, the explanation thereof is omitted here.

### (Clock Unit 1401)

The Clock Unit 1401 obtains a current time.

### (Control Unit 1402)

The control unit 1402 receives the displaying instruction and all the pieces of the point information stored in the point table T1000 from the managing apparatus 1030 via the receiving unit 1404.

Using the time table stored in the time table storing unit 1400, the control unit 1402 extracts, among the received point information, all the pieces of the point information corresponding to the train codes of the trains that departs the station 3a equipped with the information displaying apparatus 1040. The control unit 1402 outputs all the pieces of the extracted point information to the displaying unit 1403.

### (Displaying Unit 1403)

The displaying unit 1403 includes, for instance, a display, and displays the point information received from the control unit 1402.

### (Receiving Unit 1404)

Upon receiving the displaying instruction and one or more piece of the point information from the managing apparatus 1030 via the Internet, the receiving unit 1404 outputs the received instruction and information to the control unit 1402.

### <structure of Recording Medium 1050>

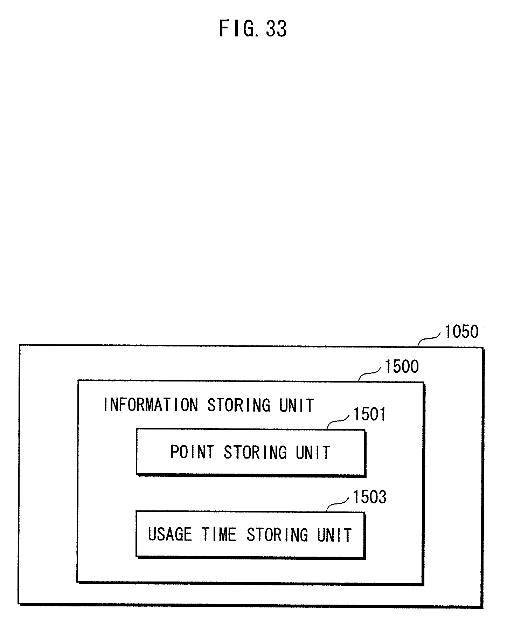

The recording medium 1050 has a tamper-resistant characteristic. As FIG.33 shows, the recording medium includes an information storing unit 1500, and the information storing unit 1500 includes a point storing unit 1501 and a usage time storing unit 1503.

The recording medium 1050 is, more specifically, a computer system structured by a microprocessor, a ROM, a RAM, and so on. A computer program is stored in the ROM. The microprocessor operates in accordance with the computer program, and accordingly, the recording medium 1050 can fulfill the function thereof.

### (Point Storing Unit 1501)

The point storing unit 1501 has an area for storing the total point, which is the total of the points distributed by the in-car apparatuses 1020 ... 1027.

### (Usage Time Storing Unit 1503)

The usage time storing unit 1503 has an area for storage of the latest time, which is the time when the point is accumulated last time.

### <Structure of Portable Terminal Apparatus 1060>

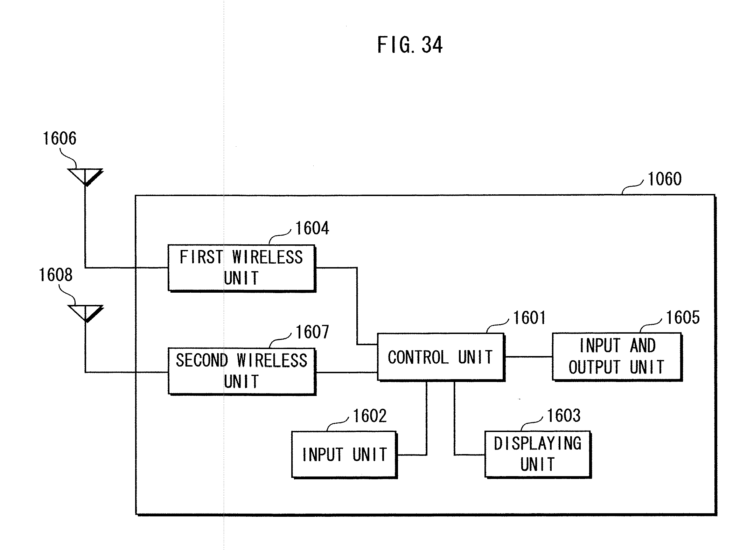

As FIG. 34 shows, the potable terminal apparatus 1060 includes a control unit 1601, an input unit 1602, a displaying unit 1603, a first wireless unit 1604, an input and output unit 1605, a first antenna unit 1606, a second wireless unit 1607 and a second antenna unit 1608.

The portable terminal apparatus 1060 is, more specifically, a microprocessor, a ROM, a RAM, a hard disk unit, a display unit, a modem, and so on. A computer program is stored in the ROM or the hard disk unit. The microprocessor operates in accordance with the program, and accordingly, the portable terminal apparatus 1060 can fulfill the function thereof.

### (Control Unit 1601)

The control unit 1601 prestores the standard period which is used for judging whether to write the train point and the car point received from the in-car apparatus 1020 into the recording medium 1050.

Upon receiving the searching request for the odds information and the search information from the input unit 1602, the control unit 1601 transmits the searching instruction and the received search information to the managing apparatus 1030 via the first wireless unit 1604.

Upon receiving the odds transmitting instruction from the managing apparatus 1040 via the first wireless unit 1604 and point information that themanaging apparatus 1030 has obtained, the control unit 1601 outputs the received point information to the displaying unit 1603.

Upon receiving the train point, the car point, the time, and the point transmitting instruction from the in-car apparatus 1020 via the second wireless unit 1607, the control unit 1601 compares the received time and the time stored in the usage time storing unit 1503 to judge whether the received time is within the standard period. If judging affirmatively, the control unit 1601 discards each of the received points, the time and date, and the point transmitting instruction. If judging negatively, the control unit 1601 adds each of the received point to the total point to update the total point.

Further, the control unit 1601 updates the time stored in the usage time storing unit 1503 to the received time. Accordingly, the time stored in the usage time storing unit 1503 becomes the latest time when the user uses the train.

### (Input Unit 1602)

Upon receiving the searching instruction for the odds information and the search information from the user, the input unit 1602 outputs the received searching instruction and the search information to the control unit 1601.

### (Displaying Unit 1603)

Upon receiving the point information from the control unit 1601, the displaying unit 1603 displays the received point information.

### (The First Wireless Unit 1604)

The first wireless unit 1604 receives an electrical signal from the first antenna unit 1606, demodulates the received electrical signal, and extracts a pulse signal wave from the demodulated signal. The first wireless unit 1604 decodes the extracted pulse signal wave, extracts instructions and information, and outputs the extracted instructions and information to the control unit 1601.

The instructions to be extracted include the odds transmitting instruction.

After extracting the odds transmitting instruction, the first wireless unit 1604 further extracts all the pieces of the point information that the managing apparatus 1030 has obtained.

Upon receiving the searching instruction and the search information from the control unit 1601, the first wireless unit 1604 generates a pulse signal wave based on the received searching instruction and search information, changes the amplitude of the carrier wave based on the generated pulse signal wave as a modulation sign, and outputs the carrier, whose amplitude has been changed, to the first antenna unit 1606.

### (The Second Wireless Unit 1607)

The second wireless unit 1607 receives the electrical signal from the second antenna unit 1606, demodulates the received electrical signal, and extracts a pulse signal wave from the demodulated signal. The second wireless unit 1607 decodes the extracted pulse signal wave to extract instructions and information, and outputs the extracted instructions and information to the control unit 1601.

The instructions to be extracted include the point transmitting instruction.

After extracting the point transmitting instruction, the second wireless unit 1607 further extracts the train point, the car point and the time.

### (Input and Output Unit 1605)

The input and output unit 1605 performs an input and an output of information between the control unit 1601 and the recording medium 1050.

### (The First Antenna Unit 1606 and The Second Antenna Unit 1608)

Upon receiving the carrier wave, whose amplitude has been changed, from the first wireless unit 1604, the first antenna unit 1606 transmits the received carrier wave in the air.

The first antenna unit 1606 receives a radio wave, converts the received radio wave to an electrical signal, and outputs the electrical signal to the first wireless unit 1604.

The second antenna unit 1608 receives a radio wave, converts the received radio wave to an electrical signal, and outputs the electrical signal to the second wireless unit 1607.

### <Operations for Information Collection>

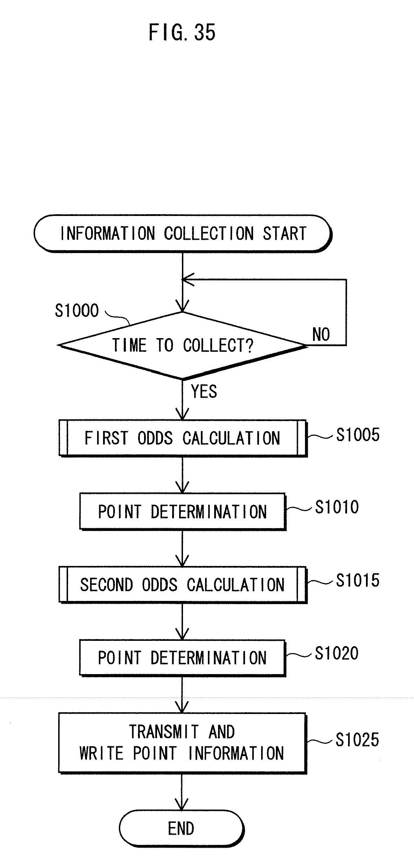

The following describes the information collection performed at the time of the odds calculation, with reference to a flowchart shown in FIG.35.

The odds calculating unit 1303 included in the managing apparatus 1030 monitors the time obtained by the clock unit 1304, and judges whether the current time is when the odds shouldbe calculated (Step S1000). If judging negatively, ("NO" in Step S1000), the odds calculating unit 1303 monitors the time obtained by the clock unit 1304.

If judging affirmatively ("YES" in Step S1000), the odds calculating unit 1303 performs the first odds calculation to obtain the train odds and the car odds of each car, for the up-trains (Step S1005). Using the obtained train odds and the car odds of each car, the odds calculating unit 1303 calculates the train point and each car point for the up-trains, and determines each point to be distributed to the user (Step S1010).

The odds calculating unit 1303 performs the second odds calculation to obtain the train odds and the car odds of each car, for the down-trains (Step S1015). Using the obtained train odds and car odds of each car, the odds calculating unit 1303 calculates the train point and each car point, and determines each point to be distributed to the user (Step S1020).

The odds calculating unit writes all the pieces of the point information including the train code, the obtained train point and car point into the point table T1000, and transmits the written pieces of the point information to each of the collecting apparatuses that are set up in trains in operation, and trains that is going to be in operation within 10 minutes from the current time. Further, the odds calculating unit 1303 transmits the displaying instruction and all the pieces of the point information to the information displaying apparatus 1040... 1041 (Step S1025). The collecting apparatuses, which have received all the pieces of the point information and the transmitting instruction, perform the point reception, which is described later.

### <Operations for The First Odds Calculation>

The first odds calculation shown in FIG.35 is described next. Only the differences from FIG.17 are described here.

The odds calculating unit 1303 performs Step S200 to Step S220 shown in FIG. 17, and finishes the processing.

Using the time table for the down-trains, the second odds calculation performs Step 200 to Step S220 shown in FIG. 17, and finishes the processing.

### <Operations for Information Collection>

The operations performed by each of the collecting apparatuses 1010 ... 1011 at the time of receiving the collecting instruction and the train code from the managing apparatus 1030 are the same as the operations represented by the flowchart shown in FIG.18. Therefore, the explanation is omitted here.

### <Operations for Converted Passenger Number Collection>

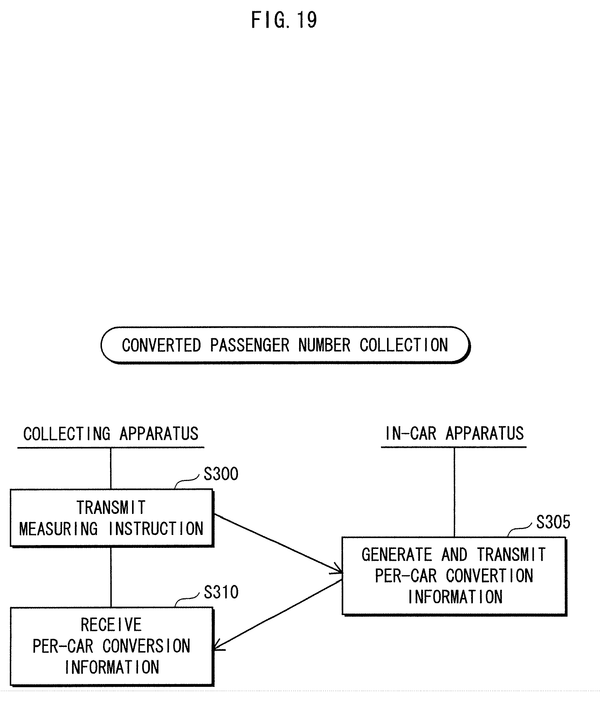

The operations for the converted passenger number collection performed by each of the collecting apparatuses 1010 ... 1011 for collecting the per-conversion information from each in-car apparatus are the same as the operations represented by the flowchart shown in FIG.19. Therefore, the explanation is omitted here.

### <Point Information Reception>

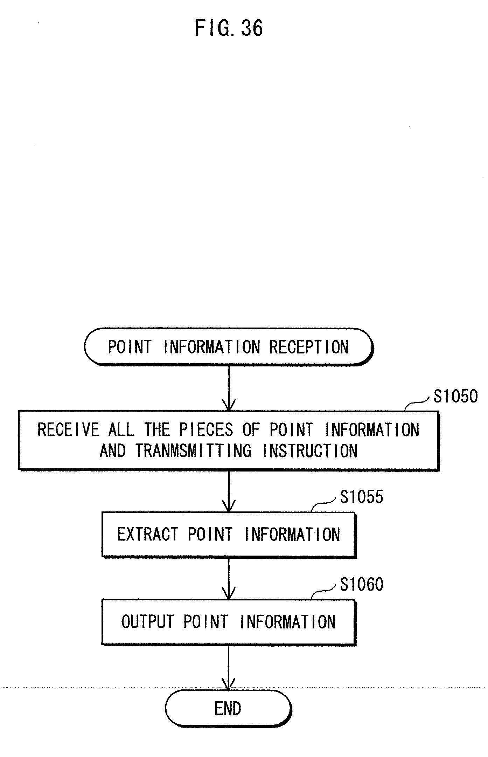

The following describes the point information reception performed by each of the collecting apparatuses 1010 ... 1011 at the time of receiving all the pieces of the point information, which the odds calculating unit 1301 included in the managing apparatus 1030 has written in the point table T1000, and the transmitting instruction from the managing apparatus 1030, with reference to a flowchart shown in FIG.36. Here, the collecting apparatus 1010 is taken as an example.

Upon receiving the transmitting instruction and all the pieces of the point information, which the odds calculating unit 1303 included in the managing apparatus 1030 has written in the point table T1000 (Step S1050), the control unit 1101 included in the collecting apparatus 1010 extracts, from the received pieces of the point information, pieces of point information, each including the train code that is the same as the train code stored in the train code storing unit 1100 (Step S1055), and outputs the extracted pieces of the point information to the in-car apparatuses 1020, 1021, 1022 and 1023 (Step S1060).

### <Point Extraction>

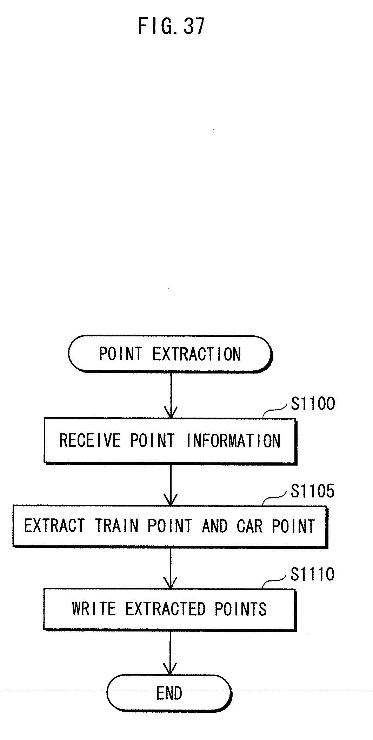

The following describes the point extraction performed by each of the in-car apparatuses 1020, 1021, 1022, 1023 ... 1024, 1025, 1026 and 1027 at the time of receiving the point information from the collecting apparatuses 1010 ... 1011, to which the in-car apparatuses 1020, 1021, 1022, 1023 ... 1024, 1025, 1026 and 1027 are respectively connected, with reference to a flowchart shown in FIG. 37. Here, the in-car apparatus 1020 is taken as an example.

Upon receiving the point information from the collecting apparatus 1010 via the input and output unit 1208 (Step S1100), the measuring unit 1203 included in the control unit 1020 extracts the train point included in the received point information and the car point corresponding to the car number included in the car code stored in the car code storing unit 100 (Step S1105).

The measuring unit 1203 writes the extracted train point and the car point into the point storing unit 1210 (Step S1110).

### <Operations for Point Distribution>

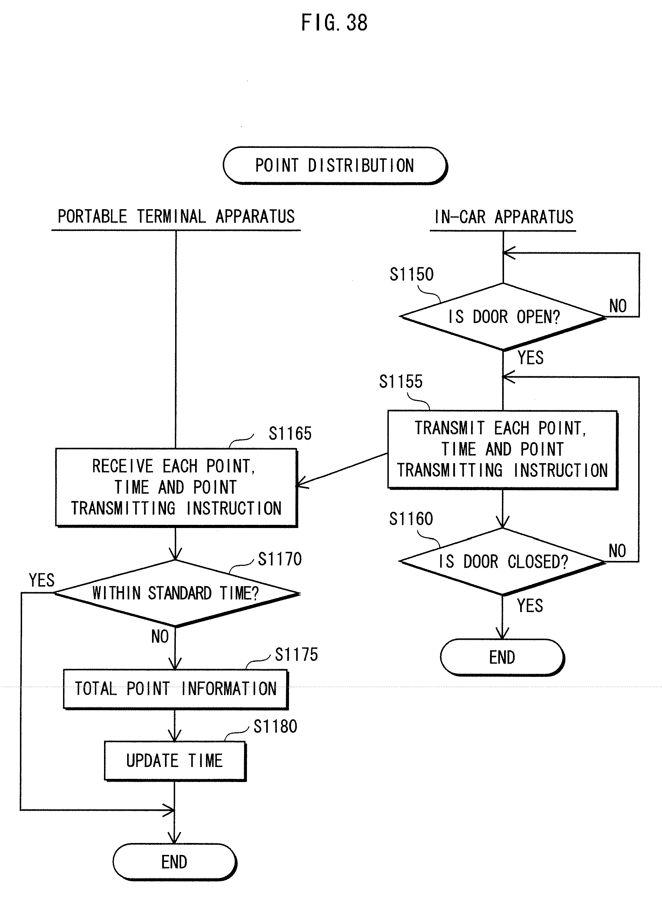

The following describes the operations for distributing points from the in-car apparatus 1020 to the portable terminal apparatus 1060, with reference to a flowchart shown FIG.38.

Note that in the case of distributing points from each of the in-car apparatuses 1020 ... 1027 to the portable terminal apparatus 1060, the same operations as the following are performed.

Upon detecting that the door is opened ("YES" in Step S1150), the open and close detecting unit 1205 included in the in-car apparatus 1020 outputs the open status instruction to the distributing unit 1204. Upon receiving the open status instruction from the open and close detecting unit 1205, the distributing unit 1204 obtains the current time from the clock unit 1206, and further reads the train point and the car point which are stored in the point storing unit 1210, and then outputs the obtained time, the read train point and car point, the point transmitting instruction, and the point distribution start instruction to the wireless unit 1207. Upon receiving the time, the train point, the car point, the point transmitting instruction, and the point distribution start instruction from the distributing instruction from the distributing unit 1204, the wireless unit 1207 transmits the received time, the train point, the car point, and the point transmitting instruction to the potable terminal apparatus 1060 via the antenna unit 1209 by wireless (Step S1155).

Upon detecting that the door is closed, the open and close detecting unit 1205 outputs the closed status instruction to the distributing unit 1204. Upon receiving the closed status instruction from the open and close detecting unit 1205, the distributing unit 1204 outputs the point distribution end instruction to the wireless unit 1207. Upon receiving the point distribution end instruction, the wireless unit 1207 judges that the transmission should be finished, and finishes the transmission ("YES" in Step S1160).

The wireless unit 1207 judges that the door is not closed between when receiving the point distribution start instruction and when receiving the point distribution end instruction ("NO" in Step S1160), and transmits the time, the train point, the car point, and the point transmitting instruction in Step S1155.

Upon receiving the time, the train point, the car point, and the point transmitting instruction from the in-car apparatus 1020 (Step S1165), the control unit 1601 included in the portable terminal apparatus 1060 compares the received time and the time stored in the usage time storing unit 1503 of the recording medium 1050, and judges whether the received time is within the standard period (Step S1170). If judging affirmatively ("YES" in Step S1170), the control unit 1601 discards the received time, the train point, the car point, and the point transmitting instruction, and finishes the processing. If judging negatively ("NO" in Step S1170), the control unit 1601 adds the received point to the total point stored in the point storing unit 1501 of the recording medium 1050, to update the total point (Step S1175).

Further, the control unit 1601 updates the time stored in the usage time storing unit 1503 to the received time (Step S1180).

### <Overview of Point Information Distribution>

The point information distribution performed between the portable terminal apparatus 1060 and the managing apparatus 1030 is the same as the operations represented by the flowchart shown in FIG.26. Therefore, the explanation is omitted here.

### <Operations for Point Information Distribution>

The point distribution for distributing the point information from the managing apparatus 1030 to the portable terminal apparatus 1060 is the same as the operations represented by the flowchart shown in FIG.26.

### (2) The point Distributing System 2000

### <Structure of Point Distributing System 2000>

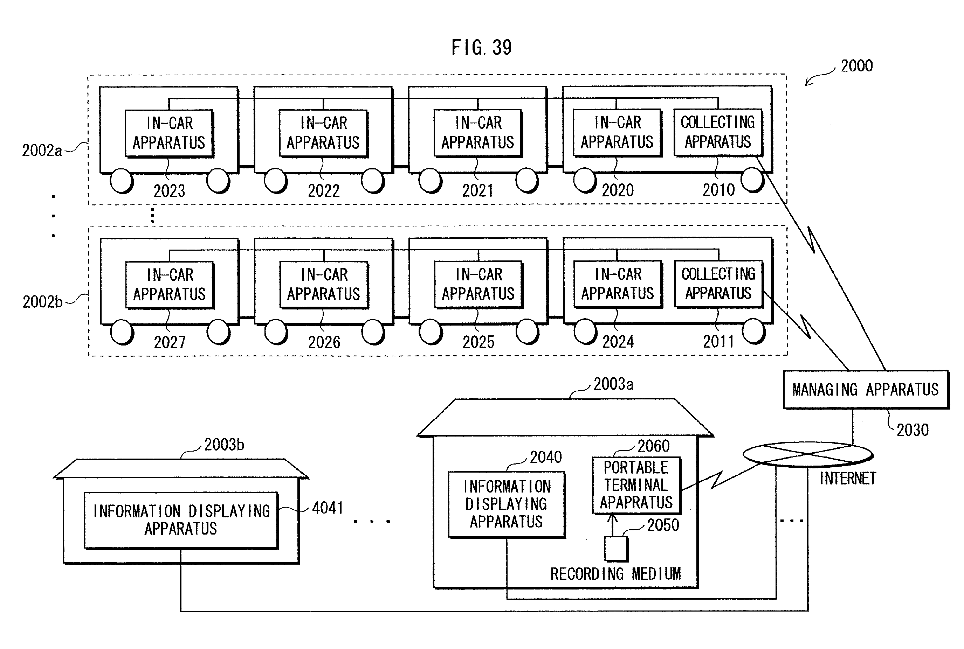

As FIG.39 shows, the point distributing system 2000 includes collecting apparatuses 2010 ... 2011 and in-car apparatuses 2020, 2021, 2022, 2023, ..., 2024, 2025, 2026 and 2027, which are set up in trains 2000a, ... 2002b respectively, a managing apparatus 2030, information displaying apparatuses 2040 ... 2041, which are respectively set up in stations 2003a ... 2003b, a recording medium 2050, and a portable terminal apparatus 2060.

The collecting apparatus 2010 is connected to the in-car apparatuses 2020, 2021, 2022 and 2023, and the collecting apparatus 2011 is connected to the in-car apparatuses 2024, 2025, 2026 and 2027.

The in-car apparatus 2020 measures the degree of congestion of the car equipped with the in-car apparatus 2020. Each of the collecting apparatuses 2010 ... 2011 measures the congestion degree of the whole of each train.

The managing apparatus 2030 calculates the odds of each train and each car based on the congestion degree of each train and each car, and determines each train point and each car point.

The portable terminal apparatus 2060 is used with the recording medium 2050 attached thereto. The portable terminal apparatus 2060 receives all the pieces of the point information calculated by the managing apparatus 2030, the latest time when the point to be distributed to the user was updated, and the signature data which is generated by performing the digital signature algorithm on all the pieces of the point information and the update data and time. Using the portable terminal apparatus 2060, the user transmits the requesting instruction, all the pieces of the stored point information, the update time, and the signature data to the in-car apparatus 2020 set up in the car where the user gets on, by wireless.

Upon receiving the requesting instruction, all the pieces of the point information, the update data and time and the signature data from the portable terminal apparatus 2060 by short-range wireless, the in-car apparatus 2020 performs signature verification to judge whether all the received point information and the update time are valid. If judging affirmatively, the in-car apparatus 2020 transmits the train point and the car point to the portable terminal apparatus 2060 by short-range wireless. Here, assume that the transmission of information between the in-car apparatus 2020 to the portable terminal apparatus 2060 is performed by the in-car apparatus 2020 located in the vicinity of a door of the car for instance (e.g. on a ceiling of the car, which is 1 m away from the door), and the communication distance of the short-range wireless is 3 m.

Upon receiving the train point and the car point from the in-car apparatus 2020 by wireless, the portable terminal apparatus 2060 writes the received points in the recording medium 2050.

Each of the information displaying apparatuses 2040 ... 2041 displays the information received from the managing apparatus 2030.

Note that each of the in-car apparatuses 2021 ... 2027 performs the same operations as the in-car apparatus 2020.

### <Structure of Collecting Apparatus 2010>

The collecting apparatuses 2010 ... 2011 have the same structure. Therefore, only the structure of the collecting apparatus 2010 is described next.

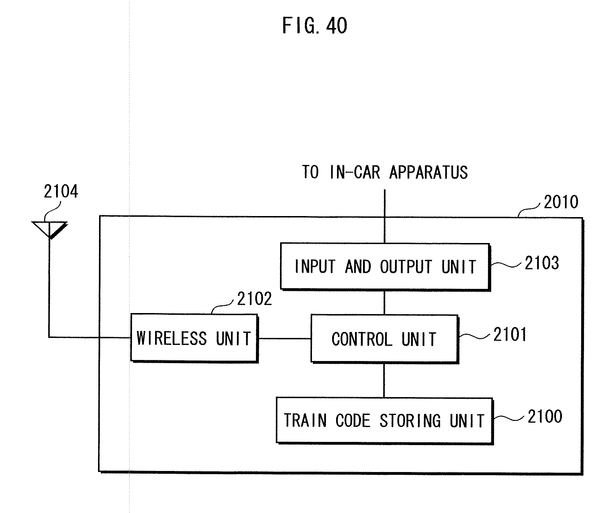

As FIG. 40 shows, the collecting apparatus 2010 includes a train code storing unit 2100, a control unit 2101, a wireless unit 2102, an input and output unit 2103, and an antenna unit 2104.

The collecting apparatus 2010 is, more specifically, a computer system structured by a microprocessor, a ROM, a RAM, a hard disk, unit, a display unit, a modem, and so on. A program is stored in the ROM or the hard disk unit. The microprocessor operates in accordance with the computer program, and accordingly, the collecting apparatus 2010 can fulfill the function thereof.

### (Train Code Storing Unit 2100)

The train code storing unit 2100 stores the train code for identifying the train equipped with the collecting apparatus 2010.

### (Control Unit 2101)

Upon receiving the train code and the collecting instruction that instructs to collect the per-train converted passenger number and the per-car converted passenger number, from the managing apparatus 1030 via the wireless unit 1102, the control unit 2101 judges whether the received train code is the same as the train code stored in the train codes storing unit 1100.

If judging negatively, the control unit 1201 does not perform any operation.

If judging affirmatively, the control unit 1201 performs the same operation as the control unit 1101 included in the collecting apparatus in the above-described point distributing system 1000, collects the per-car conversion information from each of the in-car apparatuses 2020, 2021, 2022 and 2023, and generates the per-train conversion information using the collected pieces of the per-car conversion information and the train code, and then transmits the generated per-train conversion information, collected per-car conversion information, and the train code to the managing apparatus 2030 by wireless via the wireless unit 2102.

The control unit 2101 receives an update time, which indicates the latest time when the odds are calculated by the managing apparatus 2030 and the point to be distributed to the user was updated last time and the time transmitting instruction that instructs the transmission of the time from the managing apparatus 2030 via the wireless unit 2102.

Upon receiving the update time, the control unit 2101 outputs the received update time to the in-car apparatuses 2020, 2021, 2022 and 2023.

### (Wireless Unit 2102)

The wireless unit 2102 receives electrical signal from the antenna unit 2104, demodulates the received electrical signal, and extracts a pulse signal wave from the demodulated signal. The wireless unit 2102 decodes the extracted pulse signal wave, and extracts instructions and information.

The instructions to be extracted include the collecting instruction and the time transmitting instruction. If the collecting instruction is extracted, the information to be extracted includes the train code, and if the time transmitting instruction is extracted, the information to be extracted includes the update time.

Upon receiving the information from the control unit 2101, the wireless unit 2102 generates a pulse signal wave based on the received information, changes the amplitude of the carrier wave based on the generated pulse signal wave as a modulation sign, and outputs the carrier wave, whose amplitude has been changed, to the antenna unit 2104.

### (Input and Output Unit 2103)

The input and output unit 2103 is the same as the input and output unit 1103. Therefore, the explanation is omitted here.

### (Antenna Unit 2104)

The antenna unit 2103 is the same as the antenna unit 1104. Therefore, the explanation is omitted here.

### <Structure of In-car Apparatus 2020>

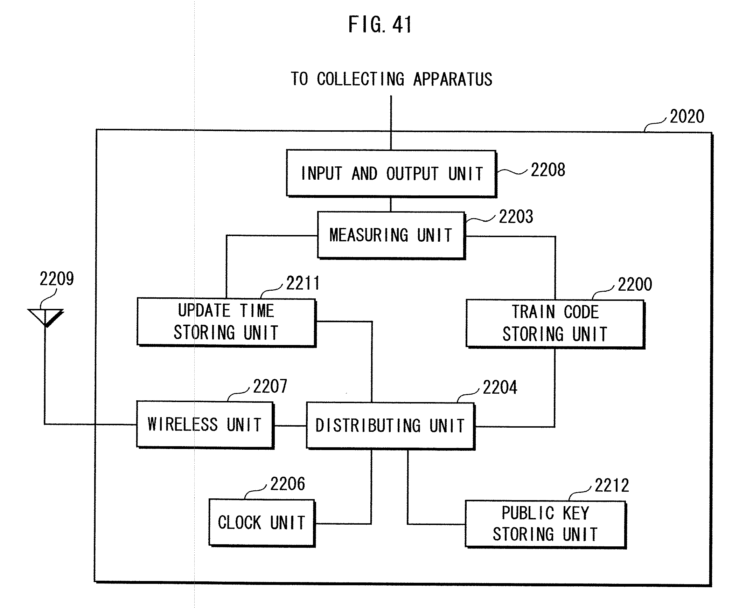

As FIG. 41 shows, the in-car apparatus 2020 includes a car code storing unit 2200, a measuring unit 2203, a distributing unit 2204, a clock unit 2206, a wireless unit 2207, an input and output unit 2208, an antenna unit 2209, an update time storing unit 2211 and public key storing unit 2212.

The in-car apparatus 2020 is, more specifically, a computer system structured by a microprocessor, a ROM, a RAM, a hard disk unit, a display unit, a modem and so on. A program is stored in the ROM or the hard disk unit. The microprocessor operates in accordance with the program, and accordingly, the in-car apparatus 2020 can fulfill the function thereof.

Each of the in-car apparatuses 2021... 2027 has the same structure as the in-car apparatus 2020. Therefore, the explanation is omitted here.

### (Train Code Storing Unit 2200)

The train code storing unit 2200 stores the train code that is used for identifying the train equipped with the in-car apparatus 2020.

### (Update Time Storing Unit 2211)

The update time storing unit has an area for storing the update time when each point is updated by the managing apparatus 2030.

### (Public Key Storing Unit 2212)

The public key storing unit 2212 stores a public key used for performing the signature verification.

### (Clock Unit 2206)

The clock unit 2206 obtains a current time.

### (Measuring Unit 2203)

The measuring unit 2203 prestores the weight of the car.

Upon receiving the measuring instruction from the collecting unit 2010 via the input and output unit 2208, the measuring unit 2203 generates the per-car conversion information in the same manner as the measuring unit 1203 in the above-described point distributing system 1203, and transmits the generated per-car conversion information to the collecting apparatus 2010 via the input and output unit 2208.

Upon receiving the update time from the collecting apparatus 2010 via the input and output unit 2208, the measuring unit 2203 writes the received update time into the update time storing unit 2211. The contents in the update time storing unit 2211, which has been already written, are to be overwritten.

### (Distributing Unit 2204)

Upon receiving the requesting instruction, all the pieces of the point information stored in the portable terminal apparatus 2060, the update time, and the signature data from the portable terminal apparatus 2060 via the wireless unit 2207, the distributing unit 2204 reads the public key from the public key storing unit 2212, and performs the signature verification using the read public key, all the pieces of the point information, the update time, and the signature data. The signature verification is well known. Therefore, the explanation is omitted here.

If judging that all the pieces of the point information and the update time are valid by performing the signature verification, the distributing unit 2204 compares the received update time and the update time stored in the update time storing unit 2211 to judge whether they are the same.

If judging that they are the same, the distributing unit 2204 judges that all the pieces of the received point information is the latest, and extracts pieces of the point information that include the same train code as the train code included in the car code stored in the car code storing unit 2200, from all the pieces of the received point information. The distributing unit 2204 further obtains the train point and the car point corresponding to the car equipped with the in-car apparatus 2020 from the extracted point information, and obtains the current time from the clock unit 2206. The distributing unit 2204 transmits the obtained time, the train point, the car point and the point transmitting instruction to the portable terminal apparatus 2060 via the wireless unit 2207.

If judging that the received usage information is invalid, or the received update time is not the same as the update time stored in the update time storing unit 2211, the distributing unit 2204 generates the error information, and transmits the generated error information and the error information transmitting instruction to the portable terminal apparatus 2060 via the wireless unit 2060.

### (Wireless Unit 2207)

The wireless unit 2207 receives an electrical signal from the antenna unit 2209, demodulates the received electrical signal, and extracts a pulse signal wave from the demodulated signal. Thewireless unit 2207 decodes the extracted pulse signal wave, and extracts instructions and information.

The instructions to be extracted include the requesting instruction, and the information to be extracted includes all the pieces of point information stored in the portable terminal apparatus 2060, the update time and the signature data.

Upon receiving the data and time obtained by the clock unit 2206, the pair of the train point and the car point, and the point transmitting instructionfrom the distributing unit 2204, the wireless unit 2207 generates a pulse signal wave based on the received time, pair of the train point and the car point and the transmitting instruction, changes the amplitude of the carrier wave based on the generated pulse signal wave as a modulation sign, and outputs the carrier wave, whose amplitude has been changed, to the antenna unit 2209.

Upon receiving the error information transmitting instruction and the error information from the distributing unit 2204, the wireless unit 2207 generates a pulse signal wave based on the received error information transmitting instruction and error information, changes the amplitude of the carrier wave based on the generated pulse signal wave as a modulation sign, and outputs the carrier wave, whose amplitude has been changed, to the antenna unit 2209.

### (Input and Output Unit 2208)

The input and output unit 2208 is the same as the input and output unit 1208 in the above-described embodiment. Therefore, the explanation thereof is omitted here.

### (Antenna Unit 2209)

Upon receiving the carrier wave, whose amplitude has been changed, from the wireless unit 2207, the antenna unit 2209 transmits the carrier wave in the air.

The antenna unit 2209 receives a radio wave, converts the received radio wave to an electrical signal, and outputs the electrical signal to the wireless unit 2207.

### <Structure of Managing Apparatus 2030>

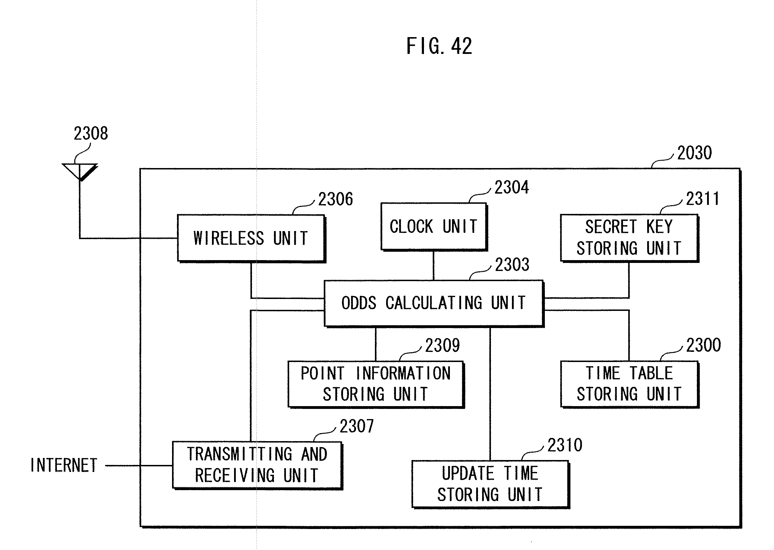

As FIG.42 shows, the managing apparatus 2030 includes a time table storing unit 2300, a odds calculating unit 2303, a clock unit 2304, a wireless unit 2306, a transmitting and receiving unit 2307, an antenna unit 2308, a point information storing unit 2309, an update time storing unit 2310, and a private key storing unit 2311.

The managing apparatus 2030 is, more specifically, a computer system structured by a microprocessor, a ROM, a RAM, a hard disk unit, a display unit, a modem, and so on. A computer program is stored in the ROM or the hard disk unit. The microprocessor operates in accordance with the program, and accordingly, the managing apparatus 2030 can fulfill the function thereof.

### (Time Table Storing Unit 2300)

The time table storing unit 2300 is the same as the time table storing unit 1300 in the above-described point distributing system 1000. Therefore, the explanation is omitted here.

### (Point Information Storing Unit 2309)

The point information storing unit 2309 is the same as the point information storing unit 1309 in the above-described point distributing system 1000. Therefore, the explanation is omitted here.

### (Update Time Storing Unit 2310)

The update time storing unit 2310 has an area for storing the update time.

### (Private Key Storing Unit 2311)

The private key storing unit 2311 stores a private key used for generating the signature data.

### (Clock Unit 2304)

The clock unit 2304 obtains a current time.

### (Odds calculating unit 2303)

The odds calculating unit 2303 calculates the train odds of each train, the car odds of each car of the train, the train point and the car point to be allocated to the user.

The odds calculating unit 2303 prestores the train standard point (e.g. 1000 points), which is the standard for calculating the train point, and the car point (e. g. 100 points), which is the standard for calculating the car point.

The odds calculating unit monitors the time obtained by the clock unit 2304, and judges whether the current time is when the odds should be calculated. If judging affirmatively, the odds calculating unit 2303 obtains the time from the clock unit 2304, and writes the obtained time into the update time storing unit 2301, as the update time. Here, the contents stored in the update time storing unit 2310 are to be overwritten.

The odds calculating unit 2303 extracts the train codes of the train currently in operation and the trains to be operated within 10 minutes from the current time, from the time table for up-trains stored in the time table storing unit 1300, and calculates the train point and each car point for all the trains corresponding to the extracted train codes by performing the same operations as in the above-described point distributing system 1000.

Next, the odds calculating unit 2303 extracts the train codes of the train currently in operation and the trains to be operated within 10 minutes from the current time, from the time table for down-trains stored in the time table storing unit 1300, and calculates the train point and each car point for all the trains corresponding to the extracted train codes in the same manner as described above.

The odds calculating unit 2303 writes all the pieces of the point information, each including the train code and the calculated train point and car point, into the point information storing unit 2309. Here, the contents stored in the point information storing unit 2309 are to be overwritten.

The odds calculating unit 2303 transmits all the pieces of point information written in the point information storing unit 2309 and the displaying instruction to each of the displaying apparatuses 2040 ... 2041 via the transmitting and receiving unit 1207.

Upon receiving the point information requesting instruction, which requests the odds calculating unit 2303 to transmit all the pieces of the point information stored in the storing unit 2309, from the portable terminal apparatus 2060 via the transmitting and receiving unit 2307, the odds calculating unit 2303 reads all the pieces of the point information stored in the point information storing unit 2309, reads the update time from the update time storing unit 2310, and reads the private key from the private key storing unit 2311. Using the read private key, the odds calculating unit 2303 performs the digital signature algorithm on all the pieces of the point information and the update time to generate the signature data, and transmits the generated signature data, all the pieces of the read point information, the update time and the point information response instruction to the portable terminal apparatus 2060 via the transmitting and receiving apparatus 2307.

### (Wireless Unit 2306)

The wireless unit 2306 receives an electrical signal from the antenna unit 2308, demodulates the received electrical signal, and extracts a pulse signal wavefrom the demodulated signal. The wireless unit 2306 decodes the extracted pulse signal, and extracts information.

The information to be extracted includes the train code, the per-train conversion information, and the per-car conversion information.

Upon receiving the collecting instruction and the train code from the odds calculating unit 2303, the wireless unit 2306 generates a pulse signal wave based on the received collecting instruction and the train code, and changes the amplitude of the carrier wave based on the generated signal wave as a modulation sign, and then outputs the carrier wave, whose amplitude has been changed, to the antenna unit 2308.

### (Transmitting and Receiving Unit 2307)

Upon receiving the point information requesting instruction from the portable terminal apparatus 2060 via the Internet, the transmitting and receiving unit 2307 outputs the received point information requesting instruction to the odds calculating unit 2303.

Upon receiving the displaying instruction and all the pieces of the point information, which have been written in the point information storing unit 2309, from the odds calculating unit 2303, the transmitting and receiving unit 2307 transmits the received instruction and information to each of the information displaying apparatuses 2040 ... 2041 via the Internet.

Upon receiving the signature data, all the pieces of the read point information, the update data and time, and the point information response instruction from the odds calculating unit 2303, the transmitting and receiving unit 2307 transmits the received instruction and information to the portable terminal apparatus 2060 via the Internet.

### (Antenna Unit 2308)

The antenna unit 2308 is the same as the antenna unit 308 in the above-described embodiment. Therefore, the explanation is omitted here.

### <Structure of Information Displaying Apparatus 2040>

The structure of each of the information displaying apparatuses 2040... 2041 is the same as the structure of the information displaying apparatus 1040 in the above-described point distributing system 1000. Therefore, the explanation is omitted here.

### <Structure of Recording Medium 2050>

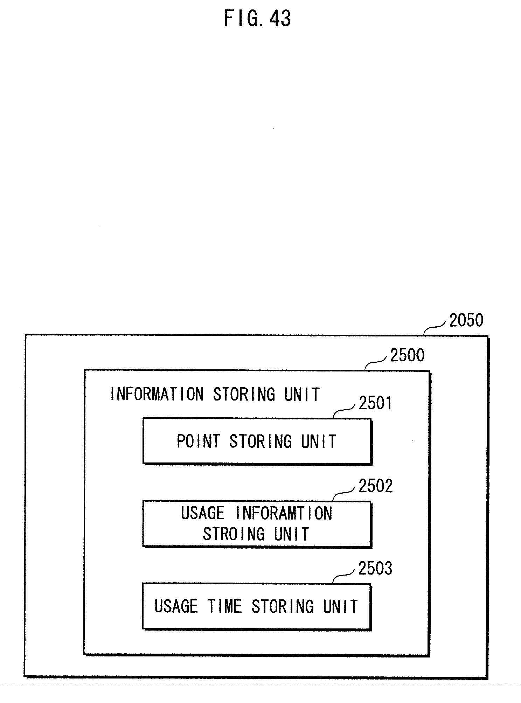

The recording medium 2050 has a tamper-resistant characteristic. As FIG. 43 shows, the recording medium 2050 includes an information storing unit 2500, and the information storing unit 2500 includes a point storing unit 2501, usage information storing unit 2502, and usage time storing unit 2503.

The recording medium 2050 is, more specifically, a computer system structured by a microprocessor, a ROM, a RAM, and so on. A computer program is stored in the ROM. The microprocessor operates in accordance with the computer program, and accordingly, the recording medium 2050 can fulfill the function thereof.

### (Point Storing Unit 2501)

The point storing unit includes an area for storing the total point which is the total of the points distributed by each of the in-car apparatuses 2020 ... 2027.

### (Usage Information Storing Unit 2502)

The usage information storing unit 2502 includes an area for storing all the pieces of the information obtained from the managing apparatus 2030, the update time, and the signature data.

### (Usage Time Storing Unit 2503)

The usage time storing unit 2503 has an area for storing the latest time when the user uses the train, which is the latest time when the point is accumulated last time.

### <Structure of Portable Terminal Apparatus 2060>

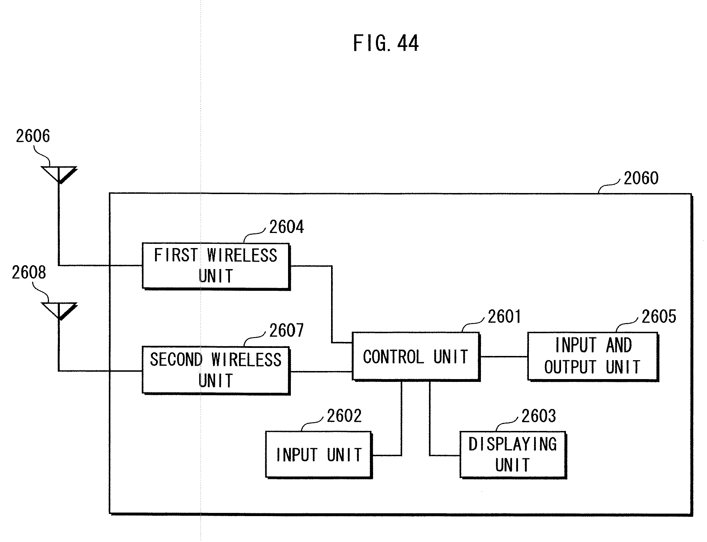

As FIG.44 shows, the portable terminal apparatus 2060 includes a control unit 2601, an input unit 2602, a displaying unit 2603, a first wireless unit 2604, an input and output unit 2605, a first antenna unit 2606, a second wireless unit 2607 and a second antenna unit 2608.

The portable terminal apparatus 2060 is, more specifically, a computer system structured by a microprocessor, a ROM, a RAM, a hard disk unit, a display unit, a modem, and so on. A computer program is stored in the ROM or the hard disk unit. The microprocessor operates in accordance with the computer program, and accordingly, the portable terminal apparatus 2060 can fulfill the function thereof.

### (Control Unit 2601)

The control unit 2601 prestores the standard period based on which the control unit 2601 judges whether to write the train point and the car point received from the in-car apparatus 2020 into the recording medium 2050.

Upon receiving the point information request from the input unit 2602, the control unit transmits the point information requesting instruction to the managing apparatus 2030 via the first wireless unit 2604.

Upon receiving all the pieces of the point information, the update time, the signature data and the point information, which are stored in themanaging apparatus 2030, and the response instruction, the control unit 2601 writes the received all the pieces of the point information, update time and signature data into the usage information storing unit 2502 included in the recording medium 2050 via the input and output unit 2605. Here, the contents of the usage information storing unit 2502 are to be overwritten.

Upon receiving the request for the point distribution from the input unit 2602, the control unit 2601 reads all the pieces of the point information, the update time and the signature data which are stored in the usage information storing unit 2502 from the recording medium 2050 via the input and output unit 2605. Then, the control unit 2601 transmits the read all the pieces of the point information, update data and time, signature data, and the requesting instruction to the in-car apparatus 2020 via the second wireless unit 2607. Upon receiving the pair of the instruction and the information from the in-car apparatus 2020 via the second wireless unit 2607, the control unit 2601 judges whether the received instruction is the point transmitting instruction.

If judging affirmatively, in other words, if judging that the control unit 2601 has received the point transmitting instruction, the update time, the train point, and the car point obtained by the in-car apparatus 2020, the control unit 2601 compares the received time and the time stored in the usage time storing unit 2503 to judge whether the received time is within the standard period. If judging affirmatively, the control unit 2601 discards each received point, time, and point transmitting instruction. If judging negatively, the control unit 2601 adds each received point to the total point stored in the point storing unit 2501 included in the recording medium 2050 to update the total point. Further, the control unit 2601 updates the update time stored in the usage information storing unit 2503 to the received time. Accordingly, the time stored in the usage time storing unit 2503 is updated to the latest time when the train is used last time.

If judging that the received instruction is not the point transmitting instruction, in other words, if judging that the control unit 2601 receives the error information transmitting instruction and the error information, the control unit 2601 outputs the received error information to the displaying unit 2603.

The control unit 2601 deletes the contents stored in the usage information storing unit 2502.

### (Input Unit 2602)

Upon receiving the point information request from the user, the input unit 2602 outputs the received request to the control unit 2601.

Upon receiving the point distributing request from the user, the input unit 2602 outputs the received request to the control unit 2601.

### (Displaying Unit 2603)

Upon receiving the point information from the control unit 2601, the displaying unit 2603 displays the received point information.

Upon receiving the error information from the control unit 2601, the displaying unit 2603 displays an error message indicating that the information transmitted to the in-car apparatus 2020 is invalid.

### (The First Wireless Unit 2604)

The first wireless unit 2604 receives an electrical signal from the first antenna unit 2606, demodulates the received electrical signal, and extracts a pulse signal wave from the demodulated signal. The first wireless unit 2604 decodes the extracted pulse signal wave, extracts instructions and information, and outputs the extracted instructions and information to the control unit 2601.

The instructions to be extracted include the point information response instruction.

Upon extracting the point information response instruction, the first wireless unit 2604 further extracts all the pieces of the point information, the update time and the signature data.

Upon receiving the point information requesting instruction from the control unit 2601, the first wireless unit 2604 generates a pulse signal wave based on the received point information requesting instruction, changes the amplitude of the carrier wave based on the generated pulse signal as a modulation sign, and outputs the carrier wave, whose amplitude has been changed, to the first antenna unit 2606.

### (The Second Wireless Unit 2607)

The second wireless unit 2604 receives an electrical signal from the second antenna unit 2608, demodulates the received electrical signal, and extracts a pulse signal wave from the demodulated signal. The second wireless unit 2604 decodes the extracted pulse signal wave, extracts instructions and information, and outputs the extracted instructions and information to the control unit 2601.

The instructions to be extracted include the point transmitting instruction or the error information transmitting instruction.

If the extracted instruction is the point transmitting instruction, the second wireless unit 2607 further extracts the train point, the car point and the time. If the extracted instruction is the error information transmitting instruction, the second wireless unit 2607 extracts the error information.

Upon receiving all the pieces of the point information, the update time and the signature data read from the recording medium 2050 and the requesting instruction from the control unit 2601, the second wireless unit 2607 generates a pulse signal wave based on the received all the pieces of the point information, update time, signature data and requesting instruction, and changes the amplitude of the carrier wave based on the generated pulse signal wave as a modulation sign, and then outputs the carrier wave, whose amplitude has been changed, to the second antenna unit 2608.

### (Input and Output Unit 2605)

The input and output unit 2605 performs an input and an output of information between the control unit 2601 and the recording medium 2050.

### (The First Antenna Unit 2606 and The Second Antenna Unit 2608)

Upon receiving the carrier wave, whose amplitude has been changed, from the first wireless unit 2604, the first antenna unit 2606 transmits the received carrier wave in the air.

The first antenna unit also receives a radio wave, converts the received radio wave into an electrical signal, and outputs the electrical signal to the first wireless unit 2604.

Upon receiving the carrier wave, whose amplitude has been changed, from the second wireless unit 2607, the second antenna unit 2608 transmits the receive carrier wave in the air.

The second antenna unit 2608 also receives a radiowave, converts the radio wave into an electrical signal, and outputs the electrical signal to the second wireless unit 2607.

### <Operations for Information Collection>

The following describes the information collection performed between the managing apparatus 2030 and each collecting apparatus that is the target of the information collection. Only the differences from the flowchart shown in FIG.35 are described here.

After performing Step S1000 to Step S1020 shown in FIG.35, the odds calculating unit 2303 writes all the pieces of the point information, each including the train code and the calculated train point and car point, into the point information storing unit 2309, and transmits all the pieces of the written point information and the displaying instruction to each of the information displaying apparatuses 2040 ... 2041.

### <Operations relating to Transmission and Reception of Point Information>

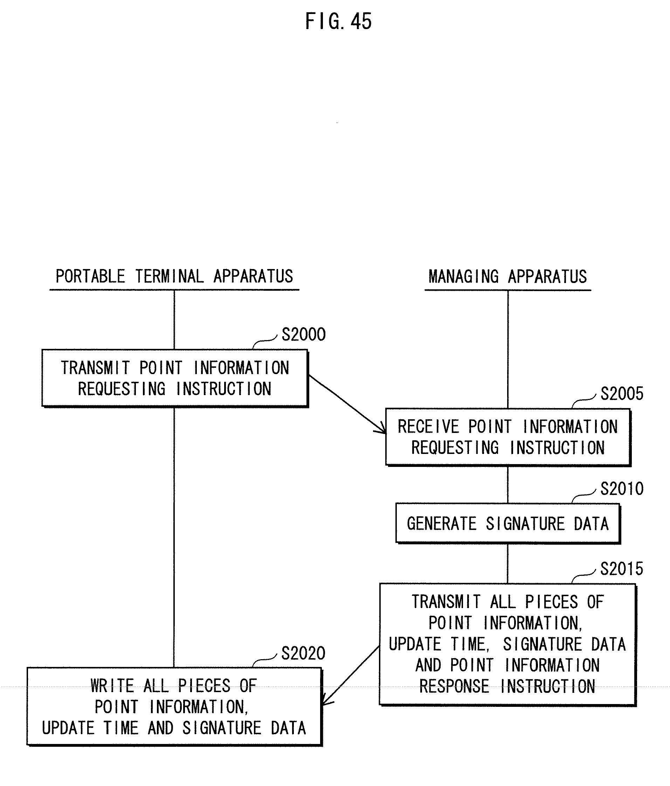

The following describes the transmission and reception of all the pieces of point information, the signature data and the update time performed between the portable terminal apparatus 2060 and the managing apparatus 2030, with reference to a flowchart shown in FIG. 45.

Upon receiving a request for the point information from the input unit 26 02 , the control unit 26 01 included in the portable terminal apparatus 2060 transmits the point information requesting instruction to the managing apparatus 2030 via the first wireless unit 2604 (Step S2000). Upon receiving the point information requesting instruction from the portable terminal apparatus via the transmitting and receiving unit 2307 (Step S2005), the odds calculating unit 2303 included in the managing apparatus 2030 reads all the point information stored in the point information storing unit 2309, reads the update time from the update time storing unit 2319, and further reads the private key from the private key storing unit 2311. Using the read private key, the odds calculating unit 2303 performs a digital signature algorithm on all the pieces of the point information and the update time to generate the signature data (Step S2010).

The odds calculating unit 2303 transmits the generated signature data, the read all the pieces of the point information, update time and point information response instruction to the portable terminal apparatus 2060 via the transmitting and receiving unit 2307 (Step S2015).

Upon receiving all the pieces of the point information, the update time, the signature data, and the point information response instruction from the managing apparatus 2030 via the first wireless unit 2604, the control unit 2601 writes the received all the pieces of the point information, update time, and signature data into the usage information storing unit 2502 included in the recording medium 2050 via the input and output unit 2605 (Step S2020).

### <Operations relating to Point Distribution>

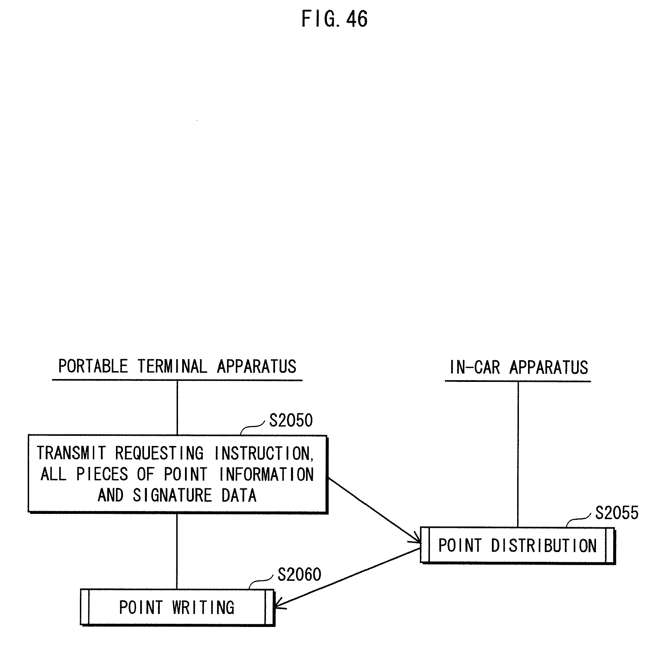

The following describes operations relating to the distribution of the train point and the car point performed between the portable terminal apparatus 2060 and the in-car apparatus 2020, with reference to a flowchart shown in FIG.46.

Upon receiving the request for the point distribution from the input unit 2602, the control unit 2601 included in the portable terminal apparatus 2060 reads all the pieces of the point information, the update time and signature date, which are stored in the usage information storing unit 2502, and transmits the read all the pieces of the point information, update time, signature data, and requesting instruction to the in-car apparatus 2020 via the second wireless unit 2607 (Step S2050).

Upon receiving the requesting instruction and all the point information stored in the portable terminal apparatus 2060, the update time and the signature date from the portable terminal apparatus 2060 via the wireless unit 2207, the distributing unit 2204 included in the in-car apparatus 2020 performs the point distribution, which is described later, and transmits information and instructions as the result of the point distribution to the portable terminal apparatus 2060 (Step S2055).

Upon receiving the information and the instruction as the result of the point distribution, the portable terminal apparatus 2060 performs the point writing, which is described later, using the received information and instruction (Step S2060).

### <Operations for Point Distribution>

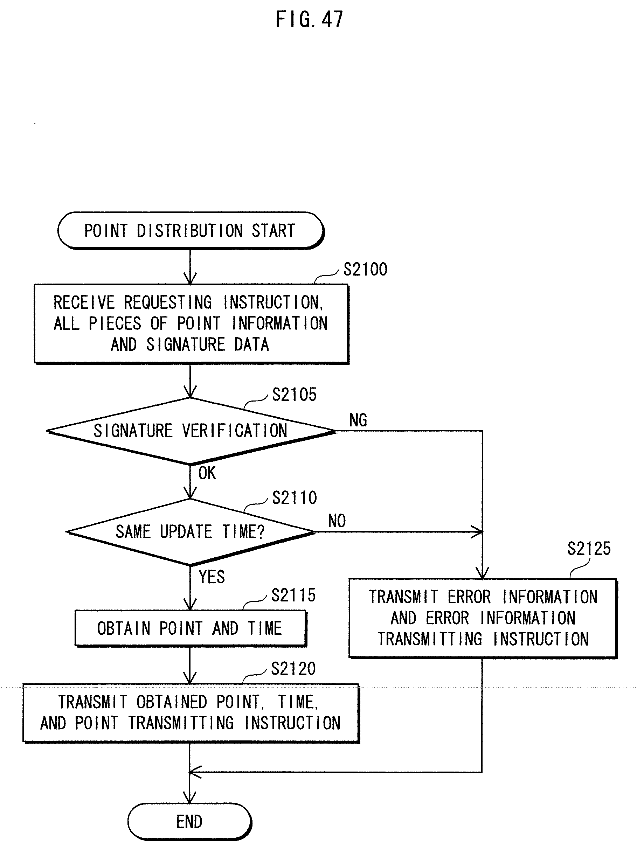

The following describes the operations for the point distribution shown in FIG.45, with reference to a flowchart shown in FIG.47.

Upon receiving the requesting instruction and all the pieces of the point information, the update time and the signature date, which are stored in the portable terminal apparatus 2060, from the portable terminal apparatus 2060 via the wireless unit 2207 (Step S2100), the distributing unit 2204 included in the in-car apparatus 2020 reads the public key from the public key storing unit 2212, and performs the signature verification using the read public key, all the pieces of the point information, the update time and the signature data (Step S2105).

If judging that all the pieces of the point information and the update time are valid by performing the signature verification ("OK" in Step S2105), the distributing unit 2204 compares the received update time and the update time stored in the update time storing unit 2211, and judges whether they are the same (Step S2110).

If judging affirmatively ("YES" in Step S2110), the distributing unit 2204 judges that the received all the pieces of the point information is the latest information, and extracts the point information including the train code which is the same as the train code included in the car code stored in the car code storing unit 2200 from the received all the pieces of the point information. Furthermore, the distributing unit 2204 obtains the train point, and the car point corresponding to the car equipped with the in-car apparatus 2020 from the extracted point information, and obtains the current time from the clock unit 2206 (Step S2115). The distributing unit 2204 transmits the obtained time, the train point, the car point, and the point transmitting instruction to the portable terminal apparatus 2060 via the wireless unit 2207 (Step S2120).

If judging that the received usage information is invalid by performing the signature verification ("NG" in Step S2105), and if judging that the update time are not the same ("NO" in Step S2110), the distributing unit 2204 generates the error information, and transmits the generated error information and the error information transmitting instruction to the portable terminal apparatus 2060 via the wireless unit 2207 (Step S2125).

### <Operations for Point Writing>

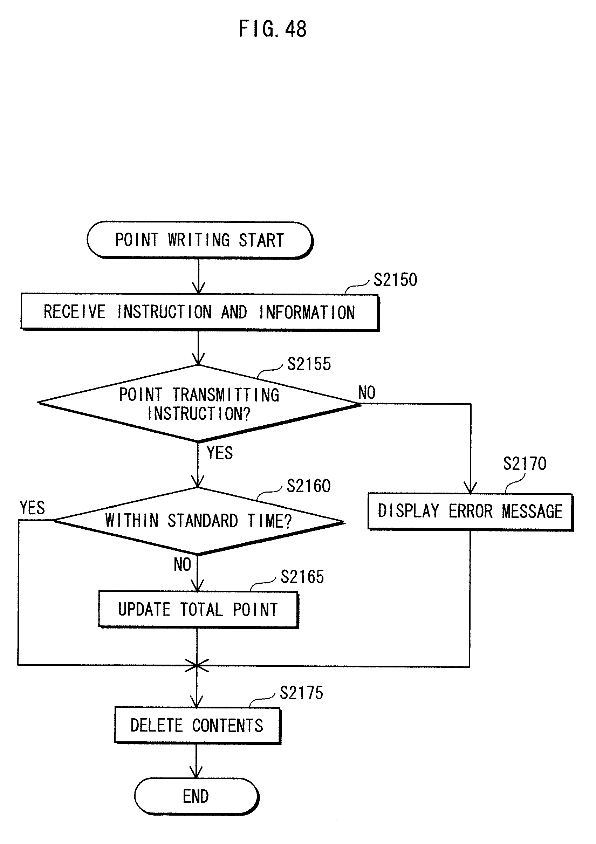

The following describes the point writing shown in FIG.46, with reference to a flowchart shown in FIG.48.

Upon receiving the pair of instructions and the information from the in-car apparatus 2020 via the second wireless unit 2607 (Step S2150), the control unit 2601 included in the portable terminal apparatus 2060 judges whether the received instruction is the point transmitting instruction (Step S2155).

If judging affirmatively, in other words, if judging that the control unit 2601 has received the point transmitting instruction, the time obtained by the in-car apparatus 2020, the train point and the car point ("YES" in Step S2155), the control unit 2601 compares the received time and the time stored in the usage time storing unit 2503, and judges whether the received time is within the standard period (Step S2160).

If judging negatively ("NO" in Step S2160), the control unit 2601 adds each received point to the total point stored in the point storing unit 2501 included in the recording medium 2050 to update the total point, updates the time stored in the usage time storing unit 2503 to the received time (Step S2165), and deletes the contents in the usage information storing unit 2502 (Step S2175).

If judging that the time is within the standard period ("YES" in Step S2160), the control unit 2601 discards the received information and instruction, and deletes the contents stored in the usage information storing unit 2502 (Step S2175).
If judging that the received instruction is not the point transmitting instruction, in other words, if judging that the control unit 2601 has received the error information transmitting instruction and the error information ("NO" in Step S2155), the control unit 2601 outputs the received point error information to the displaying unit 2603. Upon receiving the error information form the control unit 2601, the displaying unit 2603 displays an error message (Step S2170), and the control unit 2601 deletes the contents stored in the usage information storing unit 2502 (Step S2175).

### 1.22 Modifications

The embodiment described above is only an example for carrying out the invention, and the present invention is not limited to the embodiment. The present invention can be carried out in various manners as long as it is within the scope of the invention. The following are the possible modifications.
(1) Instead of measuring the weight to obtain the per-car converted passenger number, using a human sensor set up near the door of each car, the measuring unit 203 included in the in-car apparatus 20 may obtain the per-car converted passenger number by counting the number of people who get on or get off the train. The measuring unit 203 stores the latest per-car converted passenger number.
(2) In (1), the total per-car passenger number may be counted in the manner described in the embodiment above. Also, the number of the passengers detected by the human sensor may be stored as the total per-car passenger number in the passenger number storing unit 202.
   In the case of regarding the number of the passengers as the total per-car passenger number, only the pair of the usage information and the signature data and the usage information distributing instruction are transmitted and received between the portable terminal apparatus and the in-car apparatus, and other information and instructions are not transmitted and received.
(3) In (2), in the case of regarding the number of passengers detected by the human sensor as the total per-car passenger number, the timing with which the collecting apparatus collects the car boarding information from each car and transmitting the car boarding information to the managing apparatus 30 may be the timing described in the embodiment above, or the timing described next.

To judge whether to calculate the odds, the managing apparatus 30 obtains all the train codes of the target trains, as well as the current time. In the following description, the target trains corresponding to the train codes are trains 2a ... 2b.

The managing apparatus 30 transmits the collecting instruction and the train code to the collecting apparatus 10.

Upon receiving the collecting instruction and the train code from the managing apparatus 30, if the received train code is the same as the stored train code, the collecting apparatus 10 first transmits the measuring instruction to the in-car apparatus 20. Upon receiving the measuring instruction from the colleting apparatus 10, the in-car apparatus generates the per-car conversion information using the latest per-car converted passenger number and the train code, and further generates the car boarding information using the passenger number stored in the passenger number storing unit 202 and the car code, and then transmits the generated per-car conversion information and the car boarding information to the collecting apparatus 10.

The colleting apparatus 10 sequentially performs the above-described operations for each of the in-car apparatuses 21, ..., 23, and each of the in-car apparatuses 21, ..., 23 performs the same operations as the in-car apparatus 20.

The collecting apparatus 10 generates the per-train conversion information and the train boarding information, using the train code and each piece of the per-car conversion information and the boarding information received from each in-car apparatus. The collecting apparatus 10 first transmits the train code, the per-train conversion information and each piece of the per-car conversion information to the managing apparatus 39 by wireless. Here, the collecting apparatus 10 temporally stores the generated train boarding information and the colleted car boarding information.

Upon receiving the train code, the per-train conversion information and each piece of the per-car conversion information, the managing apparatus 30 temporally stores the received train code, the per-train conversion information and each piece of the per-car conversion information, and transmits the notifying instruction and the train code to the collecting apparatus 10 by wireless.

Upon receiving the notifying instruction and the train code from the managing apparatus 30, the collecting apparatus 10 transmits the temporally stored train boarding information, each piece of the car boarding information, and train code to the managing apparatus 30.

Upon receiving all of the per-train conversion information, the per-car conversion information, the train boarding information and each piece of the car boarding information from the collecting apparatuses 10 ... 11 respectively set up in the trains 2a ... 2b, the managing apparatus 30 calculates the odds, writes the odds, transmits the display information to the information displaying apparatus, determines the point, and writes the determined point.

The following describes the flow of operations for the information collection with reference to FIG.13. Only the modified points are described here. After obtaining the time in Step S10, the managing apparatus 30 calculates the odds and determines the odds, instead of performing Step S 15 to Step S25.

Here, the flow of operations for the odds calculation and the point determination is described next. Only the modified points are described here, with reference to FIG. 14 and FIG. 17 . After performing Step S210, the managing apparatus 30 performs Step S55 and S60, which are shown in FIG. 14, and performs Step S215. After performing Step S225, the managing apparatus 30 performs Step S70 and Step S75, and finishes the operations.
(4) In the embodiment above, the collecting apparatus is set up in each train. However, the present invention is not limited to this. Instead of setting up the collecting apparatus in each train, the wireless unit and the antenna unit my be set up in each of the in-car apparatus 20...27 to perform wireless communications with the managing apparatus 30.

The managing apparatus 30 extracts all the train codes of the collection target trains, at the time of the odds calculation. In the following description, the trains corresponding to the train codes of the collection targets are trains 2a ... 2b.

The managing apparatus 30 transmits the collecting instruction and the train code to the in-car apparatus 20

The in-car apparatus 20 receives the collecting instruction and the train code from the managing apparatus 30, and if the received train code is the same as the train code included in the stored car code, the in-car apparatus 20 obtains the per-car passenger number, generates the car boarding information including the obtained total per-car passenger number and the train code, and transmits the generated car boarding information and the train code to the managing apparatus 30.

Upon receiving the car boarding information and the train code from the in-car apparatus 20, the managing apparatus 30 temporally stores the received car boarding information and the train code.

The managing apparatus 30 performs the above-described operations for each of the in-car apparatuses 21 ... 23, and each of the in-car apparatuses 21 ... 23 performs the same operation as the in-car apparatus 20.

The managing apparatus generates the per-train conversion information for each train code received from each in-car apparatus, using each piece of the per-car conversion information corresponding to the car code.

The managing apparatus 30 calculates the odds using the per-train conversion information and each piece of per-car conversion information, and writes the calculated odds into the odds information table T110.

The managing apparatus 30 extracts all the train codes of the trains which are targets of the information collection at the time of point determination. In the following description, the trains corresponding to the train codes which are the targets of the information collection are trains 2a ... 2b.

The managing apparatus 30 transmits the notifying instruction and the train code to the in-car apparatus 20.

The in-car apparatus 20 receives the notifying instruction and the train code from the managing apparatus 30 , and if the received train code is the same as the train code included in the stored car code, the in-car apparatus 20 obtains the total per-car passenger number. The in-car apparatus 20 generates the car boarding information including the obtained total per-car passenger number and the car code, and transmits the generated car boarding information and the train code to the managing apparatus 30.

Upon receiving the car boarding information and the train code from the in-car apparatus 20, the managing apparatus 30 temporally stores the received car boarding information and train code.

The managing apparatus 30 sequentially performs the above-described operations for each of the in-car apparatuses 21 ... 23, and each of the in-car apparatuses 21 ... 23 performs the same operations as the in-car apparatus 20.

The managing apparatus 30 generates the train boarding information for each of the train codes received from each in-car apparatus, using each piece of the train boarding information corresponding to the train code.

The managing apparatus 30 determines the train point and each car point to be allocated to the user, using the train boarding information and each piece of the car boarding information, and writes each determined point into the point table T111.
(5) In the embodiment above, the managing apparatus 30 monitors the time for collecting the information. However, the present invention is not limited to this.

A clock unit that obtains a current time may be included in each of the collecting apparatuses 10 ... 11, and the clock unit may monitor the time and judge whether the time is when the information should be to transmit to the managing apparatus 30.

The following describes the operations performed by each of the collecting apparatuses 10 ... 11 and the managing apparatus 30. Each of the collecting apparatuses 10 ... 11 performs the same operation. Therefore, only the collecting apparatus 10 and the managing apparatus 30 are described here.

If judging that the time is when the information should be transmitted to the managing apparatus 30, the collecting apparatus 10 collects the per-car conversion information from each of the in-car apparatuses 20, 21, 22 and 23. Using each piece of the collected per-car conversion information, the collecting apparatus 10 generates the per-train conversion information, and transmits the generated per-train conversion information, each piece of the collected per-car conversion information, and the train code to the managing apparatus 30.

Upon receiving the per-train conversion information, and each piece of the per-car conversion information and the train code from each of the collecting apparatuses 10 ... 11, the managing apparatus 30 extracts, from all the received train codes, the train code corresponding to any of the train code of the train now in operation and the train code of the train that is going to be in operation within a predetermined time using the time table, and extracts the per-train conversion information and each piece of the per-car conversion information corresponding to the extracted train code. Using the extracted train code, per-train conversion information and each piece of the per-car conversion information, the managing apparatus 30 calculates the odds.

If judging that the information collection performed this time is the second time or later, the collecting apparatus 10 collects the car boarding information from each of the in-car apparatuses 20, 21, 22 and 23. Using each piece of the collected car boarding information, the collecting apparatus 10 generates the train boarding information, and transmits the generated train boarding information, each piece of the collected boarding information, and the train code to the managing apparatus 30.

Upon receiving the train boarding information, each piece of the car boarding information and the train code from each of the collecting apparatuses 10 ... 11, the managing apparatus 30 extracts, from all the received train codes, the train code corresponding to any of the train codes whose odds has been calculated at the time of the information collection performed last time, and the train boarding information and each piece of the car boarding information, corresponding to the extracted train code. Using the extracted train code, the train boarding information and each piece of the car boarding information, the managing apparatus 30 determines the train point and each car point to be allocated to the user.

Each of the in-car apparatuses 20, 21, 22, 23 ... 24, 25, 26 and 27 may monitor the time and judge whether the time is when the information should be transmitted to the managing apparatus 30.

In this case, if judging that the time is when the information should be transmitted to the managing apparatus 30, each in-car apparatus generates the per-car conversion information. Each in-car apparatus transmits the generated per-car conversion information to the collecting apparatus that is connected to the in-car apparatus.

Upon receiving the per-car conversion information from the connected in-car apparatus, each collecting apparatus generates the per-train conversion information using the received per-car conversion information, and transmits the generated per-train conversion information, each piece of the received per-car conversion information, and the train code to the managing apparatus 30.

If judging that the information collection performed this time is the second time or later, each in-car apparatus generates the car boarding information and transmits the generated car boarding information to the collecting apparatus that is connected to the in-car apparatus.

Upon receiving the car boarding information from the in-car apparatus connected to the collecting apparatus, the collecting apparatus generates the train boarding information using each piece of the received car boarding information, and transmits the generated train boarding information, the each piece of received car boarding information and the train code to the managing apparatus 30.
(6)In the above-described embodiment, only one managing apparatus is used. However, the managing apparatus may be set up in each station. Alternately, the managing apparatus and the information displaying apparatus may be combined as one apparatus, and such an apparatus may be set up in each station.
(7) Each of the information displaying apparatuses 40 ... 41 may include a wireless unit and antenna unit for wirelessly transmitting the displaying information to the portable terminal apparatus 60.

If this is the case, the portable terminal apparatus 60 may receive the displaying information from the information displaying apparatus via the Internet, or directly receive the displaying information from the information displaying apparatus by wireless established between the portable terminal apparatus 60 and the information displaying apparatus.
(8) In the above-described embodiment, the total point is recorded and managed by the recording medium 50. However, the present invention is not limited to this.

The managing apparatus 30 may include a managing storing unit that has a storage region corresponding to the terminal identifier, and the total point may be stored and managed for each potable terminal apparatus.

If this is the case, the portable terminal apparatus 60 transmits the terminal identifier to the managing apparatus 30, in addition to the requesting instruction, the usage information and the signature data.

In the case of reading the train point and the car point in the same manner as in the embodiment, the managing apparatus 30 updates the total point by accumulating the read each point in the storing region associated with the received terminal identifier. After updating the total point, the managing apparatus 30 transmits the update completing instruction, indicating that the update of the total point is finished, to the portable terminal apparatus 60. Also, in the case of generating the point absence information in the same manner as in the embodiment, the managing apparatus 30 transmits the point absence information and the absence information transmitting instruction to the portable terminal apparatus 60, and in the case of generating the error information, the managing apparatus 30 transmits the error information and the error information transmitting instruction to the portable terminal apparatus 60.

The potable terminal apparatus 60 judges whether the instruction received form the managing apparatus 30 is the update completing instruction, and if judging that the portable terminal apparatus 60 has received the update completing instruction, the portable terminal apparatus 60 judges whether there is usage information which has not been transmitted yet. If judging that there is such usage information, the portable terminal apparatus transmits the usage information, the signature data, the requesting instruction and the terminal identifier to the managing apparatus 30. If judging that the portable terminal apparatus 60 has not received the update completing instruction, the portable terminal apparatus 60 judges whether the received instruction is the error information transmitting instruction, and if judging that the portable terminal apparatus 60 has received the error information transmitting instruction, the portable terminal apparatus 60 displays the error message using the error information received with the error information transmitting instruction. If judging that the portable terminal apparatus 60 has not received the error information transmitting instruction, in other words, if judging that the portable terminal apparatus 60 has received the point absence information and the absence information transmitting instruction, the portable terminal apparatus 60 displays the point absence message using the received point absence information.
(9) In the above-described embodiment, the generation and the transmission of the per-car conversion information and the distribution of the usage information are performed by one in-car apparatus. However, the present invention is not limited to this. The in-car apparatus may be divided into an apparatus that performs the generation and the transmission of the per-car conversion information and an apparatus that performs the distribution of the usage information.
(10) In the above-described embodiment, the recording medium 50 and the portable terminal apparatus 60 are respectively individual apparatuses. However, the present invention is not limited to this.

The portable terminal apparatus 60 may include the recording medium 50 and the portable terminal apparatus 60. This can be realized by including a storing unit having a tamper-resistant characteristic and the same structure as the information storing unit 500 in the portable terminal apparatus 60.
(11) The train odds may be calculated in the following manner.

The odds calculating unit 303 adds a predetermined numeric value which is 1 or more (e.g. 1) to all the temporally stored per-train converted passenger numbers, and calculates and obtains the ratios using each result of the addition. The odds calculating unit 303 obtains the reciprocal numbers of the obtained ratios, and multiplies the reciprocal numbers by a least common multiple of the denominators such that all the ratios become integers. The values obtained as the result of the multiplication are the train odds. The point determination is the same as in the above-described embodiment.

All the per-train converted numbers become not "0" by adding a predetermined number to each of the temporally stored per-train converted passenger number, and the train odds are high as the congestion degree is low in this case as well.

This method may be applied to the calculation of the car odds using the per-car converted passenger number as well.
(12) The train odds and the train point may be calculated in the following manner.

The odds calculating unit 303 calculates and obtains the ratios using only the per-train converted passenger number that is "1" or more among all the temporally stored per-train converted passenger numbers. Next, the odds calculating unit 303 obtains the reciprocal numbers of the ratios, and multiplies the reciprocal numbers by a least common multiple of the denominators such that all the ratios become integers. The per-train converted passenger number "0" corresponds to the train odds "0". Accordingly, the train odds of each train are calculated.

Regarding the train odds that is not "0", the odds calculating unit 303 multiplies the train odds corresponding to the train code by the total per-train passenger number and adds the multiplication result to each other. The calculating unit 303 divides the prestored train standard point by the addition result, and obtains the quotient. The odds calculating unit 303 rounds off the quotient to a nearest integer. Further, the odds calculating unit 303 multiplies the quotient by the car odds of each car. These multiplication results are the train points respectively corresponding to the train odds. Regarding the train code whose train odds are "0", the train standard point (1000 points) is divided by the total per-train passenger number to obtain the quotient. The quotient becomes the train point. The quotient is rounded off to a nearest integer.

The method may be applied to the calculation of the car odds using the per-car converted passenger number.
(13) In the point distributing system 1000, after calculating the train odds by the method described in (12), the train point may be calculated in the following manner.

The odds calculating unit 1303 adds all the train odds except for the train odds that are "0", and divides the train standard point by the addition result to obtain the quotient. The quotient is rounded off to a nearest integer. Next, the odds calculating unit 1303 multiplies the obtained quotient by the train odds of each train to obtain each train point. If the train odds are "0", the train standard point is to be set as the train point for the train odds.

This method may be applied to the calculation of the car point using the car odds.

Also, in the point distributing system 1000, the method may be used for calculating the train point and the car point after calculating the train odds and the car odds by the method described in (12).
(14) In the above-described embodiment, the portable terminal apparatus 60 compares the time included in the received usage information and the time stored in the usage time storing unit 503 included in the recording medium, and if judging that the time included in the received usage information is within the standard period, the portable terminal apparatus 60 discards the received usage information and the signature data. However, the present invention is not limited to this.

The portable terminal apparatus 60 may perform the following operations.

If judging that the time included in the received usage information is within the standard period, the portable terminal apparatus 60 judges whether the train code included in each car code is the same, using the car code included in the received usage information and the car code included in the usage information corresponding to the time stored in the usage time storing unit 503, among the pieces of the usage information stored in the usage information storing unit 502. If judging that the train code is the same, the portable terminal apparatus 60 discards the received usage information and the signature data. If judging that the train code is not the same, the portable terminal apparatus 60 writes the received usage information and the signature data, and the deletion flag "0" in to the usage information storing unit 502, and updates the time stored in the usage time storing unit 503 to the time included in the received usage information.
(15) In the point distributing system 1000, the usage time storing unit 1503 may store the latest time when the train is used last time and the car code indicating the car of the used train in association with each other.

If this is the case, the portable terminal apparatus 1060 receives the car code in addition to the train point, the car point, the time and the point transmitting instruction from the in-car apparatus set up in the car used by the user. The portable terminal apparatus 1060 compares the received time and the time stored in the usage time storing unit 503 included in the recording medium 1050, and judges whether the received time is within the standard period.

If judging that the received time is within the standard period, the portable terminal apparatus 1060 judges whether the train code included in each car code is the same, using the car code that is stored in association with the time stored in the usage time storing unit 503 and the received car code. If judging that the train code is the same, the portable terminal apparatus 1060 discards the received usage information and the signature data.

If judging that the received time is not within the standard period, or if judging that the train code included in each car code is not the same, the portable terminal apparatus 1060 adds each received point to the total point stored in the point storing unit 1501 included in the recording medium 1050 to update the total point, and updates the time and car code stored in the usage time storing unit 1503 to the received time and car code.

The above-described method may used in the point distributing system 2000 as well.
(16) In the point distributing system 1, the signature data for the usage information is generated. However, the digital signature algorithm may be performed only on the car code included in the usage information to generate the signature data.

Also, in the point distributing system 2000, all the pieces of the point information and the signature data for the update time are generated. However, a digital signature algorithm may be performed on all the pieces of the point information to generate signature data.
(17) In the above-described embodiment, the managing apparatus 30 receives the searching instruction and the search information from the portable terminal apparatus 60, and transmits only a piece of odds information that satisfies the conditions given by the received search information to the portable terminal apparatus 60. However, the present invention is not limited to this. The managing apparatus 30 may receive only the searching instruction from the portable terminal apparatus 60, and obtain all the pieces of the odds information calculated last time, and transmit all the pieces of the obtained odds information and the odds transmitting instruction. The portable terminal apparatus 60 displays all the pieces of the received odds information.

The information displaying apparatus 40 may display the all the pieces of the received displaying information.
(18) In the above-described embodiment, the car odds are calculated for each train, using the per-car conversion information of each car in the train, and the car point is calculated based on the car odds. However, the present invention is not limited to this. The car odds may be calculated using the per-car conversion information for all the cars collected from each collecting apparatus, and the car point may be calculated based on the car odds.
(19) The point determination method in the point distributing system 1000 may be applied to the point distributing system 1.
(20) In the above-described embodiment, the odds are calculated by comparing the congestion degrees of plurality of cars and the plurality of trains, and the points based on the odds are calculated. However, the present invention is not limited to this.

The point may be calculated in accordance with the congestion degree of only one car without comparing the congestion degree of the car with congestion degrees of other cars.

The following is an example of this method for the point calculation.

The managing apparatus prestores a car point table in which a plurality of pairs, each include a range of the per-car converted passenger number and the point corresponding to the range.

For instance, the point "1" is associated with the per-car converted passenger number "101 or more", and the point "10" is associated with the per-car converted passenger number "81 to 100". The point "20" is associated with the per-car converted passenger number "61 to 80", the point "30" is associated with the per-car converted passenger number "41 to 60", the point "40" is associated with the per-car converted passenger number "21 to 40", the point "50" is associated with the per-car converted passenger number "0 to 20".

The managing apparatus obtains the point corresponding to the car from the stored car point table, based on the per-car converted passenger number included in the per-car conversion information collected from the train.

Accordingly, the point for the car can be calculated in accordance with the congestion degree of the car.

Also regarding trains, the point may be calculated in accordance with the congestion degree of the train, without comparing the congestion degree of the train with the congestion degrees of other trains.

This is also realized by the managing apparatus prestoring a table in which a plurality of pairs, each include a range of the per-train converted passenger number and the point corresponding to the range.
(21) The above-described embodiment and modification may be combined together.

### 1.23 Summary of the First Embodiment

As described above, with the point distributing system 1, a railroad company can direct users to a less congested train and car, and it becomes possible to efficiently operate trains.

Also, with the point distributing system 1000 or 2000, a railroad company can direct users to a less congested train and car as well, and it becomes possible to efficiently operate trains.

### 2. The Second Embodiment

The following describes, as the second embodiment, a case where the point distributing system of the present invention is applied to services relating to services for expressway users (Hereinafter called "the road service").

### 2.1 Overview of Point Distributing System 3000

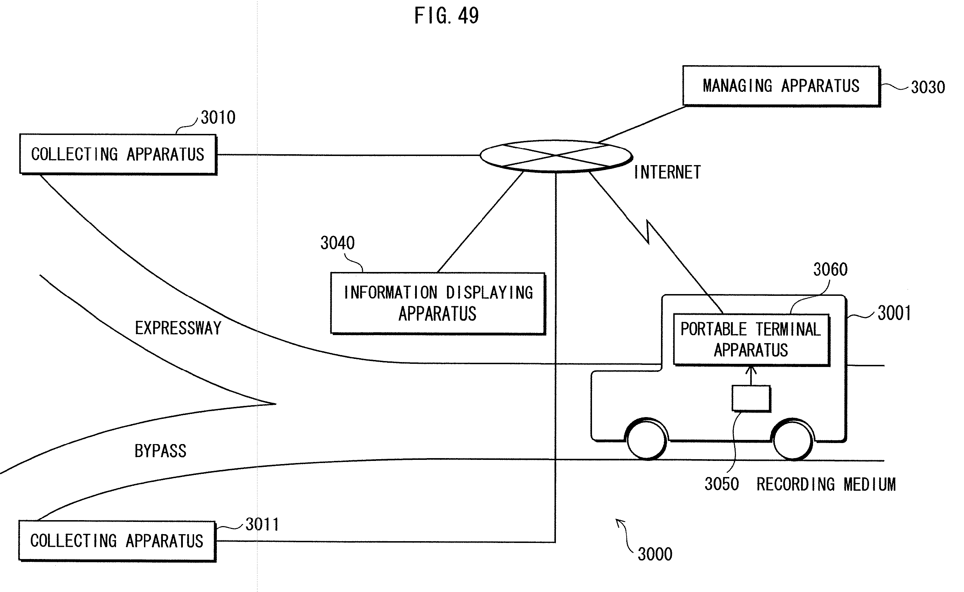

FIG. 49 illustrates the point distributing system 3000 applied to the road service.

The point distributing system 3000 is a system provided by a road service company, and includes collecting apparatuses 3010 and 3011, a managing apparatus 3030, an information displaying apparatus 3040, a recording medium 3050 and a portable terminal apparatus 3060.

The managing apparatus 3030 is connected to the collecting apparatuses 3010 and 3011 and the information displaying apparatus 3040 by network via the Internet.

The portable terminal apparatus 3060 can communicate with the collecting apparatuses 3010 and 3011 wirelessly, and can be connected to the managing apparatus 3030 by network via the Internet. A recording medium 3050 is attached to the portable terminal apparatus 3060 while the portable terminal apparatus performs wireless communications with the collecting apparatuses 3010 and 3011, or connects to the managing apparatus 3030 by a network.

The managing apparatus 3030 periodically collects the congestion degree of each of the expressway and a bypass from the collecting apparatuses 3010 and 3011, and calculates the odds using the collected information. The managing apparatus 3030 also distributes points to the portable terminal apparatus 3060.

The collecting apparatus 3010 is set up at the entrance gate of the expressway (e.g. at a tollgate), and measures the congestion degree of the expressway. If detecting that a car 3001 passes the gate, the collecting apparatus 3010 transmits usage information including the time when the car 3001 passes the gate and an apparatus identifier, and a signature data generated by performing a digital signature algorithm on the usage information, to the portable terminal apparatus 3060 by short-range wireless. Here, the communication range of the short-range wireless is assumed to be 3 m.

The collecting apparatus 3011 is set up at principal gates, and measures the congestion degree of the bypass. If detecting that a car 3001 passes the gate, the collecting apparatus 3011 transmits usage information including the time when the car 3001 passes the gate and an apparatus identifier, and a signature data generated by performing a digital signature algorithm on the usage information, to the portable terminal apparatus 3060 by wireless.

The information displaying apparatus is set up at the branching point between the expressway and the bypass, and displays the odds for the case of using the expressway and the odds for the case of using the bypass. The user can decide which to use, between the expressway and the bypass, based on this odds information.

### 2.2 Collecting Apparatus 3010

The following describes the collecting apparatus 3010. The collecting apparatus 3011 is the same as the collecting apparatus 3010, and therefore the explanation is omitted here.

The collecting apparatus 3010 is, more specifically, a computer system structured by a microprocessor, a ROM, a RAM, a hard disk unit, a display unit, a modem, and so on. A computer program is stored in the ROM or the hard disk unit. The microprocessor operates in accordance with the computer program, and accordingly, the collecting apparatus 3010 can fulfill the function thereof.

The collecting apparatus 3010 includes a clock unit that obtains the time.

The collecting apparatus 3010 stores therein an apparatus identifier for identification of the collecting apparatus 3010, and a private key used for generating the signature data in the same manner as the first embodiment.

The collecting apparatus 3010 counts the number of cars that use the expressway in the period between the odds calculations, which are periodically performed by the managing apparatus 3030, and stores the count result. The collecting apparatus 3 010 also counts the number of transmissions of the usage information and the signature data corresponding to the usage information, which is the number of people to whom the point is to be distributed, and stores the number.

The number of cars can be counted by a sensor, for instance, which may be included in the collecting apparatus 3010 and detect cars passing. The number of people to whom the point is to be distributed can be counted in the same manner as in the first embodiment, in which the collecting apparatus 3010 distributes the usage information and the signature data, and then receives the information receiving instruction from the portable terminal apparatus 3060 by wireless.

Upon receiving a notifying instruction from the managing apparatus 3010 via the Internet, the collecting apparatus 3010 transmits the number of people that has been counted and the apparatus identifier to the managing apparatus 3030 via the Internet, and resets the number of people to "0".

Upon detecting cars passing, the collecting apparatus 3010 counts and stores the number of cars as described above, and obtains the time from the clock unit. Then, the collecting apparatus 3010 generates the usage information using the obtained time and the stored apparatus identifier, and generates the usage information. The collecting apparatus 3010 performs the digital signature algorithm on the generated usage information, using the generated usage information, and transmits the generated usage information and the signature data by wireless.

Upon receiving the information receiving instruction and the terminal identifier for identification of the portable terminal apparatus 3060 from the portable terminal apparatus 3060, the collecting apparatus 3010 counts the number of people to which the point is to be distributed, and stores the count result. Further, the collecting apparatus 3010 transmits the terminal identifier and the response instruction to the portable terminal apparatus 3060 by wireless.

### 2.3 Managing Apparatus 3030

The following describes the managing apparatus 3030.

The managing apparatus 3030 is, more specifically, a computer system structured by a microprocessor, a ROM, a RAM, a hard disk unit, a display unit, a modem and so on. A computer program is stored in the ROM or the hard disk unit. The microprocessor operates in accordance with the computer program, and accordingly, the managing apparatus 3030 can fulfill the function thereof.

The managing apparatus 3030 includes an odds storing region for storing one or more groups each including an odds calculation time, the apparatus identifier, and the odds . The managing apparatus 3030 also includes a point storing region for storing one or more groups each including a point determination time, the apparatus identifier, and the point. Furthermore, the managing apparatus 3030 stores the public key used for performing the signature verification in the same manner as described in the first embodiment.

The odds calculation time indicates the time when the odds are calculated. The apparatus identifier is for identifying the collecting apparatus. The odds are for the case where the car uses the road equipped with the collecting apparatus corresponding to the apparatus identifier.

The point determination time indicates the time when the point is determined. The apparatus identifier is the same as described above. The point is to be allocated to the user who uses the road equipped with the collecting apparatus corresponding to the apparatus identifier.

In the same manner as described in the first embodiment, the managing apparatus 3030 judges whether to calculate the odds, and if judging affirmatively, the managing apparatus obtains the time. Next, the managing apparatus 3030 transmits the notifying instruction to each of the collecting apparatuses 3010 and 3011, and receives the number of people, which has been counted since the odds calculation performed last time, and the apparatus identifier from the collecting apparatuses 3010 and 3011. The managing apparatus 3030 calculates the points corresponding to the respective apparatus identifiers in the same manner as the point calculation described in the first embodiment, using each of the received apparatus identifiers, the number of people and each of the odds calculated last time. Then, the managing apparatus 3030 determines the point to be allocated to the user, and writes the group of the point determination time, the apparatus identifier and the point corresponding to the apparatus identifier into the point storing region.

The managing apparatus 3030 further transmits the collecting instruction to the collecting apparatuses 3010 and 3011, receives the number of cars, which has been counted since the odds calculation performed last time, and the apparatus identifiers, and calculates the odds corresponding to the respective apparatus identifiers in the same manner as the odds calculation described in the first embodiment, using each of the received apparatus identifiers and the number of cars. Then, the managing apparatus 3030 writes groups each including the odds calculation time, the apparatus identifier and the odds corresponding to the apparatus identifier into the odds storing region. The managing apparatus 3030 also transmits each group written in the odds storing region to the information displaying apparatus 3040 via the Internet.

Upon receiving the odds distributing instruction, which instructs the odds distribution, from the portable terminal apparatus 3060 via the Internet, the managing apparatus 3030 obtains all the groups including the apparatus identifier and the odds that correspond to the odds calculation time that is nearest to the time when receiving the instruction, from the odds storing region. Then, the managing apparatus 3030 transmits all the obtained groups to the portable terminal apparatus 3060 via the Internet.

Upon receiving the requesting instruction, the usage information and the signature data corresponding to the usage information, the managing apparatus 3030 performs the signature verification. If judging that the usage information is valid, the managing apparatus 3030 judges whether the point storing regions stores a group including an odds calculation time that is later than and nearest to the time included in the received usage information, the apparatus identifier and the point.

If judging affirmatively, the managing apparatus 3030 obtains the point corresponding to the apparatus identifier included in the received usage information, and transmits the obtained point and the point transmitting instruction to the portable terminal apparatus 3060.

If judging negatively, the managing apparatus 3030 generates the point absence information in the same manner as in the above-described first embodiment, and transmits the generated point absence information and the absence information transmitting instruction to the portable apparatus 3060 via the Internet. If judging that the received usage information is invalid by performing the signature verification, the managing apparatus 3030 generates the error information in the same manner as in the above-described first embodiment, and transmits the generated error information and the error information transmitting instruction to the portable terminal apparatus 4060 via the Internet.

### 2.4 Information Displaying Apparatus 3040

The following describes the structure of the information displaying apparatus 3040.

The information displaying apparatus 3040 is, more specifically, a computer system structured by a microprocessor, a ROM, a RAM, a hard disk unit, a display unit, a modem and so on. A computer program is stored in the ROM or the hard disk unit. The microprocessor operates in accordance with the computer program, and accordingly, the information displaying apparatus 3040 can fulfill the function thereof.

Upon receiving a group including the odds calculation time, the apparatus identifier and the odds corresponding to the apparatus identifier, the information displaying apparatus 3040 displays the received group.

### 2.5 Recording Medium 3050

The following describes the recording medium 3050.

The recording medium 3050 is, more specifically, a computer system structured by a microprocessor, a ROM, a RAM, and so on. A computer program is stored in the ROM. The microprocessor operates in accordance with the computer program, and accordingly, the recording medium 3050 can fulfill the function thereof.

The recording medium 3050 has a tamper-resistant characteristic.

Also, the recording medium 3050 includes a total point storing region for storing the total point which is the accumulation of the points distributed from the managing apparatus 3030, a usage information storing region for storing one or more groups each including the usage information received from the collecting apparatus 3010 or the collecting apparatus 3011, the signature data corresponding to the usage information and the deletion flag, and usage time storing region for storing the time when the user uses the expressway or the bypass.

### 2.6 Portable Terminal Apparatus 3060

The portable terminal apparatus 3060 is, more specifically, a computer system structured by a microprocessor, a ROM, a RAM, a hard disk unit, a display unit, a modem and so on. A computer program is stored in the ROM or the hard disk unit. The microprocessor operates in accordance with the computer program, and accordingly, the portable terminal apparatus 3060 can fulfill the function thereof.

The portable terminal apparatus 3060 prestores a terminal identifier for identification of the portable terminal apparatus 3060, a standard time based on which the portable terminal apparatus 3060 judges whether to write the usage information and the signature data received from the collecting apparatus 3010 into the recording medium 3050, and the transmitting period in which the portable terminal apparatus 3060 transmits the terminal identifier and the information receiving instruction to the collecting apparatus 3010.

Upon receiving the requesting instruction for the odds distribution from the user, the portable terminal 3060 transmits the odds distributing instruction to the managing apparatus 3030 via the Internet. Upon receiving one or more groups each including the odds calculation time, the apparatus identifier and the odds, the portable terminal apparatus 3060 displays the received one or more groups.

Upon receiving a group including the usage information and the signature data from the collecting apparatus 3010 by wireless, the portable terminal apparatus 3060 compares the time included in the received usage information and the time stored in the usage time storing region included in the recording medium 3050 to judge whether the received time is within the standard period. If judging that the time is within the standard period, the portable terminal apparatus 3060 discards the received usage information and the signature data. If judging that the time is not within the standard period, the portable terminal apparatus 3060 writes the received usage information and signature data, and the deletion flag "0" into the usage information storing region included in the recording medium 3050, and updates the time stored in the usage time storing region to the time included in the received usage information. Next, the portable terminal apparatus 3060 reads the prestored terminal identifier, and transmits the read terminal identifier and the information receiving instruction to the collecting apparatus 3010 by wireless, within the prestored transmitting period. Further, upon receiving the response instruction and the terminal identifier from the collecting apparatus 3010 by wireless, the portable terminal apparatus 3060 judges whether the received terminal identifier and the read terminal identifier are the same. If judging that they are not the same, the portable terminal apparatus 3060 judges whether the time is within the transmitting period. If judging that the time is within the transmitting period, the portable terminal apparatus 3060 transmits the read terminal identifier and the information receiving instruction to the collecting apparatus 3010 again. If judging that the time is not within the transmitting period, the portable terminal apparatus 3060 finishes the transmission of the read terminal identifier and the information receiving instruction. If the terminal identifier received form the collecting apparatus 3010 and the read terminal identifier are the same, the portable terminal apparatus 3060 finishes the transmission of the read terminal identifier and the information receiving instruction.

Upon receiving a request for the point distribution from the user, the portable terminal apparatus 3060 obtains one of the groups including the usage information and the signature date stored in the usage information storing region, from the recording medium 3050. The portable terminal apparatus 3060 transmits the obtained group to the managing apparatus 3030 via the Internet. Upon receiving the group including the instruction and the information from the managing apparatus 3030, the portable apparatus 3060 judges whether the received instruction is the point transmitting instruction. If judging that the received instruction is the point transmission instruction, the portable terminal apparatus 3060 adds the received point to the total point stored in the point storing region included in the recording medium 3050 to update the total point, and update the deletion flag corresponding to the transmitted usage information and the signature data from "0" to "1". If judging negatively, the portable terminal apparatus 3060 judges whether the received instruction is the error information transmitting instruction. If judging that the received instruction is the error information transmitting instruction, the portable terminal apparatus 3060 displays the received error message, and updates the deletion flag corresponding to the transmitted usage information and the signature data from "0" to "1". If judging that the received instruction is not the error information transmitting instruction, in other words, if judging that the received instruction is the absence information transmitting instruction, the portable terminal apparatus 3060 displays the undetermined point message. The portable terminal apparatus 3060 judges whether the usage information storing region includes non-transmitted usage information and signature data. If judging affirmatively, the portable terminal apparatus 3060 obtains a group including the non-transmitted usage information and signature data, and performs the above-described operations. If judging negatively, the portable terminal apparatus 3060 deletes among the groups stored in the usage information storing region and including the usage information, the signature data, and the deletion flag, all the groups in which the deletion flag is "1".

### 2.7 Modifications of Point Distributing System 3000

The following are included in the present invention.
(1) The portable terminal apparatus 3060 may be a car-mounted apparatus.

The portable terminal apparatus may me a terminal apparatus including the recording medium 3050 and the portable terminal apparatus 3060, which are described above.
(2) The number of the collecting apparatuses described above may be three or more.
(3) The congestion degree of the expressway may be measured by a conventional method, which is a method to detect passing cars by a magnetic sensor of a car detecting apparatus embedded in the road.

If this is the case, for instance, the collecting apparatus may store congestion levels based on the distance of the congestion, and the car detecting apparatuses are set up at proper places on the expressway. The collecting apparatus calculates the distance of the congestion based on the detection result of each detecting apparatus, and obtains the congestion level based on the calculated distance. The managing apparatus calculates the odds using the congestion level obtained by the collecting apparatus.

The number of cars in the congestion may be obtained by converting the distance of the congestion into the number. The managing apparatus calculates the odds using the obtained number of cars, which is the result of the conversion performed by the collecting apparatus.
(4) The point distribution may be performed based on the method described in the point distributing systems 1000 and 2000.
(5) In the point distributing system 3000, the measurement of the congestion degree and the distribution of the usage information are both performed by the collecting apparatus. However, the present invention is not limited to this. The collecting apparatus may be divided into two apparatuses, namely an apparatus for measuring the congestion degree and transmitting the result, and an apparatus for distributing the usage information.
(6) The above-described embodiments and the modification may be combined with each other.

### 2.8 Summary of the Second Embodiment

As described above, with the point distributing system 3000, the company, providing the road service, can direct the drivers to the relatively uncrowded road out of the expressway and the bypass. Accordingly the point distributing system 3000 can reduce the traffic congestion.

### 3. The Third Embodiment

The following describes, as the third embodiment, the case where the point distributing system of the present invention is applied to a food service relating to a restaurant and so on (hereinafter called "the restaurant service").

### 3.1 Overview of Point Distributing System 4000

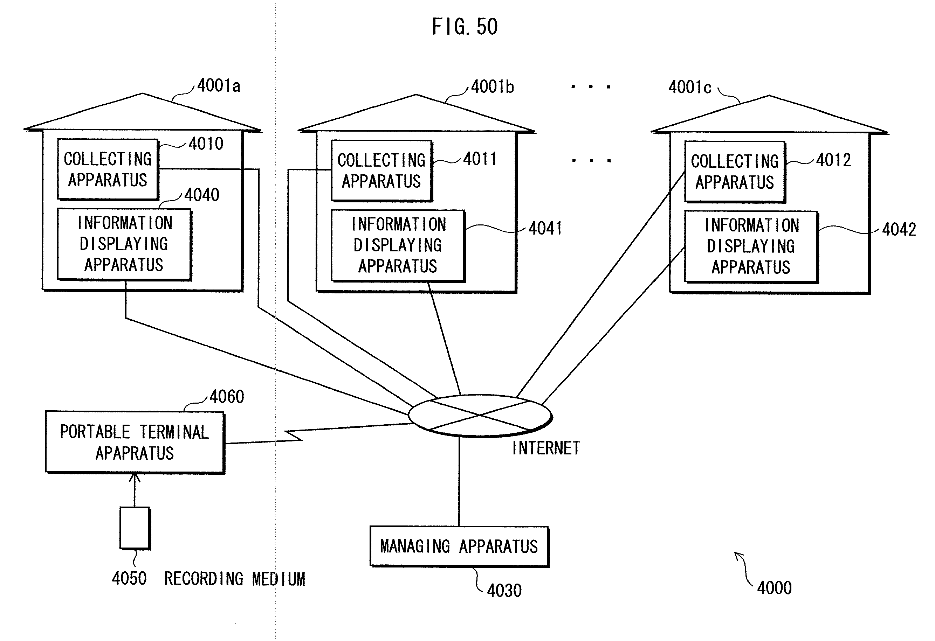

FIG.50 shows the point distributing system 4000 in the case of being applied to the restaurant service.

The point distributing system 4000 is a system provided by a restaurant service company, and includes collecting apparatuses 4010, 4011, ..., and 4012 and information displaying apparatuses 4040, 4041, ..., and 4042, which are set up in restaurants 4001a, 4001b ..., and 4001c, a managing apparatus 4030, a recording medium 4050, and a portable terminal apparatus 4060.

The managing apparatus 4030 is connected to each of the collecting apparatuses 4010, 4011, ..., 4012 and each of the information displaying apparatuses 4040, 4041, ..., 4042 by a network via the Internet.

The portable terminal apparatus 4060 can wirelessly communicate with each of the collecting apparatuses 4010, 4011, ..., 4012m and is connected to the managing apparatus 4030 by a network via the Internet. A recording medium 4050 is attached to the portable apparatus 4060 while the portable apparatus 4060 wirelessly communicates with the collecting apparatuses 4010, 4011 and 4012 or connects to the managing apparatus 4030 via the Internet.

The managing apparatus 4030 periodically collects the congestion degree from each of the collecting apparatuses 4010, 4011, ..., 4012 and calculates the odds using the collected information. The managing apparatus also distributes the point to the portable terminal apparatus 4060.

The collecting apparatus 4010 measures the congestion degree by detecting comings and the goings of users. If detecting a user is coming into the restaurant, the collecting apparatus 4010 transmits usage information including a usage time and an apparatus identifier, and signature data generated by performing a digital signature algorithm on the usage information, to the portable terminal apparatus 4060 held by the user by a short-range wireless. Here, assume that a source of the transmission of the usage information and the signature data is located in the vicinity of an entrance of the restaurant for instance (e.g. on a ceiling of the restaurant, which is 1 m away from the door), and the communication distance of the short-range wireless is 3 m. The collecting apparatuses 4011 ... 4012 perform the same operation as the collecting apparatus 4010.

The information displaying apparatus 4040 displays the odds of each of the restaurants 4001a, 4001b ... 4001c at the time of the usage. Accordingly, the user can select which restaurant to use from the restaurants 4001a, 4001b and 4001c, based on the odds.

### 3.2 Collecting Apparatus 4010

The following describes the collecting apparatus 4010. The collecting apparatuses 4011, ..., 4012 are the same as the collecting apparatus 4010 and their explanations are omitted here.

The collecting apparatus 4010 is, more specifically, a compute system structured by a microprocessor, a ROM, a RAM, a hard disk unit, a display unit, a modem, and so on. A computer program is stored in the ROM or the hard disk unit. The microprocessor operates in accordance with the program, and accordingly, the collecting apparatus 4010 can fulfill the function thereof.

The collecting apparatus 4010 includes a clock unit that obtains a current time.

The collecting apparatus 4010 stores therein an apparatus identifier for identifying the collecting apparatus 4010, and a private key used for generating the signature data in the same manner as in the above-described embodiment.

The collecting apparatus 4010 counts the number of incoming users and the number of the outgoing users in the period between the odds calculations, which are periodically performed by the managing apparatus 4030, to calculates the number of users in the restaurant 4001a and stores the number. The collecting apparatus 4010 further counts the number of the users to whom the usage information and the signature data corresponding to the usage information have been transmitted, in other words, the number of people to whom the point is to be distributed.

The number of users in the restaurant can be counted by the collecting apparatus 4010 that includes a human sensor that detects incomings and outgoings of the users. The number of people to whom the points are to be distributed can be counted in the same manner as in the above-described embodiments, by wirelessly receiving the information receiving instruction from the portable terminal apparatus 4060 after distributing the usage information and the signature data.

Upon receiving a notifying instruction from the managing apparatus 4030 via the Internet, the collecting apparatus 4010 transmits the counted and stored number of people to whom the points are to be distributed, and the apparatus identifier, to the managing apparatus 4030 via the Internet, and resets the counted number to "0".

Upon receiving the collecting instruction from the managing apparatus 4030 via the Internet, the collecting apparatus 4010 transmits the number of people, which has been counted and stored, and the apparatus identifier to the managing apparatus 4030 via the Internet, and resets the counted number to "0".

Upon detecting that a user enters the restaurant 4001a, the collecting apparatus 4010 calculates and stores the number of users in the restaurant, and obtains the time from the clock unit. The collecting apparatus 4010 generates the usage information using the obtained time and the stored apparatus identifier, performing a digital signature algorithm on the generate usage information using the secret key, to generate the signature data, and transmits the generated usage information and the signature data by wireless.

Upon receiving the information receiving instruction and the terminal identifier for identifying the portable terminal apparatus 4060, from the portable terminal apparatus 4060, the collecting apparatus 4010 counts and stores the number of people to whom the points are to be distributed. Further, the collecting apparatus 4010 transmits the terminal identifier and the response instruction to the portable terminal apparatus 4060 by wireless.

### 3.3 managing apparatus 4030

The following describes the managing apparatus 4030.

The managing apparatus 4030 is, more specifically, a computer system structured by a microprocessor, a ROM, a RAM, a hard disk unit, a display unit, a modem and so on. A computer program is stored in the ROM or the hard disk unit. The microprocessor operates in accordance with the program, and accordingly, the managing apparatus 4030 can fulfill the function thereof.

The managing apparatus 4030 includes a point storing region for storing one or more groups including an odds calculation time, the apparatus identifier and the point, and further stores the public key used for performing the signature verification in the same manner as in the above-described embodiments.

The odds calculation time is for indicating the time when the odds are calculated. The apparatus identifier is for identifying the collecting apparatus. The odds are for the case where the user uses the restaurant equipped with the collecting apparatus corresponding to the apparatus identifier.

The point determination time is the time when the point is determined. The apparatus identifier is the same as that described above. The point is to be allocated to the user who uses the restaurant.

The managing apparatus 4030 judges whether to calculate the odds in the same manner as in the above-described embodiment. If judging affirmatively, the managing apparatus 4030 obtains the time. Next, the managing apparatus 4030 transmits the notifying instruction to each of the collecting apparatuses 4010, 4011... 4012, and receives the number of people and the apparatus identifier from each of the collecting apparatuses 4010, 4011 ... 4012. The managing apparatus 4030 calculates the point corresponding to each apparatus identifier using each apparatus identifier, each number of people and each of the odds calculated last time, in the same manner as the point calculation method as described in the embodiments above. Then, the managing apparatus 4030 determines the point to be allocated to the user, and writes a group including the time when the point is determined, the apparatus identifier, and the point corresponding to the apparatus identifier into the point storing region.

The managing apparatus 4030 further transmits the collecting instruction to each of the collecting apparatuses 4010, 4011... 4012 and receives the number of people and the apparatus identifier from each of the collecting apparatuses 4010, 4011 ··· 4012. The managing apparatus 4030 calculates the odds for each apparatus identifier by the same odds calculation method as in the above-described embodiments, using the received each apparatus identifier and number of people. The managing apparatus 4030 writes groups, each including the odds calculation time, the apparatus identifier and the odds corresponding to the apparatus identifier, into the odds storing region. The managing apparatus 4030 transmits each group written into the odds storing region to the information displaying apparatus 4040 via the Internet.

Upon receiving the odds distributing instruction for requesting the odds distribution from the portable terminal apparatus 4060 via the Internet, the managing apparatus 4030 obtains, from the odds storing region, all the groups that includes the odds and the apparatus identifier corresponding to the odds calculation time that is nearest to the time of the reception of the odds distributing instruction. Then the managing apparatus 4030 transmits all the obtained groups to the portable terminal apparatus 4060 via the Internet.

Upon receiving the requesting instruction, the usage information and the signature data corresponding to the usage information, the managing apparatus 4030 performs the signature verification. If judging that the usage information is valid, the managing apparatus 4030 judges whether the point storing region includes the group that includes the odds calculation time that is later than and the nearest to the time included in the received usage information, the apparatus identifier, and the point.

If judging that the point storing region includes such a group, the managing apparatus 4030 obtains the point corresponding to the apparatus identifier included in the received usage information, and transmits the obtained point and the point transmitting instruction to the portable terminal apparatus 4060 via the Internet.

If judging that the point storing region does not include such a group, the managing apparatus 4030 generates the point absence information in the same manner as in the above-described embodiments, and transmits the generated point absence information and the absence information transmitting instruction to the portable terminal apparatus 4060 via the Internet. If judging that the received usage information is invalid by performing the signature verification, the managing apparatus 4030 generates the error information in the same manner as in the above-described embodiments, and transmits the generated error information and the error information transmitting instruction to the portable terminal apparatus 4060 via the Internet.

### 3.4 Information Displaying Apparatus 4040

The following describes the structure of the information displaying apparatus 4040.

The information displaying apparatus 4040 is, more specifically, a computer system structured by a microprocessor, a ROM, a RAM, a hard disk unit, a display unit, a modem, and so on. A computer program is stored in the ROM or the hard disk unit. The microprocessor operates in accordance with the computer program, and accordingly, the information displaying apparatus 4040 can fulfill the function thereof.

Upon receiving the group including the odds calculation time, the apparatus identifier and the odds corresponding to the apparatus identifier from the managing apparatus 4030 via the Internet, the information displaying apparatus 4040 displays the received group.

The information displaying apparatuses 4041 ··· 4042 are the same as the information displaying apparatus 4040. Therefore, their explanations are omitted here.

### 3.5 Recording Medium 4050

The following describes the recording medium 4050.

The recording medium 4050 is, more specifically, a computer system structured by a microprocessor, a ROM, a RAM and so on. A computer program is stored in the ROM. The microprocessor operates in accordance with the computer program, and accordingly, the recording medium 4050 can fulfill the function thereof.

The recording medium has a tamper-resistant characteristic.

The recording medium 4050 includes a total point storing region for storing the total point that is the accumulation of the points distributed by the managing apparatus 4030, a usage information storing region for storing one or more groups each including the usage information transmitted from one of the collecting apparatuses 4010, 4011 ... 4012, the signature data corresponding to the usage information, and the deletion flag, and a usage time storing region for storing the time when the user uses one of the restaurants 4001a, 4001b ... 4001c.

### Portable Terminal Apparatus 4060

The following describes the portable terminal apparatus 4060.

The portable terminal apparatus 4060 is, more specifically, a computer system structured by a microprocessor, a ROM, a RAM, a hard disk unit, a display unit a modem and so on. A computer program is stored in the ROM or the hard disk unit. The microprocessor operates in accordance with the computer program, and accordingly the portable terminal apparatus 4060 can fulfill the function thereof.

The portable terminal apparatus 4060 prestores, the terminal identifier for identification of the portable terminal apparatus 4060, the standard time based on which the portable terminal apparatus 4060 judges whether to write the usage information and the signature data received from the collecting apparatus 4010 into the recording medium 4050, and the transmitting period for which the portable terminal apparatus 4060 transmits the terminal identifier and the information receiving instruction to the collecting apparatus 4010.

Upon receiving the odds distribution requesting instruction from the user, the portable terminal apparatus 4060 transmits the odds distributing instruction to the managing apparatus 4030 via the Internet. Upon receiving one or more groups each including the odds calculation time, the apparatus identifier and the odds, the portable terminal apparatus 4060 displays the received one or more groups.

Upon receiving the group including the usage information and the signature data from the collecting apparatus 4010 by wireless, the portable terminal apparatus 4060 compares the time included in the received usage information and the time stored in the usage time storing region included in the recording medium 4050 to judge whether the time included in the received usage information is within the standard period. If judging that the time is within the standard period, the portable terminal apparatus 4060 discards the received usage information and the signature data. If judging that the time is not within the standard period, the portable terminal apparatus 4060 writes the received usage information and signature data, and the deletion flag "0" into the usage information storing region included in the recording medium 4050, and updates the time stored in the usage time storing region to the time included in the received usage information. Next, the portable terminal apparatus 4060 reads the prestored terminal identifier, and transmits the read terminal identifier and the information receiving instruction to the collecting apparatus 4010 by wireless for the prestored transmitting period. Upon further receiving the response instruction and the terminal identifier from the collecting apparatus 4010 by wireless, the portable terminal apparatus 4060 judges whether the received terminal identifier is the same as the read terminal identifier. If judging that they are not the same, the portable terminal apparatus judges whether the time is within the transmitting period. If judging that the time is within the transmitting period, the portable terminal apparatus 4060 retransmits the read terminal identifier and the information receiving instruction to the collecting apparatus 4010. If judging that the time is not within the transmitting period, the portable terminal apparatus 4060 finishes the transmission of the read terminal identifier and the information receiving instruction. If judging that the terminal identifier received from the collecting apparatus 4010 and the read terminal identifier are the same, the portable terminal apparatus 4010 finishes the transmission of the read terminal identifier and the information receiving instruction.

Upon receiving the request for the point distribution from the user, the portable terminal apparatus 4060 obtains a group including the usage information stored in the usage information storing region and the signature data, from the recording medium 4050. The portable terminal apparatus 4060 transmits the obtained group to the managing apparatus 4030 via the Internet. Upon receiving the group including the instruction and the information from the managing apparatus 4030, the portable terminal apparatus 4030 judges whether the received instruction is the point transmitting instruction. If judging that the received instruction is the point transmitting instruction, the portable terminal apparatus 4060 adds the received point to the total point stored in the point storing region included in the recording medium 4050 to update the total point, and updates the deletion flag corresponding to the transmitted usage information and signature data from "0" to "1". If judging negatively, the portable terminal apparatus 4060 judges whether the received instruction is the error information transmitting instruction. If judging that the received instruction is the transmitting instruction, the portable terminal apparatus 4060 displays the received error information, and updates the deletion flag corresponding to the transmitted usage information and signature data from "0" to "1". If judging that the received instruction is not the error information transmitting instruction, in other words, if judging that the received instruction is the absence information transmitting instruction, the portable terminal apparatus 4060 displays the undetermined point message. The portable terminal apparatus 4060 judges whether the usage information storing region stores non-transmitted usage information and signature data, and if judging affirmatively, the portable terminal apparatus 4060 obtains one group including the non-transmitted usage information and signature data, and performs the above-described operations. If judging that the usage information storing region does not stores such usage information and signature data, the portable terminal apparatus 4060 deletes the groups that include the deletion flag "1" from all the groups which are stored in the usage information storing region and includes the usage information, signature data and tie deletion flag.

### 3.7 Modifications of Point Distributing System 4000

The present invention includes the following cases.
(1) The point distribution method described in the point distribution systems 1000 and 2000 may used.
(2) In the point distributing system 4000, the measurement of the congestion degree and the distribution of the usage information are both performed by the collecting apparatus. However, the present invention is not limited to this. The collecting apparatus may be divided into two apparatuses, namely an apparatus for measuring the congestion degree and transmitting the result, and an apparatus for distributing the usage information.
(3) In the above-described embodiment, the point distribution system is applied to the restaurant service. However, the present invention is not limited to this. The point distributing system may be applied to recreation services provided in a theme park, an amusement park and the like (Hereinafter called "the theme park service").

In the case of applying to the theme park service, the collection apparatus and the information displaying apparatus are to be set up in each attraction in the theme park.

Accordingly, the point distributing system can prevent people from being concentrated at a particular attraction, and direct people to relatively uncrowded attractions.
(4) In the above-described embodiment, the recording medium and the portable terminal apparatus 4060 are separated from each other. However, the present invention is not limited to this.

The portable terminal apparatus may be an apparatus including both of the above-described recording medium 4050 and the portable terminal apparatus 4060 combined together.
(5) The above-described embodiment and the modifications may be combined with each other.

### 3.8 Summary of the Third Embodiment

As described above, with the point distributing system 4000, the company operating the restaurants 4001a, 4001b ... 4001c prevents customers from concentrating at a particular restaurant, and direct the customers to relatively uncrowded restaurants.

### 4. Modifications of Point Use

In the first embodiment, the user uses the points to receive special benefits provided by the railway company. However, the present invention is not limited to this.

The user may use the points to buy goods. For instance, the user changes the accumulated points to electronic money and use the electronic money to purchase goods.

The accumulated point may be used for payment for train fares.

Regarding the present invention, the concept of the purchase of goods includes a reception of services, such as special benefits.

The following describes a modification in which the collected points are used as electronic money, and a modification in which the points are used for payment for fares.

### 4.1 Use as Electronic Money

In this modification, the operations up to the point distribution are the same as those in the first embodiment. Therefore, their explanations are omitted here.

The following mainly describes the difference from the first embodiment.

In his modification, the structure of the recording medium is different from that in the first embodiment, and the other apparatuses are the same as those in the first embodiment. Accordingly, the apparatuses described in the first embodiment may be used for the following explanation if necessary.

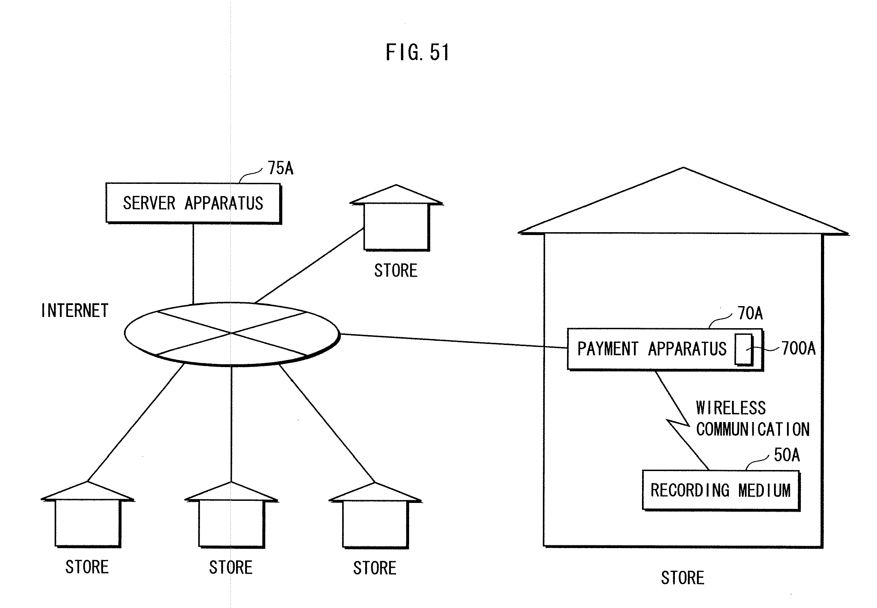

As FIG.51 shows, the system in the case of using electronic money includes a recording medium 50A, a payment apparatus 70A, and a server apparatus 75A managed by a railway company.

The payment apparatus 70A is set up in a store which accepts use of electronic money, and performs settlements of accounts. The payment apparatus 70A is connected with the server apparatus 75A by a network via the Internet.

### (1) Overview

The recording medium 50A is attached to the portable terminal apparatus 60 while the user uses the train or the portable terminal apparatus 60 request for the point distribution. Upon wirelessly receiving the usage information from the in-car apparatus set up in the car where the user gets on, the portable terminal apparatus 60 writes the received usage information into the recording medium 50A. Also, upon receiving the point from the managing apparatus 30, the portable terminal apparatus 60 adds the received point to the points that have been collected, by outputting the received point and the point writing instruction to the recording medium 50A. After performing Step S470 shown in FIG. 22, the portable terminal apparatus 60 outputs the point writing end instruction to the recording medium 50A.

The user uses the electronic money stored in the recording medium 50A, by bringing the recording medium 50A close to a sensor 700A, which is included in the payment apparatus 70A and performs the short-range wireless communications.

While the recording medium is attached to the portable terminal apparatus 60, electricity is supplied to the recording medium 50A by the portable terminal apparatus 60. At the time of using the electronic money, the recording medium 50A receives an electrical signal from the payment apparatus 70A by short-range wireless, and charges the received electrical signal to supply electricity to the inside.

### (2) Recording Medium 50A

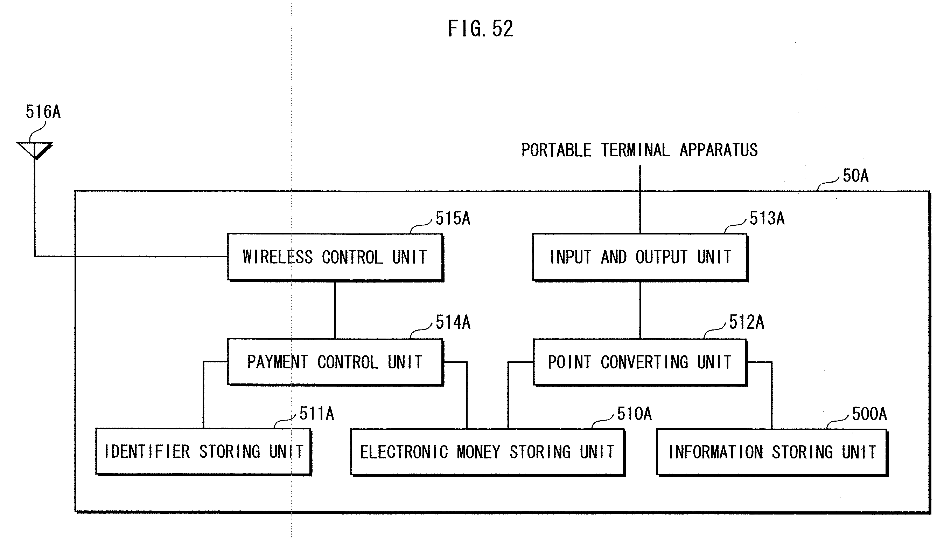

As shown in FIG.52, the recording medium 50A includes an information storing unit 500A, an electronic money storing unit 510A, an identifier storing unit 511A, a point converting unit 512A, an input and output unit 513A, a payment control unit 514A and a wireless control unit 515A.

The recording medium 50A is, more specifically, a computer system structured by a microprocessor, a ROM, a RAM and so on. A computer program is stored in the ROM. The microprocessor operates in accordance with the computer program, and accordingly the recording medium 50A can fulfill the function thereof.

### <Information storing Unit 500A>

The information storing unit 500A has a tamper-resistant characteristic, and includes a point storing unit 501A, a usage information storing unit 502A and a usage time storing unit 503A, which are not illustrated.

The point storing unit 501A, the usage information storing unit 502A and the usage time storing unit 503A are respectively the point storing unit 501m the usage information storing unit and the usage time storing unit 503 in the first embodiment. Therefore, their explanations are omitted here.

### <Electronic Money Storing Unit 510A>

The electronic money storing unit 510A has a tamper-resistant characteristic, and includes a management table T500.

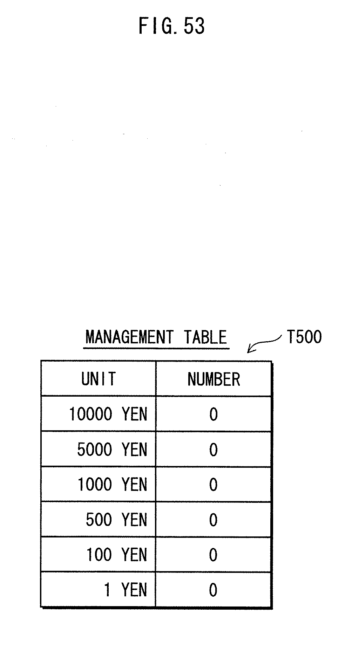

As FIG. 53 shows as an example, the management table T500 includes regions for storing a plurality of pairs of a unit and a number.

The unit indicates the denominations of the money that is under management. In this example, the units are namely 10000 yen, 5000 yen, 1000 yen, 500 yen, 100 yen and 1 yen.

The number indicates the number of the units, where each amount of money shown in the table corresponds to a number "1". For instance, if the number of the unit "1000 yen" is "2", this means that electronic money that is worth 2000 yen is under management. Here, initial value for each number is "0". The management table T500 of FIG.53 shows that no electronic money is currently available.

### <Identifier Storing Unit 511A>

The identifier storing unit 511A has a tamper-resistant characteristic, and prestores a recording medium ID that identifies the recording medium 50A.

### <Point Converting Unit 512A>

The point converting unit 512A has a tamper-resistant characteristic, and performs a point writing and a conversion from the total point to the electronic money.

Upon receiving the point writing instruction and the point from the portable terminal apparatus 60 via the input and output unit 513A, the point converting unit 512A adds the received point to the point stored in the point storing unit 501A.

Upon receiving the point writing end instruction from the portable terminal apparatus 60, the point converting unit 512A judges whether the total point stored in the point storing unit 501A is not less than a predetermined point (e.g. 1000 points). If judging that the point is not less than the predetermined point, the point converting unit 512A converts the points to a predetermined amount of money (e.g. 1000 yen) in units of a predetermined number of points (e.g. 1000 points), and updates the management table T500 based on the conversion result.

Also, the point converting unit 512A subtracts the points converted to electronic money from the stored points, and stores the subtraction result in the point storing unit 501A.

If the stored total point is less than the predetermined point, the point converting unit 512A does not convert the point to electronic money.

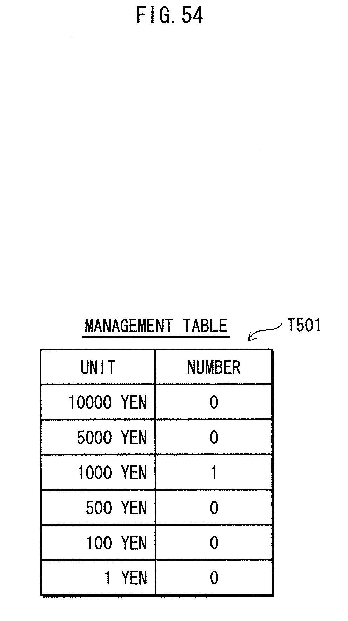

The following describes a case where the total point stored in the point storing unit 501A is 1300 points. The point converting unit 512A converts 1000 points to electronic money that is worth "1000 yen", adds "1" to the number of the units "1000 yen", and then updates the management table T500. The point converting unit 512A subtracts 1000 points used for the conversion to the electronic money from the stored total point, which is 1300 points, and updates the contents of the point storing unit 501A to the subtraction result, which is "300". The management table T501 shown in FIG.54 is the result of the update from the management table T500, where 1000 points is converted to electronic money worth "1000 yen"

In this example, the point converting unit 512A updates the management table T500 to convert the total point to electronic money. However, the present invention is not limited to this. The update may be performed for a management table in which the number of at least one unit is one or more.

### <Input and Output Unit 513A>

The input and output unit 513A outputs information received from the portable terminal apparatus 60 to the information storing unit 500A via the point converting unit 512A.

The input and output unit 513A outputs the information stored in the information storing unit 500A to the portable terminal apparatus 60.

### <Payment Control Unit 514A>

The payment control unit 514A controls operations for using electronic money.

The payment control unit 514A receives money amount information that indicates the amount of money used by the user, and a payment requesting instruction for requesting the payment from the payment apparatus 70A via the wireless control unit 515A.

The payment control unit 514A judges whether the amount of money indicated by the received money amount information is not more than the amount of money stored in the electronic money storing unit 501A, in other words, judges whether the amount of money indicated by the money amount information can be paid with the stored electronic money.

If judging that the amount of money indicated by the money amount information is not more than the stored amount of money, in other words, if judging that the amount of money indicated by the money amount information can be paid with the stored electronic money, the payment control unit 514A reads the recording medium ID stored in the identifier storing unit 511A, and transmits the read recording medium ID and a payment response that indicates that the amount of money is payable with the stored electronic money, to the payment apparatus 70A via the wireless control unit 515A. The payment control unit subtracts the amount money indicated by the money amount information from the amount of money stored in the electronic money storing unit 501A to update the contents of the electronic money storing unit 501A to the subtraction result.

If judging that the amount of money indicated by the money amount information is more than the stored amount of money, in other words, if the amount of money indicated by the money amount information is not payable with the stored electronic money, the payment control unit 514A transmits an unpayable instruction indicating that the amount of money is unpayable with the stored electronic money, to the payment apparatus 70A via the wireless control unit 515A.

The following describes an example of the case where the user uses electronic money.

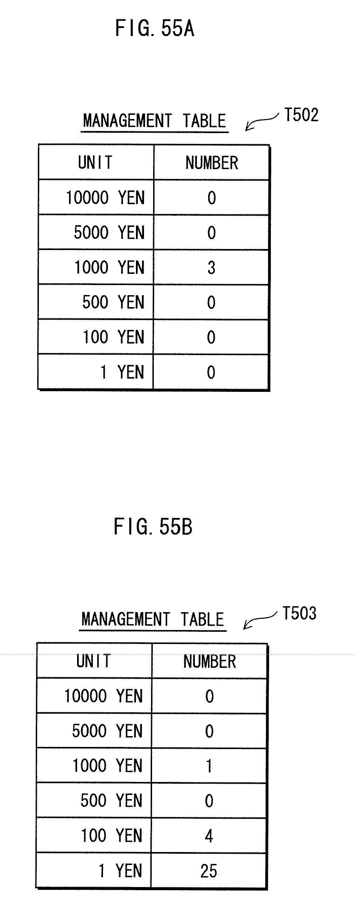

The electronic money storing unit 501A included in the recording medium 50A stores a management table T502 shown in FIG.55A. The management table T502 shows that electronic money that is worth 3000 yen is under management.

The user purchases items worth 1575 yen, and pays for the items by electronic money.

Upon receiving the money amount information indicating the amount of money "1575 yen" and the payment requesting instruction from the payment apparatus 70A, the payment control unit 514A judges whether the electronic money is stored enough for paying the amount of money. In this example, the amount of money "1575 yen" indicated by the money amount information is less than the stored electric money "3000 yen". Therefore, the payment control unit 514A judges that the electronic money is stored enough.

The payment control unit 514A transmits the recording medium ID and the payment response instruction to the payment apparatus 70A. The payment control unit 514A subtracts "1575 yen" from "3000 yen" stored in the electronic money storing unit 501A, and updates the contents stored in the electronic money storing unit 501A to the subtraction result "1425 yen". Inotherwords, the payment control unit 514A updates the management table T502 to a management table T503 shown in FIG.55B such that the number of the unit "1000 yen" becomes "1", the number of the unit "100 yen" becomes "4", and the number of the unit "1 yen" becomes "25".

### <Wireless Control Unit 515A>

The wireless control unit 515A is, for instance, a wireless ID tag, and includes an antenna unit 516A.

The antenna unit 516A is a receiving antenna for receiving a radio wave and converting the received radio wave to an electrical signal. Also, the antenna unit 516A reflects (retransmits) the received radio wave.

The wireless control unit 515A extracts the payment response instruction and the money amount information from the electrical signal converted by the antenna unit 516A, and outputs the extracted payment requesting instruction and the money amount information to the payment control unit 514A.

Upon receiving the payment response instruction and the recording medium ID from the payment control unit 514A, the wireless control unit 515A generates a bit sequence including the payment response instruction and the recording medium ID, and changes the impedance of the antenna unit 516A in accordance with the bits (0 or 1) included in the generated bit sequence. Accordingly, the wireless control unit 515A can transmit the payment response instruction and the recording medium ID to the payment apparatus 70A, using the antenna unit 516A.

Upon receiving the unpayable instruction from the payment control unit 514A, the wireless control unit 515A generates a bit sequence including the unpayable instruction, and changes the impedance of the antenna unit 516A in accordance with the bits (0 or 1) included in the generated bit sequence. Accordingly, the wireless control unit 515A can transmit the unpayable instruction to the payment apparatus 70A, using the antenna unit 516A.

### (3) Payment Apparatus 70A

The payment apparatus 70A transmits the money amount information and the payment requesting instruction to the recording medium 50A, using a sensor 700A that performs a short-range wireless.

Upon receiving the payment response instruction and the recording medium ID from the recording medium 50A using the sensor 700A, the payment apparatus 70A pays the amount of the money, and stores the amount of the paid money and the recording medium ID in association with each other.

Upon receiving the unpayable instruction from the recording medium 50A using the sensor 700A, the payment apparatus 70A displays a message saying that the amount of money is unpayable with the stored electronic money, and notifies the operator of the payment apparatus.

The payment apparatus 70A notifies the amount of the paid money and the recording medium ID, which are stored in the payment apparatus 70A, of the server apparatus 75A managed by the railway company, for instance on a predetermined day of each month.

### (4) Server Apparatus 75A

The server apparatus 75A manages the recording medium ID and the information of the owner of the recording medium (purchaser) identified by the recording medium ID, in association with each other. Here, the information of the owner is, for instance, the name, the address, the age of the owner.

The server apparatus 75A manages the amount of the paid money and the recording medium ID, which have been notified by the payment apparatus 70A.

Since the information of the owner and the amount of the paid money are associated with the recording medium ID, and therefore the server apparatus 75A can associate the amount of the paid money with the information of the owner. This means that the server management apparatus 75A can manage the amount of the used electronic money for each user.

The functions of the server apparatus 75A as described above may be included in the management apparatus 30.

### (5) Operations for Conversion to Electronic Money

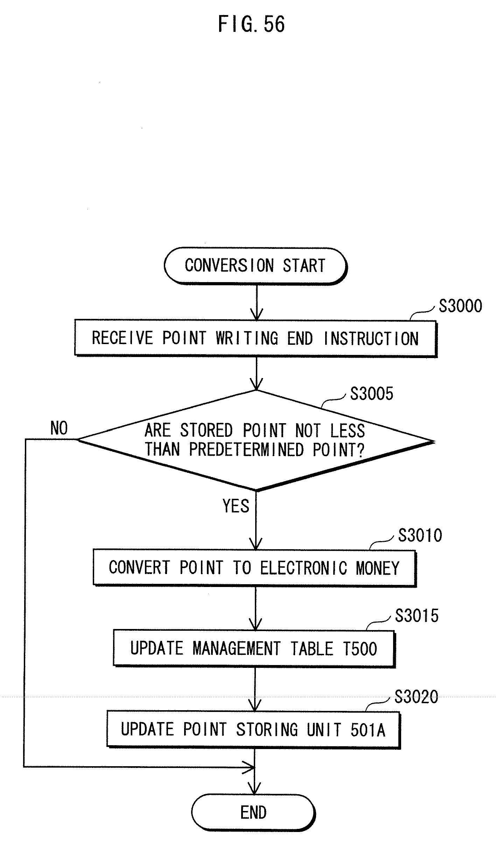

The following describes operations performed for converting the accumulated points to the electronic money, with reference to a flowchart shown in FIG. 56. The conversion is performed after Step S470 shown in FIG.22 is performed, for instance.

Upon receiving the point writing end instruction from the portable terminal apparatus 60 (Step S3000), the point converting unit 512A judges whether the point stored in the point storing unit 501A is not less than a predetermined point (e.g. 1000) (Step S3005). If judging that the point is not less than the predetermined point ("YES" in Step S3005), the point converting unit 512A converts the accumulated point in units of the predetermined points (1000 points) to a predetermine amount of electronic money (e.g. 1000 yen)(Step S3010).

The point converting unit 512A updates the management table T500 based on the conversion result (Step S3015).

Also, the point converting unit 512A subtracts the points converted to the electronic money from the stored points, and stores the subtraction result in the point storing unit 501A (Step S3020).

If judging that the stored points are not less than the predetermined point ("NO" in Step S3005), the point converting unit 512A finishes the operation.

In this modification, the point converting unit 512A updates the managing table T500 when converting the total point to the electronic money. However, the present invention is not limited to this. The point converting unit 512A may update a management table in which the number of at least one unit is one or more.

### (6) Operations at Use of Electronic Money

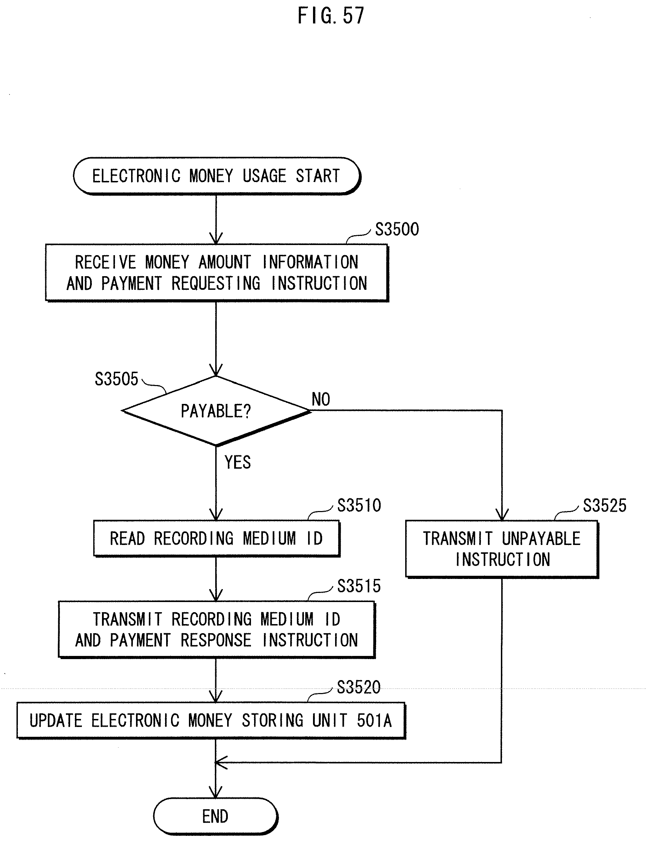

The following describes operations for using the electricmoney, with reference to FIG.57.

The payment control unit 514A receives the money amount information and the payment requesting instruction from the payment apparatus 70A via the wireless control unit 515A (Step S3500).

The payment control unit 514A judges whether the electronic money stored in the electronic money storing unit 510A is enough for the payment (Step S3505).

If judging the electronic money is enough for the payment ("YES" in Step S3505), the payment control unit 514A reads the recording medium ID that is stored in the identifier storing unit 511A (Step S3510), and transmits the read recording medium ID and the payment response instruction to the payment apparatus 70A via the wireless control unit 515A (Step S3515). The payment control unit 514A subtracts the amount of money indicated by the money amount information from the amount of money stored in the electronic money storing unit 501A, and updates the stored contents of the electronic money storing unit 501A to the subtraction result (Step S3520).

If judging that the electronic money stored in the electronic money storing unit 510A is not enough ("NO" in Step S3505), the payment control unit 514A transmits the unpayable instruction to the payment apparatus 70A via the wireless control unit 515A (Step S3525).

### (7) Modification

The electronic money may be used for paying a fare of a train operated by a railway company.

The operations for converting the accumulated points to electronic money are the same as the description above. Therefore, the explanation is omitted here.

The following describes the operations for using the electronic money, mainly as to the differences from the description above.

An automatic ticket gate is provided in each station operated by the railway company.

The automatic ticket gate includes a writing apparatus that writes a station ID for identifying the station, where the user enters, in the recording medium 50A. The automatic ticket gate also includes a fare payment apparatus for the payment of the fare, and a gate.

The gate will be opened if the user is allowed to pass trough the automatic ticket gate, and the gate will be closed if the user is prohibited to pass through the automatic ticket gate.

The recording medium 50A includes an area for storing the station ID.

The user brings the recording medium 50A close to the sensor of the writing apparatus to enter the platform passing through the gate.

The writing apparatus transmits the station ID to the recording medium 50A to write the station ID in the recording medium 50A.

Upon receiving the station ID from the writing apparatus, the recording medium 50A stores therein the received station ID.

The user brings the recording medium 50A close to the sensor of the fare payment apparatus to pass through the automatic ticket gate to go out from the platform.

The recording medium 50A transmits the stored station ID to the fare payment apparatus.

Upon receiving the station ID from the recording medium 50A, the fare payment apparatus determines the fare (an amount of money) from the station indicated by the received station ID to the station equipped with the fare payment apparatus, and transmits the money amount information indicating the determined money amount and payment requesting information.

Upon receiving the money amount information and the payment requesting information, the recording medium 50A performs the same operations as described above.

If receiving the payment response instruction and the recording medium ID from the recording medium 50A, the fare payment apparatus performs the same operations as described above, and opens the gate included in the automatic ticket gate and allows the user to pass through. If receiving the unpayable instruction from the recording medium 50A, the fare payment apparatus performs the same operations as described above, and closes the gate and prohibits the user to pass through.

### 4.2 Case of Use for Train Fare Payment

In this modification, the operations up to the point distribution are the same as the operations performed in the first embodiment. Therefore, the description is omitted here.

The following mainly describes the difference from the first embodiment.

In this modification, the structure of the recording medium is different from the first embodiment, and the other apparatuses are the same as the first embodiment. Therefore, in the following description, the apparatus described in the first embodiment may be used if necessary.

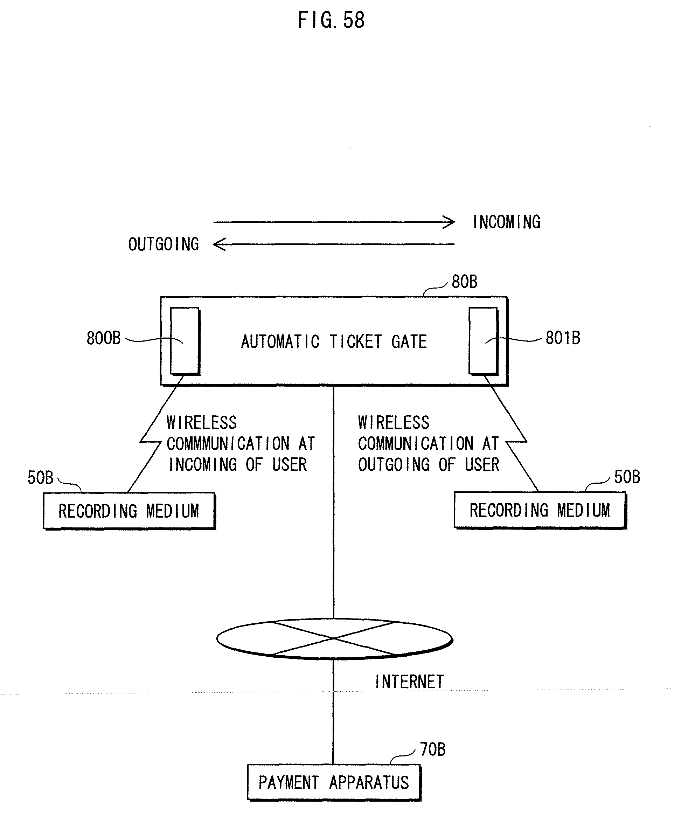

As FIG.58 shows, the system according to this modification includes a recording medium 50B, a payment apparatus 70B and an automatic ticket gate 80B.

The payment apparatus 70B performs the payment of the train fare. The automatic ticket gate 80B controls operations relating to the incoming of the user who enters from the ticket gate to the platform, and operations relating to the outgoing of the user who goes out from the platform. The automatic ticket gate 80B and the payment apparatus 70B constitute a network by the Internet.

### (1)Overview

The recording medium 50B is attached to the portable terminal apparatus 60 while the user uses the train or requests the point distribution. Upon wirelessly receiving the usage information from the in-car apparatus set up in the train where the user gets on, the portable terminal apparatus 60 writes the received usage information to the recording medium 50B. Upon receiving the point from the managing apparatus 30, the portable terminal apparatus outputs the received point and the point writing instruction to the recording medium 50B to add the received point to the accumulated point.

To enter the platform from the ticket gate of the station, the user brings the recording medium 50B close to a first sensor 800B, which is included in the automatic ticket gate 80B and performs a short-range wireless, to record the station ID that identifies the station, where the automatic ticket gate 80B is provided, in the recording medium 50A.

To pass through the gate from the platform, the user brings the recording medium 50B to the second sensor 801B of the automatic ticket gate 80B, to transmit the stored station ID and the recording medium ID for identifying the recording medium 50B to the automatic ticket gate 80B.

Upon receiving the total point, the station ID and the recording medium ID from the recording medium 50B, the automatic ticket gate 80B generates track section information including the received station ID and the station ID corresponding to the station equipped with the automatic ticket gate 80B . Then, the automatic ticket gate 80B transmits the generated track section information, the total point, and the recording medium ID to the payment apparatus 70B that performs the payment of the train fare.

The payment apparatus 70B stores the total point and the train fare in a predetermined period, for each recording medium ID. Upon receiving the track section information, the total point and the recording medium ID from the automatic ticket gate 80B, the payment apparatus 70B determines the train fare based on the received track section information, and stores the determined train fare in association with the received recording medium ID. The payment apparatus 70B also adds the received point to the stored total point to update the total point to the addition result.

The payment apparatus 70B performs the payment of the stored train fare on a predetermined day of the month. At this moment, the payment apparatus 70B reduces the train fare in accordance with the stored total point.

If the recording medium 50B is attached to the portable terminal apparatus 60, electricity is supplied to the recording medium 50B by the portable terminal apparatus 60. Also, the recording medium 50B receives an electrical signal from the automatic ticket gate 80B by short-range wireless, and charges the received electrical signal to supply electricity to the inside.

### (2) Recording Medium 50B

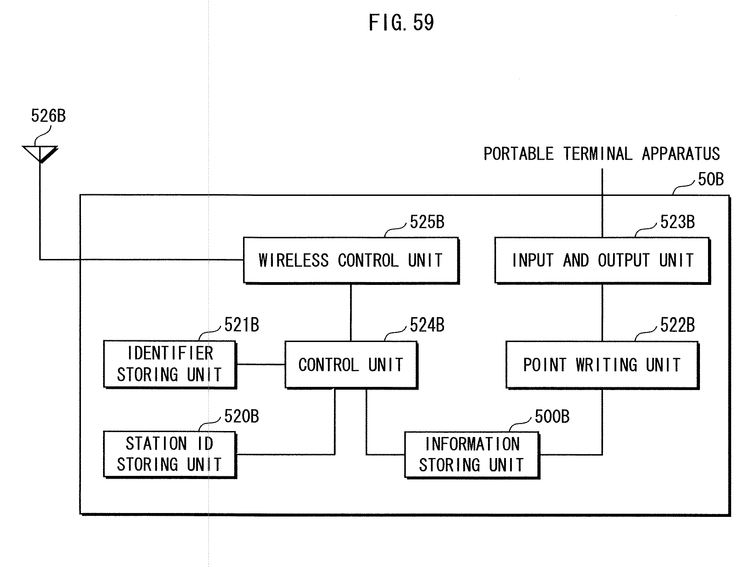

As FIG.59 shows, the recording medium 50B includes an information storing unit 500B, a station ID storing unit 520B, an ID storing unit 521B, a point writing unit 522B, an input and output 523B, a control unit 542B and a wireless control unit 515B.

The recording medium 50B is, more specifically, a computer system structured by a microprocessor, a ROM, a RAM and so on. A computer program is stored in the ROM. The microprocessor operates in accordance with the computer program, and accordingly, the recording medium 50B can fulfill the function thereof.

### <Information Storing Unit 500B>

The information storing unit 500B has a tamper-resistant characteristic, and includes a point storing unit 501B, a usage information storing unit 502B, and a usage time storing unit 503B, which are not illustrated.

The point storing unit 501B, the usage information storing unit 502B and the usage time storing unit 503B are respectively the same as the point storing unit 501, a usage information storing unit 502 and the usage time storing unit 5 03 described in the first embodiment, and therefore their explanations are omitted here.

### <Station ID storing Unit 520B>

The station ID storing unit 520B has a tamper-resistant characteristic and includes an area for storing a station ID transmitted from the first sensor 800B of the automatic ticket gate 80B.

### <ID storing unit 521B>

The ID storing unit 521B has a tamper-resistant characteristic, and prestores a recording medium ID for identifying the recording medium 50B.

### <Point Writing Unit 522B>

The point writing unit 522B has a tamper-resistant characteristic, and performs writing of the points.

Upon receiving the point writing instruction and the point from the portable terminal apparatus 60 via the input and output unit 523B, the point writing unit 522B adds the received point to the point stored in the point storing unit 501B.

### <Input and Output Unit 523B>

The input and output unit 523B outputs the information received from the potable terminal apparatus 60 to the information storing unit 500B via the point writing unit 522B.

The input and the output unit 523B outputs the information stored in the information storing unit 500B to the portable terminal apparatus 60.

### <Control Unit 524B>

The control unit 524B controls the operations at the time of use of the train.

Upon receiving the station ID and the ID transmitting instruction from the first sensor 800B of the automatic ticket gate 80B via the wireless control unit 525B, the control unit 524B writes the received station ID in the station ID storing unit 520B.

Upon receiving the station ID requesting instruction to request the transmission of the station ID from the second sensor 801B of the automatic ticket gate 80B via the wireless control unit 525B, the control unit 524B reads the station ID, the recording medium ID, and the total point from the station ID storing unit 520B, the ID storing unit 521B and the point storing unit 501B respectively, and transmits the read station ID, recording medium ID and total point, and the station ID response instruction to the automatic ticket gate 80B via the wireless control unit 525B.

### <Wireless Control Unit 525B>

The wireless control unit 525B is a wireless tag for instance, and includes an antenna unit 526B.

The antenna unit 526B is a receiving antenna, and receives a radio wave and converts the received radio wave to an electrical signal. The antenna unit also reflects (retransmits) the received radio wave.

The wireless control unit 525B extracts the station ID and the ID transmitting instruction from the electrical signal converted by the antenna unit 526B, and outputs the extracted station ID and ID transmitting instruction to the control unit 524B.
The wireless control unit 525B extracts the station ID requesting instruction from the electrical signal converted by the antenna unit 526B, and outputs the extracted station ID requesting instruction to the control unit 524B.

The wireless control unit 525B receives the station ID response instruction, the station ID, the recording medium ID and the total point from the control unit 524B, and generates a bit sequence including the received instruction and information, and changes the impedance of the antenna unit 526B in accordance with the bit (0 or 1) included in the generated bit sequence. Accordingly, the wireless control unit 525B can transmit the station ID response instruction, the station

ID, the recording medium ID and the total point to the automatic ticket gate 80B, using the antenna unit 526B.

### (3) Automatic Ticket Gate 80B

The automatic ticket gate 80B prestores a station ID indicating the station equipped with the automatic ticket gate 80B.

The automatic ticket gate 80B transmits the station ID and the ID transmitting instruction to the recording medium 50B, using the first sensor 800B.

The automatic ticket gate 80B transmits the station ID requesting instruction to the recording medium 50B, using the second sensor 801B.

Upon receiving the station ID, the recording medium ID, the total point and the station ID response instruction from the recording medium 50B, using the second sensor 801B, the automatic ticket gate 80B reads the station ID stored therein, and generates track section information including the read station ID and the received station ID, and transmits the generated track section information, the received recording medium ID, and the total point to the payment apparatus 70B.

### (5) Payment Apparatus 70B

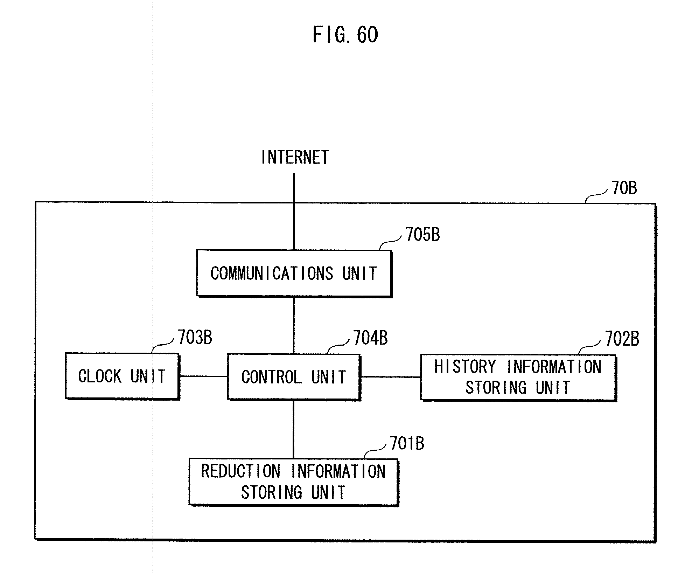

As FIG. 60 shows, the payment apparatus 70B includes a reduction information storing unit 701B, a history information storing unit 702, a clock unit 703B, a control unit 704B, and a communications unit 705B.

The payment apparatus 70B is, more specifically, a computer system structured by a microprocessor, a ROM, a RAM, a hard disk unit, a display unit, a modem and so on. A computer program is stored in the ROM or the hard disk unit. The microprocessor operates in accordance with the computer program, and accordingly, the payment apparatus 70B can fulfill the function thereof.

In this modification, it is assumed that the payment apparatus 70B manages the recording medium ID and information of the owner (purchaser) of the recording medium 50B identifiable by the recording medium ID in association with each other. Here, the information of the owner includes the name and the address of the owner, the bank account for paying the fare which has been previously designated, and so on.

### <Reduction Information Storing Unit 701B>

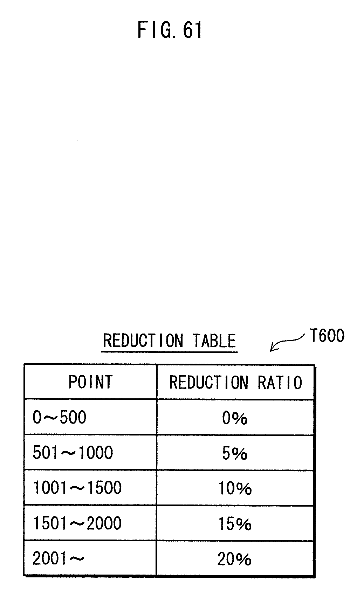

As FIG. 61 shows, the reduction information storing unit 701B stores a reduction table T600.

The reduction table T600 includes an area for storing a plurality of pairs of a point and a reduction ratio.

The points indicate a range of the accumulated points. In this modification, the points are classified into five ranges, namely, 0 to 500, 501 to 1000, 1001 to 1500, 1501 to 2000, and 2001 and larger.

The reduction ratio indicates the ratio of the reduction performed in accordance with the accumulated points. For instance, if the accumulated points are in the range of 0 - 500 points, the reduction ration is "0%" and the reduction is not to be performed. If the accumulated points are in the range of 501 to 1000, the reduction rate is "5%".

### <History Information Storing Unit 702B>

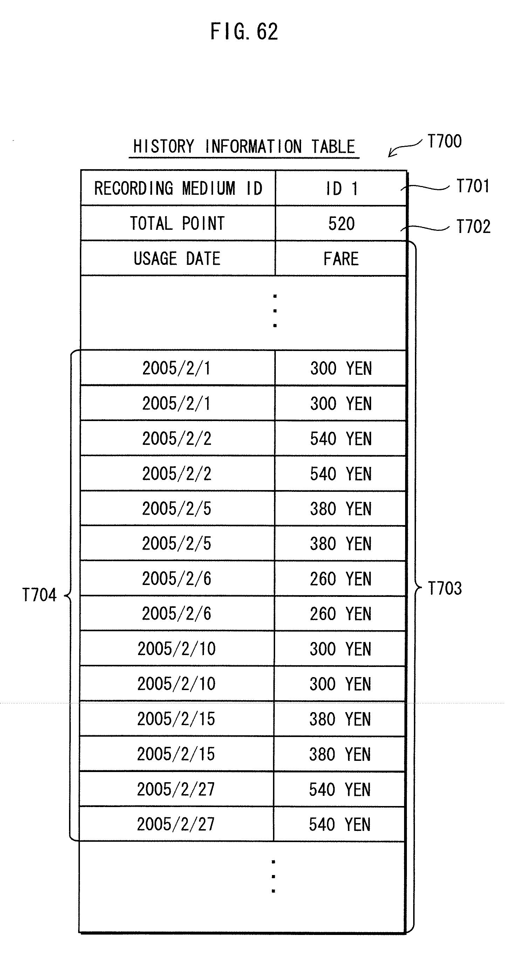

As FIG.62 shows, the history information storing unit 702B includes a history information table T700 used for managing the total point and the fare, for each recording medium ID.

The history information table T700 includes an area T701 for storing a recording medium ID that is to be under management, an area T702 for storing the total point corresponding to the area T701, and an area T703 for storing a usage status. The initial value stored in the area T702 is "0".

The area T703 includes an area for storing a plurality of pairs of the usage date and the fare. Each of these pairs is hereinafter called the usage status.

The usage date indicates the date when the history information storing unit 702B receives each piece of the information from the automatic ticket gate, and the fare indicates the amount of money corresponding to the track section information received from the automatic ticket gate.

In the following description, the recording medium ID of the recording medium 50B is "ID1".

### <Clock Unit 703B>

The clock unit 703B obtains the current date and time.

### <Control Unit 704B>

The control unit 704B updates the history information table T7000, and performs operations relating to the payment on the predetermined date of the month.

The control unit 704B receives the track section information, the recording medium ID, and the total point from the automatic ticket gate 80B via the communications unit 7058.

The control unit 704B reads the history information table T700 corresponding to the received recording medium ID from the history information storing unit 702B.

The control unit 704B determines the fare for the track section based on the received track section information.

The control unit 704B obtains the current date from the clock unit 703B, and stores the obtained date as the usage date in the area T703 of the read history information table T700, in association with the determined fare.

The control unit 704B adds the received total point to the accumulated point stored in the read history information table T700, to update the contents of the area T702 to the addition result.

Accordingly, the history information table T700 corresponding to the received recording medium ID can be updated.

Also, the control unit 704B monitors the current date and time obtained by the clock unit 703B, and performs operations relating to the payment of the fare for the last month on the predetermined date of each month (e.g. at 2 a.m. on the 1st of each month).

The following describes the operations relating to the payment, with reference to the history information table T700 shown in FIG. 62.

The control unit 704B obtains a group of the usage status for the last month. For instance, to perform the operations relating to the payment for the last month (e.g. February), the control unit 704B obtains the usage status group T704.

The control unit 704B calculates the total of the fare (5400 yen), using the obtained usage status group T704.

Further, the control unit 704B obtains the total point (520 points) from the history information table T700.

The control unit 704B determines the reduction ratio using the obtained total point (520 points) and the reduction table T600. In this case, the reduction ratio is 5%.

The control unit 704B calculates the amount of money to be paid (5130 yen), using the determined reduction ratio and the calculated total amount of money.

After calculating the amount of money to be paid, the control unit 704B updates the total point to the initial value "0".

After that, the railway company performs the operations for charging the owner of the recording medium 50B indicated by the recording medium ID "ID1" with the money to be paid calculated by the payment apparatus 70B, or the operations for withdrawing the money to be paid from a bank account predetermined by the owner.

### <Communications Unit 705B>

Upon receiving the track section information and the recording medium ID and the total point from the automatic ticket gate 80B via the Internet, the communications unit 705 outputs the received track section information, the received recording medium ID and total point to the control unit 704B.

### (6) Modifications

In the modification above, the accumulated point is used for paying the fare. However, the present invention is not limited to this.

Using the total point stored in the recording medium 50B, only users having more than a predetermined point may be allowed to pass through a priority gate. Accordingly, even in the case of congestion, the users can pass through the gate smoothly. Here, the predetermined point may be subtracted from the total point to update the total point.

Using the total point stored n the recording medium 50B, only users having more than a predetermined point may be allowed to pass through a priority transfer gate. Here, in the same manner as described above, the total point may be update.

The user may be able to use a parking operated by the railway company, using the total point stored in the recording medium 50B. In the same manner as described above, the total point may be updated.

The total point maybe converted to electronic money, and the parking may be used using the converted electronic money. The method for converting the total point to the electronic money is explained in 4.1 above. Therefore the explanation is omitted here.

The functions of the payment apparatus 70B may be included in the managing apparatus 30.

### 4.3 Other Modifications

The following cases are also included in the present invention.
(1) In the above-described reduction table T600, the range of the predetermined point and the reduction ration are associated with each other. However, the present invention is not limited to this.

The predetermined point may be associated with the reduction ratio. If this is the case, after calculating the amount of money to be paid, the payment apparatus 70B subtracts the point corresponding to the reduction ratio applied at the calculation of the amount of money to be paid, and update the total point to the subtraction result.

For instance, reduction ratios "5%", "10%", "15%" and "20%" are respectively associated with 500 points, 1000 points, 1500 points and 2000 points. If the accumulated point stored in the history information table T700 is 520 points, the reduction ratio "5%" is applied, and after the amount of the money to be paid is calculated, the payment apparatus 70B subtracts 500 points from 520 points, and updates the accumulated point to the subtraction result "20 points".
(2) In the above-described reduction table T600, the predetermined range of the points and the reduction rates are associated with each other. However, the present invention is not limited to this.

The ranges of the points and amounts of money to be reduced may be associated with each other.

For instance, the ranges 0 to 500, 501 to 1000, 1001 to 1500, 1501 to 2000, and 2001 and more may be associated with an amount of money to be reduced 0 yen, 100 yen, 200 yen, 300 yen, and 400 yen respectively.

Also, a predetermined number of points may be associated with an amount of money to be reduced.
(3) The above-described recording medium 50A judges the paying capacity. However, the present invention is not limited to this. The judgement may be performed by the payment apparatus 70A.

If this is the case, upon receiving the payment requesting instruction from the payment apparatus 70A, the recording medium 50A transmits the amount of electronic money stored in the electronic money storing unit 510A and the recording medium ID stored in the identifier storing unit 511A to the payment apparatus 70A.

The payment apparatus 70A judges whether the payment by the electronic money is possible.

If judging the payment is possible, the payment apparatus 70A performs the payment and calculates the remaining amount after the payment. The payment apparatus 70A transmits the calculated remaining amount to the recording medium 50A, and stores the paid amount and the recording medium in association with each other. If judging the payment is impracticable, the payment apparatus 70A notifies the operator of the payment apparatus 70A of the payment incapacity.

Upon receiving the remaining amount of electronic money, the recording medium 50A updates the content of the electronic money storing unit 510A to the received remaining amount.
(4) In the description above, the fee corresponding to the track section is calculated by the above-described payment apparatus 70B.
However, the present invention is not limited to this.

The fee may be calculated by the automatic ticket gate 80B. If this is the case, the automatic ticket gate 80B transmits the calculated fee, and the total point and the recording medium ID received from the recording medium 50B, to the payment apparatus 70B.

Upon receiving the fee, the total point, and the recording medium ID from the automatic ticket gate 80B, the payment apparatus 70B updates the history information table T700 using the received information.
(5) In the above-described embodiment, the information storing unit has a tamper-resistant characteristic. However, the present invention is not limited to this.

The information storing unit may not have a tamper-resistant characteristic. If this is the case, to strengthen security, each piece of information to be stored is encrypted using the common key cryptography. The recording medium stores a private key used for the common key cryptography in a storing region having a tamper-resistant characteristic. The recording medium can use the information stored in the information storing unit by decrypting the encrypted information using the private key.

Also, the electronic money storing unit may not have a tamper-resistant characteristic. If this is the case, to strengthen security, the electronic money storing unit may have the same structure as described above.

Also, the identifier storing unit may not have a tamper-resistant characteristic. If this is the case, to strengthen security, the identifier storing unit may have the same structure as described above.
(6) In the above-described embodiment, the recording medium 50B and the portable terminal apparatus 60 are individual apparatuses. However, the present invention is not limited to this. The portable terminal apparatus may be an apparatus including the recording medium 50B and the portable terminal apparatus 60.
(7) The recording medium 50A is brought close to the sensor 700A of the payment apparatus 70A for the payment by the electronic money. However, the present invention is not limited to this.

The portable terminal apparatus 60, to which the recording medium 50A is attached, may be brought close to the payment apparatus 70A for the payment by the electronic money.

If this is the case, the wireless control unit 515A may be included in the portable terminal apparatus 60. Also, the wireless control unit 515A and the payment control unit 514A may be included in the portable terminal apparatus 60.

Also, the point converting unit 512A may be included in the portable terminal apparatus 60.
(8) In the above-described embodiment, the user enters in or exits from the station through the ticket gate by bringing the recording medium 50B close to the first sensor 800B and the second sensor 801B of the automatic ticket gate 80B. However, the present invention is not limited to this.

The user may enter in or exit from the station through the ticket gate by bringing the portable terminal apparatus 60, to which the recording medium 50B is attached, close to the first sensor 800B or the second sensor 801B of the automatic ticket gate 50B.

If this is the case, the wireless control unit 525B may be included in the portable terminal apparatus 60. Or, the wireless control unit 252A and the control unit 524B may be included in the portable terminal apparatus 60.

Also, the point writing unit 525B may be included in the portable terminal apparatus 60.
(9) The conversion from the total point to the electronic money, which is performed by the recording medium 50A in the system for the use of electronic money, may be started by a user operation. The user operation is input from the portable terminal apparatus 60 after the recording medium 50A is attached to the portable terminal apparatus 60.
(10) If judging that the payment is impracticable, the recording medium 50A transmits the unpayable instruction to the payment apparatus 70A. However, the present invention is not limited to this.

If the payment is impracticable, the recording medium 50A subtracts the stored amount of electronic money from the amount indicated by the money amount information, and transmits the subtraction result as a shortfall to the payment apparatus 70A with the unpayable instruction and the recording medium ID. The recording medium 50A updates the amount of the electronic money stored in the electronic money storing unit 501A to "0".

The payment apparatus 50A notifies the operator of the amount of the shortfall, which is received from the recording medium 50A.

Upon receiving cash for the shortfall from the user, the operator operates the payment apparatus 70A to give a receiving instruction, which indicates that the cash is received, to the payment apparatus 70A.

Upon receiving the receiving instruction from the operator, the payment apparatus 70A performs the payment of the amount of the money to be paid, and stores the amount of the electronic money used for the payment and the recording medium ID in association with each other. The amount of money used for the payment is obtainable by subtracting the amount of the shortfall from the amount of the money to be paid.

### 5. Other Modifications

The present invention is explained above based on the embodiments. However, as a matter of course, the present invention is not limited to the embodiments. The following cases are included in the present invention.
(1) The concept of the facilities in the present invention includes the train and the car in the train service, the express way and the bypass in the road service, the restaurant in the restaurant service, and the attraction in the theme park service, which are described in the embodiment above.
(2) It is described that the portable terminal apparatus is a PDA. However, the present invention is not limited to this. The portable terminal apparatus may be a mobile telephone and a dedicated terminal apparatus used for the point distributing system.
(3) In the above-described embodiment, the managing apparatus calculates the point corresponding to the congestion degree of each facility at a certain time. However, the present invention is not limited to this.

The managing apparatus may calculate the point corresponding to the congestion degree in every predetermined period (e.g. 3 hours) in the operating hours of one facility. The management apparatus may store the congestion degree measured as to one facility in each period, and calculate in each period on the day with use of the congestion degrees on the last day.
(4) In the above-described embodiments and modifications, the Internet is used as an example of the network connection. However, the present invention is not limited to this. Any electrical communications network that is able to transmit information between the apparatuses.
(5) In the description above, the target transport mode of the point distributing system is railway. However, the present invention is not limited to this.

The target transport mode may be any transport mode that is operated regularly, such as buses on a regular route.

Also, the target of each of the point distributing system 1000 and 2000 may be any transport mode that is operated regularly, such as buses on a regular route.
(6) In the above-described embodiments and modifications, the managing apparatus decreases the point as the congestion degree increases. However, the present invention is not limited to this. The managing apparatus may increase the point as the congestion degree increases.
(7) In the above described first embodiment, the managing apparatus calculates the point for each class, which is the "up-train" or the "down-train". However, the present invention is not limited to this. The managing apparatus may calculate the point based on another classification.

For instance, the managing apparatus may calculate the point for each category (e.g. local/express/limited express). Also, the managing apparatus may calculate the point for each train that stops at the same stops.
(8) In the above-described Modification of Point Use, the point converting unit converts every 1000 points into electronic money worth 1000 yen. However, the present invention is not limited to this.

The point converting unit may convert the accumulated point as it is into the electronic money. In other words, the point converting unit may convert 1 point into 1 yen.

Also, the point converting unit may convert the accumulated point into electronic money at a predetermined conversion rate.
(9) In the above-described embodiments, the point to be distributed to the user is determined based only on the congestion degree of the train and so on. However, the present invention is not limited to this.

For instance, the user may be given a high point if he does not get on a train that he can get on, and gets on the next train. Accordingly, it becomes possible to make some distinction between the point given to a user who gets on an empty train by accident and the point given to a user who waits for an empty train. This realizes a fair pint distribution.

The following describes this modification based on the first embodiment. In the following description, the user gets on the car of the up-train 2a equipped with the in-car apparatus 20, from the station 3a.

Firstly, when the user arrives at the station 3a, the portable terminal apparatus receives station arrival time information from a timing apparatus set up in the station 3a. Here, the timing apparatus may be realized as a part of the information displaying apparatus 40 or the automatic ticket gate for instance, or as an independent apparatus. In the following description, the timing apparatus is described as a part of the information displaying apparatus 40.

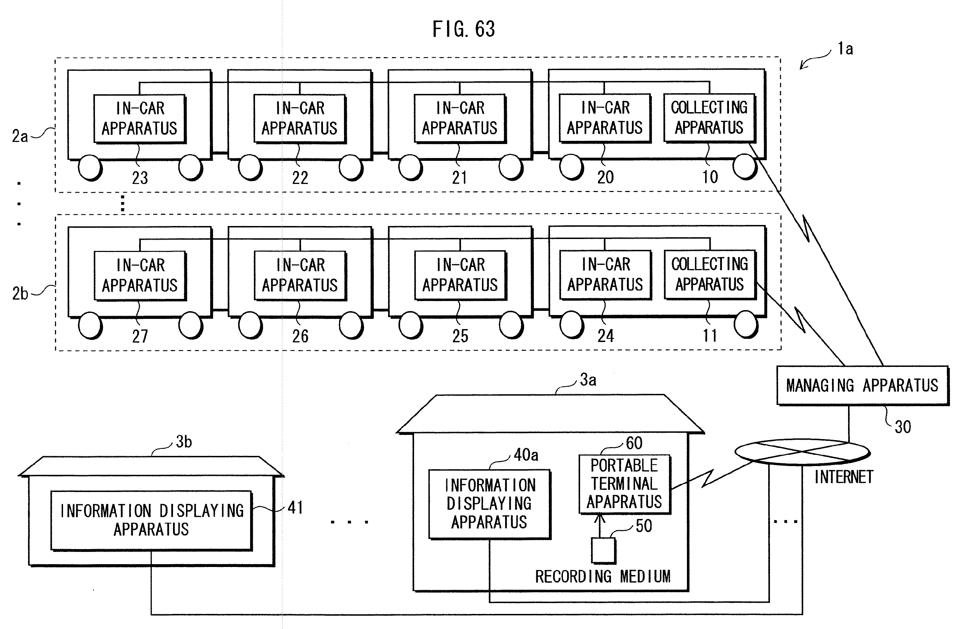

As FIG.63 shows, the point distributing apparatus 1a in this modification has the structure of the point distributing system 1, shown in the first embodiment in which the information displaying apparatus 40 is replaced with an information displaying apparatus 40a that includes the timing apparatus. The difference from the point distributing system 1 is that the portable terminal apparatus 60 communicates with the information displaying apparatus 40a.

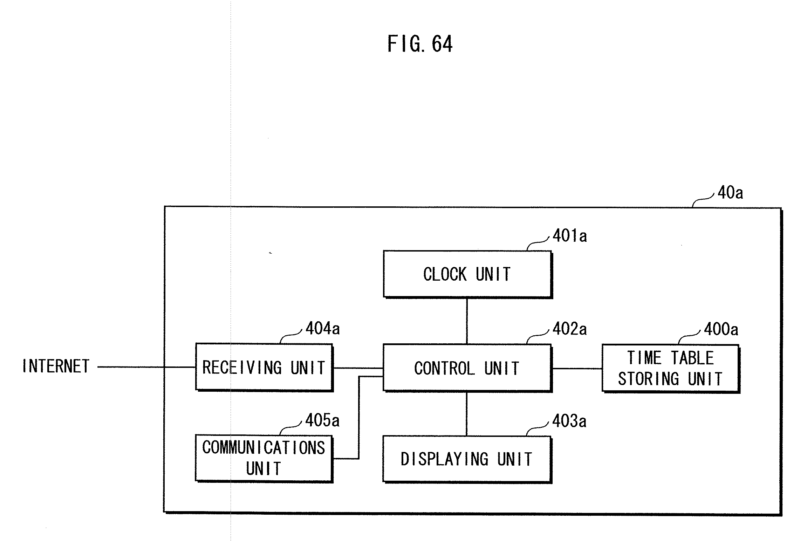

As FIG. 64 shows, the information displaying apparatus 40a in this modification includes a time table storing unit 400a, a clock unit 401a, a control unit 402a, a displaying unit 403a, a receiving unit 404a and a communications unit 405a.

The information displaying apparatus 40a is, more specifically, a computer system structured by a microprocessor, a ROM, a RAM, a hard disk unit, a display unit, a modem, and so on. A computer program is stored in the ROM or the hard disk unit. The microprocessor operates in accordance with the computer program, and accordingly, the information displaying apparatus 40a can fulfill the function thereof.

Note that the time table storing unit 400a, the clock unit 401a, the control unit 402a, the displaying unit 403a, and the receiving unit 404a are respectively the same as the time table storing unit 400a, the clock unit 401, the control unit 402, the displaying unit 403, and the receiving unit 404, and therefore the explanations are omitted here.

The communications unit 405a includes an antenna, and communicates with the portable terminal apparatus 60. Upon receiving a time transmitting instruction from the portable terminal apparatus 60, the communication unit 405a obtains a current time from the clock unit 401a, and transmits the obtained time to the portable terminal apparatus 60.

Upon transmitting the time transmitting instruction to the information displaying apparatus 40a, the portable terminal apparatus 60 receives the time information from the information displaying apparatus 40a, and stores the received time information as the station arrival time information in the recording medium 50.

The portable terminal apparatus 60 obtains the usage information from the in-car apparatus 20 when the user gets on the train 2a, and stores the information in the recording medium 50. This operation is the same as that in the first embodiment. Therefore, its explanation is omitted here.

The following describes operations for distributing points.

The portable terminal apparatus 60 transmits the station arrival time information and the usage information to the managing apparatus 30.

Upon receiving the station arrival time information and the usage information from the portable terminal apparatus 60, the managing apparatus 30 obtains the time when the user uses the car equipped with the in-car apparatus 30 (the time is hereinafter called the "usage time information") from the received usage information. The managing apparatus 30 calculates the difference between the obtained usage time information and the received station arrival time information, and calculates the point such that the point to be distributed to the user increases as the difference increases by assigning predetermined weights to the prestored points. The managing apparatus 30 transmits the calculated point to the portable terminal apparatus 60. For instance, the weights are more specifically assigned such that if the difference, which is a waiting time for the train, is 10 minutes, twice as many as the usual points are distributed to the user, and if the difference is 15 minutes, three times as many as the usual points are distributed to the user.

Upon receiving the point (in this case, the point to which the weight has been assigned), the portable terminal apparatus 60 stores the received point in the recording medium 50.

The information displaying apparatus 40a may display the odds in consideration of the weights. More specifically, the information displaying apparatus 40a may display information indicating how many times the usual point given to the user is to be multiplied if the user waits for the train, or display the odds that are multiplied.

In the above-described modification, the weights are assigned based on the time for which the user waits for the train. However, the present invention is not limited to this. For instance, the weights may be assigned based on how many trains the user skipped. If this is the case, the information displaying apparatus 40a transmits the train code of the first train that the user can get on (Hereinafter called the "available train code") after the user arrived at the station 3a, to the portable terminal apparatus 60, instead of the station arrival time information. Upon receiving the available train code from the information displaying apparatus 40a, the portable terminal apparatus 60 stores the received available train code in the recording medium 50. To distribute points, the portable terminal apparatus 60 transmits the available train code and the usage information to the managing apparatus 30. Upon receiving the available train code and the usage information from the portable terminal apparatus 60, the managing apparatus 30 obtains the train code included in the received usage information, and calculates how many trains the user has been skipped since he arrived at the station by comparing the obtained train code and the received available train code using the time table (the time table T100).

Also, in the above-described modification, the managing apparatus 30 may verify the calculated waiting time and the distributing request for the point corresponding to the number of trains that the user has skipped. More specifically, if the waiting time is an unrealistic value (e.g. the waiting time is a minus value or larger than 24 hours), the distribution request may be rejected.

In the above-described modification, the point may not be given to the user who has not waited for a train for a predetermined period, or the user who has not skipped any train.

In the above-described modification, a method for multiplying the point by an integer is taken as an example of the weighting. However, the present invention is not limited to this. Predetermined additional points may be distributed. Further the way of weighting may be changed based on the usage time of the train. If this is the case, for instance, it becomes possible to control the point distribution such that higher points may be given to the user who waits for the train in the morning, which is busy time, than the user who waits for the train in the daytime, which is not busy.

In the above-described modification, the weighting is performed at the point distribution. However, the present invention is not limited to this. The weighting may be performed at the determination of the calculated point based on the waiting time, and stores the waiting time and the weighted point in association with each other. The point distribution may be performed by searching for the point corresponding to the calculated waiting time.

In the above-described modification, the portable terminal apparatus 60 transmits the station arrival time information and the usage time information to the managing apparatus 30. However, the present invention is not limited to this. The portable terminal apparatus 60 may calculate the waiting time from the station arrival time information and the usage time information, and transmit the usage information, to which the calculated time as the waiting time information is given instead of the usage time information, to the managing apparatus 30.

The above-described modification is described as a modification of the first embodiment. However, as a matter of course, it is applicable to the second embodiment and the other modifications.
(10) The present invention may be the above-described method. Also, the present invention may be a computer program that realizes the method with a computer, or digital signals including the computer program.

The present invention may be a computer-readable recording medium, such as a flexible disk, a hard disk, a CD-ROM, an MO, a DVD, a DVD-ROM, a DVD-RAM, aBD (Blu-ray Disc), a semiconductor memory, in which the computer program or the digital signal is recorded. Also, the present invention may be the computer program or the digital signals recorded in such a recording medium.

The present invention may transmit the computer program or the digital signals via a network such as electrical communication line, a wireless or a wired communication line, the Internet, and so on.

The present invention may be a computer system including a microprocessor and a memory, and the memory may store the computer program, and the microprocessor may operate in accordance with the computer program.

The program or the digital signals may be recorded in the recording medium and transmitted, or the program or the digital signals may be transmitted via the network or the like, to be performed by another independent computer system.
(11) The above-described embodiment and the above-described modifications may be combined with each other.

### 6. Summary

As described above, the point distributing system according to the present invention calculates odds for use of each facility such that the odds increase as the congestion degree of the facility that the user uses decreases, and determines the points to be given to the user based on the calculated odds, and distributes the determined point to the user. Accordingly, the system can lead the user to a facility of high odds, in other words, a facility whose congestion degree is low. Therefore, the congestion degrees of the facilities can be equalized, and the facilities can be used more efficiently.

The present invention is a point distributing system that distributes a point in accordance with a congestion degree of a facility operated by a provider, the point distributing system comprising: a measuring apparatus that is set up in the facility and operable to periodically measure the congestion degree of the facility; a calculating apparatus operable to obtain the congestion degree from the measuring apparatus and calculates a point to be distributed in a distribution period such that the point increases as the congestion degree decreases; a distributing apparatus that is set up in the facility and operable to distribute, in the distributing period, facility point information indicating a point calculated in correspondence with the distributing period, by short-range wireless; and a portable terminal apparatus operable to receive, in the distributing period, from the distributing apparatus, the facility point information corresponding to the distributing period, by short-range wireless.

With the stated structure, the point distributing system can calculate the point to be distributed in correspondence with each distributing period, using the distributing apparatus, and transmit, to the portable terminal apparatus by short-range wireless, the facility point information indicating the point corresponding to the distributing period, using the distributing apparatus. Accordingly, the user with the portable terminal apparatus is directed to visit the facility in a period in which a high point is allocated to the user, namely a period in which the congestion degree is low, to obtain a high point.

Also, the present invention is a user directing system that directs the user so as to lower congestion degrees of a plurality of facilities operated by a provider, the user directing system comprising: a measuring apparatus that is set up in each facility and operable to obtain the congestion degree of the facility; a point calculating apparatus operable to obtain the congestion degree from the measuring apparatus and calculate, for each facility, the point based on the obtained congestion degree such that the point increases as the congestion degree decreases; and a distributing apparatus that is set up in each facility and operable to distribute facility point information indicating the point calculated in correspondence with the facility by short-range wireless; and a portable terminal apparatus operable to receive the facility point information from the distributing apparatus by short-range wireless.

With the stated structure, using the distributing apparatus, the user directing system can transmit, to the portable terminal apparatus within the facility, by short-range wireless, the facility point information indicating the point corresponding to the facility equipped with the distributing apparatus, among the points for the facilities calculated by the point calculating apparatus. Accordingly, the user with the portable terminal apparatus is directed to visit a facility to which a high point is allocated, namely a facility whose congestion degree is low, to obtain a high point. This means that the provider can direct users to a facility with a low congestion degree by using the user directing system.

### Industrial Applicability

The point distributing system described above can be used in industries that provide a service of use of a facility in a managerially manner, which is a repetitive and continuous manner.

## Claims

1. A point calculating apparatus that calculates a point for each of a plurality of transport modes for the same destination in accordance with a congestion degree of the transport modes, the point calculating apparatus comprising:
a congestion degree obtaining unit operable to obtain the congestion degree;
a calculating unit operable to calculate a point for each of the transport modes in accordance with the congestion degree; and
a point allocating unit operable to allocate a point calculated for a transport mode to a user of the transport mode.

2. The point calculating apparatus of Claim 1, wherein
the congestion degree obtaining unit obtains the congestion degree for each of the transport modes, and
the calculating unit calculates, using each congestion degree, the point for each of the transport modes such that the point decreases as the congestion degree increases.

3. The point calculating apparatus of Claim 2, wherein
the calculating unit calculates the point for each of the transport modes such that a total of the point for each of the transport modes is a constant value.

4. The point calculating apparatus of Claim 3, wherein
the point allocating unit includes:
a calculated point storing subunit that includes an area for storing each calculated point in association with transport mode information which indicates a transport mode corresponding to the calculated point;
a calculated point writing subunit operable to write the calculated point in the calculated point storing subunit in association with the transport mode information;
a usage information receiving subunit operable to receive, from a portable terminal apparatus belonging to the user, usage information indicating the transport mode that the user has used;
a determining subunit operable to determine whether the received usage information is valid;
a point reading subunit operable, if the determining subunit determines affirmatively, to read out, from the calculated point storing subunit, the point stored in association with the transport mode information that indicates the transport mode indicated by the received usage information; and
a point transmitting subunit operable to transmit the point read out by the point reading subunit to the portable terminal apparatus to allocate the point to the user.

5. The point calculating apparatus of Claim 4, wherein
the usage information receiving subunit receives the usage information that includes an identifier that identifies the transport mode that the user has used and a signature data that is generated by performing a digital signature algorithm on the identifier using a private key,
the determining subunit stores therein a public key corresponding to the private key, performs a signature verification using the public key, the received signature data and the identifier, and determines that the received usage information is valid if a result of the signature verification is in the affirmative, and
the point reading subunit reads out, from the calculated point storing subunit, the point stored in association with the transport mode information that indicates the transport mode indicated by the identifier included in the received usage information.

6. The point calculating apparatus of Claim 3, wherein
the calculating unit includes;
a total point storing subunit that prestores the total of the point, which is the constant value,
a passenger number obtaining subunit operable to obtain, from each of the transport modes, the number of users to whom the point is to be allocated,
a first calculating subunit operable to calculate a point allocation rate for each of the transport modes such that the point decreases as the congestion degree increases, and
a second calculating subunit operable to calculate a conversion point that is converted from a point allocation unit rate based on the point allocation rate, the total of the point and the obtained number of passengers, and calculates, for each of the transport modes, the point to be allocated, by multiplying the conversion point by the point allocation rate.

7. The point calculating apparatus of Claim 6, further comprising
a rate transmitting unit operable to transmit the point allocation rate calculated by the first calculating unit to a notifying apparatus that notifies the user of the point allocation rate.

8. The point calculating apparatus of Claim 3, wherein
the point calculating unit includes:
a total point storing subunit that stores the total of the point for each of the transport modes;
a first calculating subunit operable to calculate a point allocation rate for each of the transport modes such that the point to be allocated increases as the congestion degree decreases; and
a second calculating subunit operable to calculate the point to be allocated from the total point to each of the transport modes based on the point allocation rate for each of the transport modes.

9. The point calculating apparatus of Claim 8, wherein
the point allocating unit allocates the point to the user by transmitting at least a point corresponding to a transport mode equipped with a distributing apparatus among the plurality of the transport modes, the distributing apparatus being set up in each of the transport modes and distributing, to the portable terminal apparatus that belongs to the user of each of the transport modes, point information that indicates the point calculated for each of the transport modes.

10. The point calculating apparatus of Claim 8, wherein
the point allocating unit includes:
a rate information storing subunit operable to store allocation rate information including the point calculated for each of the transport modes;
a request information receiving unit operable to receive, from the portable terminal apparatus, request information requesting for the allocation rate information; and
a rate information transmitting subunit operable, upon receiving the request information, to transmit the allocation rate information to the portable terminal apparatus to allocate the point to the user.

11. The point calculating apparatus of Claim 3, wherein
the point allocating unit includes:
an allocating point storing subunit;
a calculated point storing subunit that includes an area for storing each point calculated by the calculating unit;
a calculated point writing subunit operable to write the point calculated by the calculating unit in the calculated point storing subunit;
a usage information receiving subunit operable to receive, from a portable terminal apparatus belonging to the user, usage information that indicates a transport mode that the user has used among the plurality of the transport modes, and a terminal identifier that identifies the portable terminal apparatus;
a determining subunit operable to determine whether the received usage information is valid;
a point reading subunit operable, if the determining subunit determines affirmatively, to read out, from the calculated point storing subunit, the point corresponding to the transport mode indicated by the received usage information; and
an allocating point writing subunit operable to write the point read out by the point reading subunit in the allocating point storing subunit in association with the received terminal identifier, to allocate the point to the user.

12. The point calculating apparatus of Claim 3, wherein
each of the plurality of the transport modes is a car included in a train, and
the calculating unit calculates the point for each car.

13. The point calculating apparatus of Claim 3, wherein
the plurality of the transport modes are trains each including a plurality of cars, and
the calculating unit calculates the point for each train.

14. The point calculating apparatus of Claim 3, wherein
each of the plurality of the transport modes is each car included in each of a plurality of trains, and
the calculating unit calculates the point for each car.

15. The point calculating apparatus of Claim 3, wherein
the point allocating unit includes:
a calculated point storing subunit that includes an area for storing the calculated point in association with transport mode information which indicates a transport mode corresponding to the calculated point;
a calculated point writing subunit operable to write the calculated point in the calculated point storing subunit in association with the transport mode information;
a usage information receiving subunit operable to receive, from a portable terminal apparatus belonging to the user, usage information that indicates, among the plurality of the transport modes, a transport mode that the user used and a usage time when the user used the transport mode, and a usage permission information that indicates a permission time when the user obtains a permission to use one of the plurality of the transport modes; and
a point transmitting subunit operable to perform weighting on the point that is stored in association with the transport mode information that indicates the transport mode indicated by the received usage information, in accordance with a difference between the usage time indicated by the usage information and the permission time indicated by the usage permission information, and transmit the weighted point to the portable terminal apparatus, to allocate the point to the user.

16. A point allocating system that allocates a point to users of transport modes for the same destination, the point allocating system comprising:
one or more measuring apparatuses each set up in each of the transport modes and operable to measure a congestion degree of a relevant one of the transport modes;
a point calculating apparatus operable to obtain the congestion degree from each measuring apparatus, and calculate, for each of the transport modes, the point in accordance with the congestion degree;
one or more distributing apparatuses each set up in each of the transport modes, and operable to distribute point information indicating the point calculated for a relevant one of the transport modes by short-range wireless; and
a portable terminal apparatus operable to receive the point information from the distributing apparatus by short-range wireless.

17. The point allocating system of Claim 16, wherein
the point calculating apparatus obtains the congestion degree from each measuring apparatus, and calculates, using each congestion degree, the point for each of the transport modes such that the point decreases as the congestion degree increases.

18. The point allocating system of Claim 17, wherein
the point calculating apparatus calculates the point for each of the transport modes such that a total of the point to be allocated to each of the transport modes is a constant value.

19. The point allocating system of Claim 18, further comprising
a notifying apparatus operable to notify expected allocating point information that indicates a point that is expected to be allocated to the user of the transport mode.

20. A measuring apparatus that measures a congestion degree of transport modes, comprising:
a measuring unit operable to measure the congestion degree of the transport modes; and
a transmitting unit operable to transmit the congestion degree to a point calculating apparatus that calculates a point for each of the transport modes in accordance with the congestion degree.

21. A distributing apparatus that is set up in each of transport modes, and distributes point information that indicates the point, in accordance with a congestion degree of the transport modes, the distributing apparatus comprising:
a distribution judging unit operable to judge whether to start a distribution of the point information; and
a wireless distributing unit operable, if the distribution judging unit judges af f irmatively, to distribute the point information to a portable terminal apparatus belonging to a user of a transport mode among the plurality of the transport modes by short-range wireless.

22. The distributing apparatus of Claim 21, wherein
the transport mode is equipped with a door, and
the distribution judging unit judges affirmatively if detecting that the door is opened.

23. The distributing apparatus of Claim 22, wherein
the point information is usage information, indicating the transport mode and equivalence with the point corresponding to the transport mode, and
the wireless distributing unit distributes the usage information.

24. The distributing apparatus of Claim 23, further comprising:
a private key storing unit operable to store a private key; and
a signature data generating unit operable to generate signature data by performing a digital signature algorithm on the usage information using the private key, wherein
the wireless distributing unit further transmit the signature data to the portable terminal apparatus by short-range wireless.

25. The distributing apparatus of Claim 22, further comprising
a point writing unit operable to obtain the point corresponding to the transport mode equipped with the distributing apparatus from a point calculating apparatus that calculates a point for each of the transport modes, and write the obtained point in a predetermined region, wherein
the wireless distributing apparatus distributes the point stored in the predetermined region as the point information.

26. The distributing apparatus of Claim 21, wherein
the distribution judging apparatus includes:
an allocation information receiving unit operable to receive, from the portable terminal apparatus, allocation information including all the points calculated by a point calculating apparatus that calculates the point for each of the transport modes in accordance with the congestion degree of the transport modes, and certification information that certifies a validity of the allocation information;
a validity information storing unit that stores verification information used for verifying the validity of the allocation information; and
a determining unit operable to determine whether the received allocation information is valid using the certification information and the verification information, and if judging affirmatively, determine to distribute the point information, wherein
if the determining unit determines that the received allocation information is valid, the wireless distributing unit obtains the point calculated in relation to a transport mode equipped with the distributing apparatus among the plurality of the transport modes, out of the received allocation information, and distribute the obtained point as the point information to the portable terminal apparatus by short-range wireless.

27. The distributing apparatus of Claim 26, wherein
the certification information includes a first calculation time that certifies the validity at a time when the point is calculated by the point calculating apparatus,
the verification information is a second calculation time that verifies the validity at a time when the point is calculated by the point calculating apparatus, and
the determining subunit judges whether the fist calculation time and the second calculation time is the same, and if judging affirmatively, determines that the received allocation information is valid.

28. The distributing apparatus of Claim 26, wherein
the certification information is signature data generated by performing, using a secret key, a digital signature algorithm on the allocation information,
the verification information is a public key corresponding to the private key, and
the determining unit performs a signature verification using the public key, the signature data and the allocation information, and if a result of the signature verification is in the affirmative, determines that the received allocation information is valid.

29. A portable terminal apparatus that receives point information indicating a point calculated in accordance with a congestion degree of a plurality of transport modes, from any of distributing apparatuses that are set up in the transport modes respectively, the portable terminal apparatus comprising:
a point information storing unit that has a tamper-resistant characteristic and includes an area for storing the point information;
a point information receiving unit operable to receive the point information from any of the distributing apparatuses by short-range wireless;
a write judging unit operable to judge whether to write the received point information to the point information storing unit; and
a point information writing unit operable, if the write judging unit judges affirmatively, to write the received point information in the point information storing unit.

30. The portable terminal apparatus of Claim 29, wherein
the point information is usage information indicating a transport mode that the user has used among the plurality of the transport modes, and equivalence with the point corresponding to the transport mode,
the point information storing unit further includes a point storing region for storing the point equivalent with the point information, and
the portable terminal apparatus further includes:
a transmitting unit operable to transmit the usage information stored in the point information storing unit to a point calculating apparatus that calculates a point for each of the transport modes; and
a received point writing unit operable to receive, from the point calculating apparatus, the point calculated for the transport mode indicated by the usage information, and write the received point in the point storing region.

31. The portable terminal apparatus of Claim 30, wherein
the transmitting unit transmits, to the point calculating apparatus, the usage information including an identifier that identifies the transport mode and signature data generated by performing a digital signature algorithm on the identifier.

32. The portable terminal apparatus of Claim 30, further comprising:
a usage permission information receiving unit operable to receive, from an external apparatus, usage permission information that indicates a time when a user, to whom the portable terminal apparatus belongs , is permitted to use any of the plurality of transport modes;
a usage permission information storing unit; and
a usage permission information writing unit operable to write the usage permission information in the usage permission information storing unit, wherein
the usage information further indicates a usage time when the user used the transport mode,
the transmitting unit further transmits the usage permission information, and
the received point writing unit receives a weighted point, which is a point generated by weighting the point calculated in relation to the usage information in accordance with the difference between the usage time and the time indicated by the usage permission information.

33. The portable terminal apparatus of Claim 29, wherein
the point information is, among each point calculated by a point calculating apparatus that calculates the point for each of the transport modes, a point calculated in relation to the transport mode equipped with the distributing apparatus, and
the point information receiving unit receives, from the distributing apparatus, the point corresponding to the transport mode equipped with the distributing apparatus by short-range wireless.

34. The portable terminal apparatus of Claim 29, further comprising:
an allocation information receiving unit operable to receive allocation information including each calculated point and certification information that certifies a validity of the allocation information, from a point calculating apparatus that calculates the point for each transport apparatus;
an allocation information storing unit operable to store the received allocation information and certification information; and
an allocation information transmitting unit operable to transmit the allocation information and the certification information stored in the allocation information storing unit to the distributing apparatus by short-range wireless, wherein
the point information is a point calculated for a transport mode equipped with the distributing apparatus among the plurality of transport modes, and
the point information receiving unit receives, among each point included in the allocation information, the point corresponding to the transport mode equipped with the distributing apparatus, from the distributing apparatus.

35. The portable terminal apparatus of Claim 29, wherein
the point information storing unit stores the point indicated by the point information, and
the portable terminal apparatus further includes:
an electronic money storing unit that has a tamper-resistant characteristic and includes an area for storing electronic money;
a converting unit operable to convert the point accumulated in the point information storing unit to electronic money; and
an electronic money writing unit operable to write the converted electronic money in the electronic money storing unit.

36. The portable terminal apparatus of Claim 35, further comprising:
a payment control unit operable to perform, by short-range wireless, a payment for purchase using the electronic money stored in the electronic money storing unit.

37. The portable terminal apparatus of Claim 36, wherein
the point information storing unit, the electronic money storing unit, the converting unit and the payment control unit are structured as a portable recording medium.

38. A point calculating method that calculates a point for each of a plurality of transportmodes for the same destination in accordance with a congestion degree of the transport modes, the point calculating method comprising:
a congestion degree obtaining step of obtaining the congestion degree;
a calculating step of calculating a point for each of the transport modes in accordance with the congestion degree; and
a point allocating step of allocating a point calculated for a transport mode to a user of the transport mode.

39. A point calculating program that calculates a point for each of a plurality of transport modes for the same destination in accordance with a congestion degree of the transport modes, the point calculating program comprising:
a congestion degree obtaining step of obtaining the congestion degree;
a calculating step of calculating a point for each of the transport modes in accordance with the congestion degree; and
a point allocating step of allocating a point for a transport mode among the plurality of transport modes to a user of each of the transport modes.

40. A computer readable recording medium on which is recorded a point calculating program that calculates a point for each of a plurality of transport modes for the same destination in accordance with a congestion degree of the transport modes, the point calculating program comprising:
a congestion degree obtaining step of obtaining the congestion degree;
a calculating step of calculating a point for each of the transport modes in accordance with the congestion degree; and
a point allocating step of allocating a point calculated for a transport mode to a user of the transport mode.
